# EUROPÄISCHE PATENTSCHRIFT

(11) **EP 2 912 420 B1**
(45) Veröffentlichungstag und Bekanntmachung des Hinweises auf die Patenterteilung: **11.05.2016**
(21) Anmeldenummer: 13810887.3
(22) Anmeldetag: 29.10.2013
(51) Int. Cl.: G01J 3/453, G01J 3/02, G01B 9/02

(54) **VERFAHREN UND ANORDNUNG, INSBESONDERE AUCH ZUR BILDGEBENDEN FOURIER- TRANSFORMATIONS-SPEKTROSKOPIE IM MOBILEN EINSATZ**
METHOD AND ARRANGEMENT, IN PARTICULAR ALSO FOR IMAGING FOURIER TRANSFORMATION SPECTROSCOPY IN MOBILE USE
PROCÉDÉ ET INSTALLATION NOTAMMENT POUR LA SPECTROSCOPIE À TRANSFORMÉE DE FOURIER EN APPLICATION MOBILE

(30) Priorität: 29.10.2012 DE 102012021710; 20.11.2012 DE 102012023248
(43) Veröffentlichungstag der Anmeldung: 02.09.2015
(73) Patentinhaber: Universität Stuttgart, 70174 Stuttgart (DE)
(72) Erfinder: KÖRNER, Klaus, D-70563 Stuttgart (DE); HERKOMMER, Alois, 73431 Aalen (DE); OSTEN, Wolfgang, 70569 Stuttgart (DE)
(74) Vertreter: Müller-Boré & Partner Patentanwälte PartG mbB
(86) Internationale Anmeldenummer: PCT/EP2013/003253
(87) Internationale Veröffentlichungsnummer: WO 2014/067651

(56) Entgegenhaltungen:
- WO-A1-2008/083492
- US-A1- 2003 048 441
- HIRSCH H ET AL: "Fourier transform spectroscopy in remote sensing of solid planetary surfaces", VIBRATIONAL SPECTROSCOPY, ELSEVIER SCIENCE, AMSTERDAM, NL, Bd. 5, Nr. 1, 28. April 1993 (1993-04-28), Seiten 119-123, XP026581057, ISSN: 0924-2031, DOI: 10.1016/0924-2031(93)87061-W [gefunden am 1993-04-28] in der Anmeldung erwähnt

## Beschreibung

Der vorliegende Erfindungsgegenstand betrifft ein Verfahren und eine Anordnung zur FT-Spektroskopie, insbesondere auch zur bildgebenden Strahlungsquellen- und Stoff-Analyse sowie Tumorgewebe-Diagnostik.

### Stand der Technik

Von P. Connes werden im Fachartikel Astronomical Fourier Spectroscopy Annu. Rev. Astro Astrophys. 1970:8:209-230 [1] die Grundlagen und die Vorteile wie der Multiplex-Vorteil nach Fellgett und der Lichtleitwertvorteil nach Jacquinot des Fourier-Ansatzes dargestellt. Hinzukommt beim Fourier-Ansatzes für die Spektroskopie noch der Vorteil der Wellenzahlgenauigkeit nach Connes durch die in der Regel interferenzbasierte Abtastung der interferierenden Messstrahlung. Im Weiteren wird in der Schrift [1] auf den Zusammenhang zwischen spektralem Auflösungsvermögen R und Raumwinkel Omega der effektiven Strahlung im Zweistrahl-Interferometer hingewiesen, wobei sich der Raumwinkel Omega mit größer werdendem Auflösungsvermögen R bekanntlich verkleinern muss, um die Modulation im Interferogramm bei Anwendung lateral integrierender Detektoren aufrecht zu erhalten.

Diese Beschränkung des Raumwinkels Omega wird beim Einsatz eines gerasterten Bildempfängers (Focal plane array) jedoch zumindest teilweise aufgehoben bzw. etwas abgemildert. Das ist der Fall, wenn die beim Endspiegel-Scan des Interferometers im Feld auftretenden Haidinger-Ringe erfasst und vom gerasterten Bildempfänger lateral vollständig aufgelöst werden. Dieser Phasengang im Interferenzfeld kann und sollte dabei numerisch bei der Berechnung der Spektren berücksichtigt werden, insbesondere dann, wenn mehr als ein Haidinger-Ring im Feld beim Endspiegel-Scan des Interferometers auftritt. Auch Transluzenzeffekte bei Proben sind hierbei zu beachten, welche die Streifendichte der Haidinger-Ringe am Objekt stark begrenzen können.

In der Offenlegungsschrift von P. Burkert DE 30 05 520 A1 [2] wurde bereits 1980 ein robuster Ansatz mit gemeinsam rotierenden Retroreflektoren in Form von Dachkant- oder Tripelreflektoren für das Interferometer in einem Fourier-Transformations-Spektrometer vorgeschlagen. Der dort gegebene und sehr hilfreiche Hinweis auf die Nutzung einer rotierenden und auswuchteten Reflektorgruppe mit dem Ziel einer erhöhten Robustheit gegenüber Vibrationen findet sich hier wohl zum ersten Mal im Schrifttum.

Es gibt auch eine ausgeführte Anwendung mit einer rotierenden Doppel-Dachkant-ReflektorGruppe in einem Interferometer, welche ebenfalls das Ziel einer hohen Robustheit verfolgte, s. hierzu auch die Veröffentlichung von K. Körner: Ein neues Interferometer für die Fourier-Spektroskopie, Optik, Vol. 68, pp. 217-223 (1984) [3]. Diese Applikation nutzt bei der End-Reflexion im Interferometer parallele Schwerstrahlen in den Teilbündeln. Das führt zwar zu einem robusten System, baut jedoch auch vergleichsweise groß. Siehe hierzu auch die Schriften DD 210974 [4] bzw. auch GB 2154019A [5].

Das rotatorische Antriebssystem für das unter [3] veröffentlichte Drehreflektor-Interferometer mit Dachkanten wurde um 1982 erfolgreich von H. Hirsch entwickelt, der diese Entwicklungsergebnisse für ein Interferometer mit rotierenden Tripelreflektoren weiter nutzen konnte, s. a. H. Hirsch, G. Arnold: "Fourier transform spectroscopy in remote sensing of solid planetary surfaces," in Vibrational Spectroscopy, 5 (1993) 119-123, Elsevier Science Publishers B.V., Amsterdam [6]. Die in [6] genutzten Ansätze basieren zumindest teilweise wohl auch auf der schon in [2] gegebenen Lehre.

Bei diesem Fourier-Transformations-Spektrometer-System für die Planeten-Fernerkundung nach [6] werden zwei unterschiedliche, fest vorgegebene Spektralbereiche im infraroten Bereich parallel in zwei Etagen der Anordnung realisiert. Ziel war hier die erhebliche Ausweitung des zu messenden Spektralbereiches und nicht die Parallelisierung der spektralen Messung im gleichen Spektralbereich. Durch die Verwendung von je einer Tripel-Reflektor-Wippe mit zwei Tripelreflektoren in jeder Etage des Interferometer-Systems ergibt sich eine hohe mechanische Robustheit für diese Tripel-Reflektor-basierte Anordnung sowohl im aktiven Interferometer-Betrieb als auch unter passiven Bedingungen beim Start einer Weltraum-Rakete. Dieser rotatorische Interferometer-Ansatz mit Tripel-Reflektoren wird bei der European Space Agency (ESA) seit mehr als 20 Jahre standardmäßig beim Planeten-Fourier-Spektrometer (PFS im infraroten Spektralbereich eingesetzt.

Gegenwärtiger Stand bei der Fourier-Transformations-Spektroskopie ist auch weiterhin der Einsatz von separierten Tripel- und Dachkant-End-Reflektoren, die jedoch, insbesondere im sichtbaren (VIS-) und nah-infraroten (NIR-) Spektralbereich, Submikrometer-Forderungen hinsichtlich ihrer Formtreue, d. h. die zulässige Abweichung von der idealen Raumecke, erfüllen müssen. Die Nachteile der bekannten Lösungen mit Tripel-Reflektoren sind, dass die Tripel-Reflektoren relativ groß bauen und auch relativ teuer für Anwendungen im VIS sind, da im VIS extreme Genauigkeitsanforderungen bestehen. Tripel-Reflektoren bewirken außerdem z. T. unerwünschte Polarisationseffekte und können auch unerwünschtes Streulicht erzeugen, da mehrere Kanten im optischen Feld bestehen. Diese Tripel-Reflektoren werden bisher als einzelne, voneinander separierte Komponenten eingesetzt.

Zur bildgebenden Fourier-Transformations-Spektroskopie wird in der Veröffentlichung: V. Farley, "Development and testing of a hyper-spectral imaging instrument for field spectroscopy", SPIE 5416-40, 2004 [7] über den Einsatz vergleichsweise großer Tripelprismen berichtet. Diese Tripel-Reflektoren werden ebenfalls als einzelne, voneinander separierte Komponenten eingesetzt.

Planspiegel-Interferometer ohne Tilt-Regelungs-Systeme sind i. a. sehr empfindlich sowohl hinsichtlich einer Dejustierung des Interferometers als auch hinsichtlich Führungsfehler der Endspiegel bei der Erzeugung des optischen Gangunterschieds. Tilt-controlled-Systeme, d.h. eine dynamische Ausregelung der Verkippung eines Planspiegels, arbeiten bei Planspiegel-Interferometern nur bedingt gut in Echtzeit. Es kann auch Probleme beim Betrieb des Interferometers bei stärkeren Vibrationen und mechanischen Stößen aus der Umgebung geben, welche eine Messung undurchführbar werden lassen.

Beispielsweise ist die Analyse der Raumluft von Kabine und Cockpit eines Passagierflugzeugs oder an belasteten Arbeitsplätzen der Chemieindustrie eine zunehmend wichtiger werdende Aufgabe, die schnell und zuverlässig erfüllt werden muss. Beispielsweise versagen beim Hochlauf der Turbinen eines Flugzeuges durch die dabei entstehenden Vibrationen jedoch herkömmliche Fourier-Transformations-Spektrometer (FTS) weitgehend oder völlig. Dies ist insbesondere dann der Fall, wenn das für das FTS eingesetzte Interferometer mit Linearführungen und -antrieben ausgebildet ist. Auch der Einsatz eines Regelungssystems für die Gewährleistung der notwendigen Konstanz der ersten Ableitung des optischen Gangunterschieds x_g, also für den Gleichlauf eines bewegten Interferometer-Endspiegels, und die Nutzung eines Regelungssystems zur Führungsfehlerkompensation bei Einsatz planer Interferometer-Endspiegel kann hierbei an die technischen Grenzen der Machbarkeit stoßen. Der Modulationsgrad der im Interferometer-Scan registrierten Interferogramme kann in dieser Situation starken Schwankungen bis zum vollständigen Verschwinden der Modulation unterliegen. Somit ist ein mit diesen gestörten Interferogrammen berechnetes Spektrum in der Regel stark fehlerbehaftet und weist auch ein eher schlechtes Signal-Rausch-Verhältnis auf und kann demzufolge überhaupt nicht verwendet werden, um in kritischen Situationen Entscheidungen treffen zu können.

Die Kombination der FT-IR-Spektroskopie mit der Infrarot-Mikroskopie unter Nutzung von zwei Masken im Sinne der konfokalen Technik nach M. Minsky findet sich bereits bei R. G. Messerschmidt und D. W. Sting im US-Patent 4,877,960 [8] von 1989 und ist Stand der Technik. Siehe dazu auch D. L. Wetzel: Mid-IR and near-IR chemical imaging: Complementars for biological materials, in Vibrational Spectroscopy 60, S. 29-33, 2012 [9].

Das Potenzial der bildgebenden FT-IR-Mikrospektroskopie zur Molekül-Spektroskopie, insbesondere auch zur Tumorzellen-Analyse ist bereits seit Jahrzehnten bekannt, s. a. E. Benedetti et al.: A new Approach to the Study of Human Solid Tumor Cells by Means of FT-IR-Microspectroscopy in APPLIED SPECTROSCOPY Vol. 44, No. 8, S. 1276-1280, 1990 [10]. Die im Patent US 7,480,055 B2 von 2009 [11] gegebene Lehre mit zwei Pivot-Punkten erscheint aus Gründen der Stabilität für den mobilen Einsatz eines Zweistrahl-Interferometers nicht in jedem Fall zwingend nachvollziehbar, da es die Komplexität des Interferometers vergrößert. Von J. Kauppinen wurden mehrere Interferometer mit rotierenden Komponenten für die Fourier-Spektroskopie vorgeschlagen, z.B. US7,738,108 [12], US6,075,598 [13] und US7,280,217 [14], die jedoch - auch im Vergleich zu [3] und [6] - eher keine Reduzierung der Komplexität mit sich bringen.

Ein weiteres Zweistrahl-Interferometer ist aus US2003048441 [15] bekannt.

### Beschreibung der Erfindung und bevorzugter Ausführungsformen

Das Ziel der Erfindung ist, neue Ansätze für die Bild-gebende Fourier-Transformations-Spektroskopie (FT- Spektroskopie) - auch im mobilen, quasi-mobilen oder auch beim stationären hochparallelisierten automatisierten Einsatz -, insbesondere auch zur bildgebenden Strahlungsquellen- und Stoff-Analyse aller Aggregatzustände sowie auch zur zuverlässige In-vivo-Tumorgewebe-Diagnostik, der wirtschaftlichen Nutzung zuzuführen.

Die Aufgabe besteht darin, eine hohe Robustheit für ein arbeitendes Zweistrahl-Interferometer im Feldeinsatz - aber auch beim harten Transport im passiven Zustand - sowie eine Kostenreduzierung und Volumen- und Masse-Minimierung für Interferometer-Komponenten bei der bildgebenden Fourier-Transformations-Spektroskopie im Bereich eher geringer und/oder mittlerer spektraler Auflösung zu erreichen. Es soll eine hohe Robustheit des bildgebenden Spektral-Sensors - gegebenenfalls auch bei Bewegung und auch bei beliebiger Lage desselben im Raum und gegebenenfalls auch bei Einwirkung von moderaten Vibrationen auf diesen Spektralsensor - erreicht werden können.

Die Robustheit soll insbesondere darin bestehen, dass auch in widriger Umgebung (harsch environment) die Gewährleistung und Aufrechterhaltung eines hohen Modulationsgrades der erzeugten Interferogramme gegeben ist. Bekanntlich ist ein hoher Modulationsgrades in den Interferogrammen eine Voraussetzung für ein konstantes und hohes Signal-Rausch-Verhältnis (SNR) in den berechneten Spektren.

Damit ist also die erfinderische Aufgabe zu lösen, Zweistrahl-Interferogramme, aufgenommen über dem optischen Gangunterschied x_g, in bestgeeigneter, also möglichst gut auswertbarer Signalform und mit möglichst hohem Modulationsgrad für ein Messfeld, insbesondere für ein linienhaftes oder auch für ein flächiges Messfeld, auch in parallelisierten Messstationen, bereitzustellen.

Es geht vor allem um die Erhöhung der Robustheit eines Zweistrahl-Interferometers gegenüber Verringerungen im Modulationsgrad der erzeugten Interferogrammen und um den Gleichlauf der Endreflektoren im Zweistrahl-Interferometer, da eine Unregelmäßigkeit im Gleichlauf der Endreflektoren auch die photometrische Genauigkeit im berechneten Spektrum stark beeinträchtigen kann.

Einsatzgebiete und Applikationen der erfinderischen Lösung zur bildgebenden Fourier-Transformations-Spektroskopie bestehen:
- in den Materialwissenschaften,
- in der Umweltanalytik,
- in der Landwirtschaft bei luftgestützten Saatkontrolle, u. a. auch zur luftgestützten Früherkennung von Waldbränden,
- in der Lebensmittel-Kontrolle, auch bei Ein- und Ausfuhr, und bei der Lebensmittel-Produktions-Überwachung,
- im Weltraum bei der Planetenerkundung,
- in der chemischen Analytik bei der Materialentwicklung, Lacken und Schichten,
- in der Forensik,
- in der Kriminalistik, z.B. bei der Fälschungsaufklärung, Tatort-Inspektion sowie Spurensicherung,
- bei Untersuchungen an Kunstobjekten,
- in der Botanik und Biologie,
- in der Archäologie und Paläontologie,
- bei sicherheitsrelevanten Aufgaben,
- bei der Raumluft-Analytik,
- in Fertigungs- und Arbeitsstätten - auch im Cockpit und in der Kabine eines Flugzeugs,
- in der Veterinärmedizin und bei der Tieraufzucht,
- in der Human-Medizin, incl. in vivo und in vitro, u. a. auch für die gesundheitliche Vorsorge, die Früherkennung und bei operativen Eingriffen zur Entscheidungsfindung z.B. der In-vivo-Analyse von humanem Weichteil- und auch Knorpel- und Knochengewebe, speziell zur Tumorgewebe-Diagnostik bei der ärztlichen Behandlung eines Menschen
- bei der automatisierten Probenanalyse in Biotechnologie, Medizin und chemischen Produktion mit sehr hohen Forderungen hinsichtlich eines schnellen Probendurchsatzes und eines weiten Spektralbereiches (z.B. VIS bis FIR) und
- bei der ortsaufgelösten Analyse von elektromagnetischen Strahlungsquellen in UV-,VIS-, NIR- MIR- und FIR- sowie im Terahertz-Bereich.

Ein Vorteil der Fourier-Transformations-Spektroskopie besteht i. a. ja auch darin, dass diese spektral - je nach Wahl der Komponenten der zur FTS genutzten Anordnung - sehr breit analysierend durchgeführt werden kann. Die hier gegebene Lehre kann gegebenenfalls anstelle hoher oder mittlerer spektraler Auflösung auch zur mehrkanaligen oder auch nur zur spektral einkanaligen Fourier-Transformations-Spektroskopie - also in einem sehr begrenzten Spektralbereich - genutzt werden.

Es soll insbesondere auch der von der Fachwelt mittlerweile anerkannte Vorteil eines Interferometers mit rotierenden Retro-Reflektoren, nämlich auch unter vergleichsweise harten Einsatzbedingungen - wie vergleichsweise hohe Beschleunigungen - noch relativ gut funktionieren zu können, genutzt werden. Einsatzbereiche für die gegebene Lehre bestehen auch überall dort, wo ein vergleichsweise schnelles Messen oder auch eine hohe Messproduktiviät oder ein hoher Probendurchsatz - wie in einem medizinischen Diagnose-Zentrum - gefordert sind.

Es geht in dieser Schrift nicht in erster Linie um die Erhöhung des Lichtleitwertes eines Zweistrahl-Interferometers oder generell in der Zweistrahl-Interferometrie. Es geht vor allem darum, bei gegebenem oder gleichbleibendem Lichtleitwert groß_Lambda des Zweistrahl-Interferometers die mechanische Robustheit bei der Erzeugung des benötigten optischen Gangunterschiedes sowie auch die Langzeitstabilität eines FTS mit Zweistrahl-Interferometer - auch hinsichtlich des Justierzustandes - zu verbessern.

In dieser Schrift werden die Begriffe Licht und Strahlung stets als Synonyme für elektromagnetische Strahlung verwendet, die sich hier vom Terahertz-, über den gesamten Infrarot-Bereich und sichtbaren Bereich bis zum tiefen UV-Bereich erstrecken kann. Somit sind auch optische Mittel in dieser Schrift stets als Mittel für elektromagnetische Strahlung in den o.g. Spektralbereichen zu verstehen.

Es handelt sich hierbei um ein Verfahren und eine Anordnung zur Fourier-Transformations-Spektroskopie, insbesondere auch zur bildgebenden Strahlungsquellen- und Stoff-Analyse aller Aggregatzustände, auch zur Molekül-Spektroskopie, sowie auch zur bildgebenden In-vivo-Tumorgewebe-Diagnostik, einschließlich der Analyse von Tumorgewebe. Die erfinderische Anordnung kann dabei insbesondere auch als mobiler Scout-Sensor oder auch als eine hochparallelisierte, fest installierte automatische Analyse-Station im jeweils dafür geeigneten Spektralbereich ausgebildet sein.

Erfindungsgemäß wird mittels einer spektral breitbandigen Quelle elektromagnetischer Strahlung eine Bestrahlung mindestens eines länglichen Bereiches in den beiden Aperturflächen (A1, A2) des genutzten Zweistrahl-Interferometers mit Längsrichtung des bestrahlten länglichen Bereiches senkrecht zur Schnittebene V-M durchgeführt. Dabei sind die Endreflektoren in Hybrid-Form mit partiellen Retro-Reflexionseigenschaften ausgebildet. Es ergibt sich ein Vorteil für die Robustheit des Zweistrahl-Interferometers auch unter widrigen Bedingungen, da unerwünschter Tilt (Kippung) und unerwünschte laterale Shear (Scherung) von Wellenfronten eingeschränkt und/oder auch zur numerischen Kompensation erfasst werden. Somit können zuverlässige Interferogramm-Daten zur Spektrenberechnung bereitgestellt werden.

Es sollen die bestehenden großen Fortschritte in der Fertigungstechnik bei der Herstellung kostengünstiger Präzisions-Kugellagerungen und anderer mechanischer Führungssysteme sowie die Verfügbarkeit neuer Werkstoffe konsequent sowie auch Fortschritte in der Regelungstechnik, der sensorgestützten Präzisions-Montagetechnik und der Spiegeloptik-Fertigung genutzt werden, um eine stabile und robuste Funktion eines Fourier-Transformations-Spektrometers mit einem Zweistrahl-Interferometer auch unter widrigen Umgebungsbedingungen zu ermöglichen und langfristig zu garantieren. Denn sowohl Tilt als auch laterale Shear von interferierenden Wellenfronten - hier in diesem Kontext stets als Störungen für die Interferenzsignal-Generierung angesehen - müssen hierbei nicht null im mathematischen Sinne sein, sondern müssen nur unterhalb gewisser Grenzen liegen. Dann bleibt die Modulation in den Interferenzsignalen praktisch unbeeinflusst, beziehungsweise die Modulations-Variationen, in der Regel Verringerungen, sind für die numerische Weiterverarbeitung noch tolerierbar.

Die oben genannten Nachteile des Standes der Technik werden durch die nachstehend beschriebenen Aspekte behoben.

Insbesondere ist es Aufgabe der vorliegenden Erfindung ist, ein Verfahren und eine Anordnung zur Fourier-Transformations-Spektroskopie bereitzustellen, welches auch unter widrigen Bedingungen eine hohe Mess- und Abtastgenauigkeit ermöglicht und eine hohe Robustheit der Messung bereitzustellen. Diese Aufgabe wird durch die in den unabhängigen Ansprüchen definierten Verfahren und Anordnungen gelöst. Bevorzugte Ausführungsformen sind Gegenstand der abhängigen Ansprüche.

In einem Aspekt stellt die Erfindung somit ein Verfahren zur Fourier-Transformations-Spektroskopie bereit, welches umfasst:
- Generieren und Detektieren zumindest eines Interferogramms mittels eines Zweistrahl-Interferometers; und
- Berechnung der Fourier-Transformation des zumindest einen über einem optischen Gangunterschied x_g des Zweistrahl-Interferometers detektierten Interferogramms I_(x_g), um aus diesem ein Spektrum zu erhalten,
wobei das Zweistrahl-Interferometer folgende Komponenten aufweist:
- eine multispektrale Strahlungsquelle;
- der Strahlungsquelle nachgeordnete optische Mittel zur Bündelformung einer von der Strahlungsquelle ausgehenden elektromagnetischen Strahlung;
- mindestens eine Strahlteilersystem zur Amplitudenteilung der elektromagnetischen Strahlung,
- je einen Endreflektor in jedem der beiden Interferometerarme mit je einer Interferometer-Aperturfläche, wobei mindestens ein Endreflektor zur Erzeugung des optischen Gangunterschieds x_g motorisch beweglich ausgebildet ist, wobei
   - die Endreflektoren derart mit jeweils partieller Retro-Reflexions-Eigenschaft ausgebildet sind, dass sie jeweils in einer Ebene retro-reflektierend sind und in einer dazu senkrechten Ebene die Reflexionswirkung eines Planspiegels aufweisen, wodurch jeder Endreflektor eine Achse y_tilt-invar zumindest näherungsweise in deren Aperturfläche und zumindest näherungsweise senkrecht zum Schwerstrahl (bzgl. der Lichtintensität) des Strahlenbündels (am Eingang des Interferometers bzw. im jeweiligen Interferometerarm) derart aufweist, dass die retro-reflektierende Wirkung den Einfluss einer Kippung um die Achse y_tilt-invar auf die Interferenzerscheinung am Ausgang des Interferometers zumindest näherungsweise unterdrückt; oder
   - die Endreflektoren in Planspiegelform ausgebildet sind und für jeden Endreflektor jeweils ein diesen Endreflektor haltendes Schiebeglied auf je einem Präzisions-Führungssystem mit einer Achse y_very-small-tilt desselben angeordnet ist, wobei die Achse y_very-small-tilt rechtwinklig zur Schieberichtung des Präzisions-Führungssystems ist und wobei Verkippungen des Präzisions-Führungssystem um die Achse y_very-small-tilt geringer sind als um eine zur Achse y_very-small-tilt senkrechten Quer-Achse x_small-tilt;
   - mindestens ein Fokussier-Objetiv am Ausgang des Zweistrahl-Interferometers mit dessen in Strahlrichtung nachgeordneter Brennebene F'_8;
   - mindestens einen gerasterten Empfänger elektromagnetischer Strahlung, welcher für eine vielfache Auslesung über der Zeit t zur zeitseriellen Detektion interferierender elektromagnetischer Strahlung vom Objekt ausgelegt ist,
   - ein Messsystem zum Bestimmen des aktuellen optischen Gangunterschieds x_g des Zweistrahl-Interferometers über der Zeit t bei der Bewegung zumindest eines der Endreflektoren,
wobei im Zweistrahl-Interferometer eine Schnittebene V-M besteht, die parallel zur Achse y_tilt-invar bzw. zur Achse y_very-small-tilt ist (oder diese enthält) und den Schwerstrahl des Strahlenbündels (am Eingang) des Interferometers enthält, und
wobei mit den optischen Mitteln zur Bündelformung eine Bestrahlung mindestens eines länglichen Bereichs (lbB_A), dessen Verhältnis von Längsausdehnung zu Querausdehnung mindestens 1,2 beträgt, in den beiden Interferometer-Aperturflächen mit Längsausdehung des bestrahlten länglichen Bereichs (lbB_A) im Wesentlichen senkrecht zur Schnittebene V-M durchgeführt wird.

Insbesondere stellt die Erfindung vorzugsweise ein Verfahren zur FT-Spektroskopie bereit, insbesondere auch zur bildgebenden Strahlungsquellen- und Stoff-Analyse aller Aggregatzustände sowie Tumorgewebe-Diagnostik. Die spektrale Analyse oder Diagnostik kann in Durchlicht-Technik, also als Absorptionsspektroskopie oder/und in Auflicht-Technik, also als Reflexions-Spektroskopie, beziehungsweise auch als Emissions-Messung erfolgen, insbesondere auch mit Erfassung von Streustrahlung bei Durchlicht- oder Auflicht, insbesondere auch mit Erfassung von gebeugter und/oder reflektierter oder von transmittierter Strahlung, sowie insbesondere auch mit Erfassung mittels Fluoreszenzanregung erzeugter Strahlung, mit einem Zweistrahl-Interferometer zur Generierung und Detektion einer Anzahl k von

Interferogrammen - mit k größer/gleich 2. Üblicherweise wird k beim Stand der Technik hierbei in der Größenordnung von eher Eintausend bis Einhunderttausend gemäß der Anzahl von Empfängerelementen eines gerasterten Empfängers liegen. Selbst eine Größenordnung von k von 10 Millionen ist machbar, stellt jedoch hohe Anforderungen an die Rechenleistung der Computer im Spektrometer-System.

Dabei ist dem Zweistrahl-Interferometer mindestens ein Auswerte-Rechner oder -Rechnersystem zur Berechnung der Fourier-Transformation der k über dem optischen Gangunterschied x_g des Zweistrahl-Interferometers detektierten Interferogramme I_n(x_g), mit n gleich1 bis k, um aus diesen jeweils ein Spektrum zu erhalten, zugeordnet.

Das Zweistrahl-Interferometer weist dabei insbesondere folgende Komponenten auf:
- entweder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Ausgang des Zweistrahl-Interferometers angeordnet ist,
- oder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Eingang des Zweistrahl-Interferometers angeordnet ist,
- oder ein selbst elektromagnetische Strahlung emittierendes Objekt oder bestrahltes Objekt, auch in Arrayform, welches am Eingang des Zweistrahl-Interferometers angeordnet ist, im Weiteren jeweils auch als Strahlungsquelle bezeichnet,
- oder ein Zwischenbild einer multispektralen oder quasi-multispektralen Quelle elektromagnetischer Strahlung oder eines elektromagnetische Strahlung emittierenden Objekts oder eines bestrahlten Objekts, auch in Arrayform, im Weiteren jeweils auch als Strahlungsquelle bezeichnet,
- der Strahlungsquelle nachgeordnete optische Mittel zur Bündelformung der elektromagnetischen Strahlung derselben
- mindestens ein Strahlteilersystem zur Amplitudenteilung der elektromagnetischen Strahlung,
- je einen Endreflektor in jedem der beiden Interferometerarme mit je einer Interferometer-Aperturfläche (A1, A2) und mindestens ein Endreflektor zur Erzeugung des optischen Gangunterschieds x_g vorbestimmt motorisch beweglich ausgebildet ist, wobei
- entweder die Endreflektoren in Hybridform mit jeweils partieller Retro-Reflexions-Eigenschaft ausgebildet sind, das heißt in einer Ebene retro-reflektierend in der 90°-Ebene dazu mit der Reflexionswirkung eines Planspiegels,
- entweder in Form von je einem 90°-Dachkant-Reflektor in jedem Interferometerarm
- oder in Form von je einem Zylinder-Cats-eye-Reflektor in jedem Interferometerarm in Einfachzylinderspiegel- oder Doppel-Zylinderspiegel-Anordnung nach Schwarzschild.

Somit weist jeder Endreflektor eine Achse y_tilt-invar zumindest näherungsweise in deren Aperturfläche und zumindest näherungsweise senkrecht zum Schwerstrahl des Strahlenbündels am Eingang des Interferometers auf, bei dem eine kleine Kippung um diese Achse y_tilt-invar keinen oder nur einen unschädlichen Einfluss auf die Interferenzerscheinung am Ausgang des Interferometers - im Sinne der Anwendung in einem Fourier-Spektrometer - hat. Jeder Endreflektor weist eine, zu dieser Achse y_tilt-invar senkrechte Achse x_tilt-sens auf, wo auch kleine Kippungen eines Endreflektors um diese Achse x_tilt-sens die Interferenzerscheinung schädlich - im Sinne der Anwendung in einem Fourier-Spektrometer - verändern kann, wobei die Achse y_tilt-invar hierbei mit der Dachkante des 90°-Dachkant-Reflektors zusammenfällt.

Der multispektralen oder quasi-multispektralen Quelle elektromagnetischer Strahlung kann dabei ein Faserbündel-Querschnittswandler nachgeordnet sein, der am Ausgang desselben eine rechteckige, vorzugsweise längliche Abstrahlfläche erzeugt.

Alternativ zu den Endreflektoren in Hybridform mit jeweils partieller Retro-Reflexions-Eigenschaft sind die Endreflektoren in Planspiegelform ausgebildet und für jeden Endreflektor ist jeweils ein diesen Endreflektor haltendes Schiebeglied auf je einem Präzisions-Führungssystem mit einer Achse y_very- small-tilt desselben angeordnet, wobei die Achse y_very- small-tilt rechtwinklig zur Schieberichtung des Präzisions-Führungssystems ist, und das Präzisions-Führungssystem mit so kleinen Verkippungen um die Achse y_very- small-tilt ausgebildet ist, dass die Beeinflussung der Interferenzerscheinung am Ausgang des Interferometers - im Sinne der Anwendung in einem Interferometer für die Fourier-Transformations-Spektroskopie - noch unschädlich ist. Beim Präzisions-Führungssystem treten jedoch kleinere Kippungen des Schiebeglieds um die zur Achse y_very- small-tilt senkrechte Quer-Achse x_small-tilt auf, so dass hierbei die Interferenzerscheinung am Ausgang des Interferometers - im Sinne der Anwendung in einem Fourier-Transformations-Spektrometer - schon mit Nachteil beeinflusst werden kann.

Im Zweistrahl-Interferometer besteht eine Schnittebene V-M, die sowohl zum einen
- entweder bei Anordnung von Endreflektoren in Hybridform mit jeweils partieller Retro-Reflexions-Eigenschaft zumindest näherungsweise parallel zur Achse y_tilt-invar ist oder diese auch enthält
- oder bei Anordnung von Endreflektoren in Planspiegelform zumindest näherungsweise parallel zur Achse y_very- small-tilt des Präzisions-Führungssystems ist
als auch zum anderen zumindest näherungsweise den Schwerstrahl des Strahlenbündels am Eingang des Interferometers enthält. Im Zweistrahl-Interferometer besteht auch eine Schnittebene H-S, die sowohl senkrecht zur Schnittebene V-M ausgerichtet ist als auch zumindest näherungsweise den Schwerstrahl (SST) des Strahlenbündels am Eingang des Interferometers enthält. Weiterhin sind folgende Komponenten angeordnet:
- mindestens ein Fokussier-Objektiv am Ausgang des Zweistrahl-Interferometers mit dessen in Strahlrichtung nachgeordneter Brennebene oder mindestens ein Fokussier-Objektiv-Array am Ausgang des Zweistrahl-Interferometers mit nachgeordneten Brennebenen,
- mindestens ein gerasterter Empfänger elektromagnetischer Strahlung mit vielfacher Auslesung des gerasterten Empfängers über der Zeit t zur zeitseriellen Detektion interferierender elektromagnetischer Strahlung vom Objekt in Form eines Daten- oder Bilderstapels, wobei je ein Interferogramm I(t)_n von jeweils einem Element des Empfängers elektromagnetischer Strahlung über der Zeit t detektiert wird,
- ein Messsystem zum Bestimmen des aktuellen optischen Gangunterschieds x_g des Zweistrahl-Interferometers über der Zeit t bei der Bewegung eines oder beider Endreflektoren, welches mit einem Interface zur Übergabe der Daten zum aktuellen optischen Gangunterschied x_g(t) an den Auswerte-Rechner oder das -Rechnersystem ausgebildet ist, um daraus mit den Daten des Daten- oder Bilderstapels jeweils die Interferogramm-Daten I_n(x_g) zu bilden.

Insbesondere werden die folgenden Verfahrensschritte durchgeführt: Es wird mit den optischen Mitteln zur Bündelformung eine Bestrahlung mindestens eines länglichen Bereiches, dessen Verhältnis von Längsausdehnung zu Querausdehnung mindestens 1,2 beträgt, in den beiden Interferometer-Aperturflächen (A1, A2) mit Längsrichtung des bestrahlten länglichen Bereiches zumindest näherungsweise senkrecht zur Schnittebene V-M durchgeführt.

Insbesondere wird mit den, das Zweistrahl-Interferometer verlassenden und interferierenden Teil-Strahlungsbündeln in der Brennebene der dem Zweistrahl-Interferometer nachgeordneten Fokussier-Objektiv, wo sich Interferenzen gleicher Neigung ausbilden, oder einer zu dieser Brennebene optisch konjugierten Ebene
- entweder eine Bestrahlung des nicht selbst elektromagnetisch strahlenden Objekts durchgeführt wird und die vom Objekt dabei in Reflexion, Streuung und/oder Transmission ausgehende Strahlung mit Objektabbildung mittels mindestens einer dem Objekt nachgeordneten optischen Anordnung auf dem gerasterten Empfänger detektiert
- oder im Fall des selbst elektromagnetische Strahlung emittierenden oder bestrahlten Objekts, angeordnet am Eingang des Zweistrahl-Interferometers, wird eine Bestrahlung des gerasterten Empfängers zwecks Detektion der Strahlung durchgeführt.

Dabei enthält die Schnittebene V-M den Schwerstrahl des Bündels am Eingang des Interferometers.

Ein Planspiegelinterferometer kann mit einer Federführung für Spiegel mit einer Kantenlänge unter 25 mm verbunden sein, derer Schiebeglied in einer Richtung praktisch nicht kippt, die Kippung (Nicken) kleiner/gleich 0,5 Winkelsekunden beträgt, in der anderen Richtung aber schon eine Kippung (Gieren) von z.B. 5 Winkelsekunden auftritt. Eine derartige Federführung wurde bereits für die Fourier-Spektroskopie unter Weltraumbedingungen mit Erfolg im MIR-Bereich eingesetzt.

Vorzugsweise werden also mittels des Zweistrahl-Interferometers eine Vielzahl von Interferogrammen gleichzeitig generiert und detektiert.

Vorzugsweise ist das Zweistrahl-Interferometer als Interferometer-Turm mit einer Vielzahl von entlang einer Turmhöhenachse angeordneten Interferometer-Zellen ausgebildet, wobei jeder optische Mittel (2, 2.1, 2.2, 2.3, 2.4, 2.5, 2.6, 2.7, 2.8) zur Bestrahlung eines länglichen Bereiches (lbB_A) in den beiden Interferometer-Aperturflächen (A1, A2), mindestens ein Fokussier-Objektiv (8) und mindestens ein Detektor (18.1, 18.2, 18.3) zugeordnet sind. Insbesondere ist damit jede Interferometer-Zelle als vollständiger (bildgebender) Spektralkanal ausgebildet. Damit kann in sehr effizienter, mechanisch stabiler und vor allem auch kompakter Weise eine Parallelisierung der FT-Spektroskopie erreicht werden. Insbesondere wenn jeder Zelle ein gerasterter Detektor zugeordnet ist, kann jede Zelle als bildgebender Spektralbereich ausgelegt sein.

Vorzugsweise bietet die Erfindung ein Verfahren zur FT-Spektroskopie, insbesondere auch zur Strahlungsquellen- und Stoff-Analyse aller Aggregatzustände sowie Tumorgewebe-Diagnostik. Die Analyse oder Diagnostik kann in Durchlicht- oder/und Auflicht-Technik erfolgen, beziehungsweise auch als Emissionsmessung erfolgen,
- insbesondere auch mit Erfassung von Streustrahlung,
- insbesondere auch mit Erfassung von gebeugter und/oder reflektierter oder von transmittierter Strahlung,
- sowie insbesondere auch mit Erfassung mittels Fluoreszenzanregung erzeugter Strahlung,
mit einem Zweistrahl-Interferometer, mindestens ein Auswerte-Rechner oder -Rechnersystem zur Berechnung der Fourier-Transformation des über dem optischen Gangunterschied x_g des Zweistrahl-Interferometers detektierten Interferogramms I_(x_g), um aus diesem jeweils das Spektrum zu erhalten, zugeordnet.

Das Zweistrahl-Interferometer weist dabei insbesondere folgende Komponenten auf:
- entweder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Ausgang des Zweistrahl-Interferometers angeordnet ist,
- oder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Eingang des Zweistrahl-Interferometers angeordnet ist,
- oder ein selbst elektromagnetische Strahlung emittierendes Objekt oder bestrahltes Objekt, auch in Arrayform, welches am Eingang des Zweistrahl-Interferometers angeordnet ist, im Weiteren jeweils auch als Strahlungsquelle bezeichnet,
- oder ein Zwischenbild einer multispektralen oder quasi-multispektralen Quelle elektromagnetischer Strahlung oder eines elektromagnetische Strahlung emittierenden Objekts oder eines bestrahlten Objekts, auch in Arrayform, im Weiteren jeweils auch als Strahlungsquelle bezeichnet,
- mindestens ein Strahlteilersystem zur Amplitudenteilung der elektromagnetischen Strahlung,
- je einen Endreflektor in jedem der beiden Interferometerarme mit je einer Interferometer-Aperturfläche (A1, A2) und mindestens ein Endreflektor zur Erzeugung des optischen Gangunterschieds x_g vorbestimmt motorisch beweglich ausgebildet ist, wobei
- entweder die Endreflektoren in Hybridform mit jeweils partieller Retro-Reflexions-Eigenschaft ausgebildet sind, das heißt in einer Ebene retro-reflektierend in der 90°-Ebene dazu mit der Reflexionswirkung eines Planspiegels,
- entweder in Form von je einem 90°-Dachkant-Reflektor in jedem Interferometerarm
- oder in Form von je einem Zylinder-Cats-eye-Reflektor in jedem Interferometerarm in Einfachzylinderspiegel- oder Doppel-Zylinderspiegel-Anordnung nach Schwarzschild.

Somit weist insbesondere jeder Endreflektor eine Achse y_tilt-invar zumindest näherungsweise in deren Aperturfläche und zumindest näherungsweise senkrecht zum Schwerstrahl des Strahlenbündels am Eingang des Interferometers auf, bei dem eine kleine Kippung um diese Achse y_tilt-invar keinen oder nur einen unschädlichen Einfluss auf die Interferenzerscheinung am Ausgang des Interferometers - im Sinne der Anwendung in einem Fourier-Spektrometer - hat. Jeder Endreflektor weist eine, zu dieser Achse y_tilt-invar senkrechte Achse x_tilt-sens auf, wo auch kleine Kippungen eines Endreflektors um diese Achse x_tilt-sens die Interferenzerscheinung schädlich - im Sinne der Anwendung in einem Fourier-Spektrometer - verändern kann, wobei die Achse y_tilt-invar hierbei mit der Dachkante des 90°-Dachkant-Reflektors zusammenfällt.

Alternativ dazu sind die Endreflektoren vorzugsweise in Planspiegelform ausgebildet und für jeden Endreflektor ist jeweils ein diesen Endreflektor haltendes Schiebeglied auf je einem Präzisions-Führungssystem mit einer Achse y_very- small-tilt desselben angeordnet, wobei die Achse y_very- small-tilt rechtwinklig zur Schieberichtung des Präzisions-Führungssystems ist, und das Präzisions-Führungssystem mit so kleinen Verkippungen um die Achse y_very- small-tilt ausgebildet ist, dass die Beeinflussung der Interferenzerscheinung am Ausgang des Interferometers - im Sinne der Anwendung in einem Interferometer für die Fourier-Transformations-Spektroskopie - noch unschädlich ist. Beim Präzisions-Führungssystem treten jedoch kleinere Kippungen des Schiebeglieds um die zur Achse y_very- small-tilt senkrechte Quer-Achse x_small-tilt auf, so dass hierbei die Interferenzerscheinung am Ausgang des Interferometers - im Sinne der Anwendung in einem Fourier-Transformations-Spektrometer - schon mit Nachteil beeinflusst werden kann.

Im Zweistrahl-Interferometer besteht eine Schnittebene V-M, die sowohl zum einen
- entweder bei Anordnung von Endreflektoren in Hybridform mit jeweils partieller Retro-Reflexions-Eigenschaft zumindest näherungsweise parallel zur Achse y_tilt-invar ist oder diese auch enthält
- oder bei Anordnung von Endreflektoren in Planspiegelform zumindest näherungsweise parallel zur Achse y_very- small-tilt des Präzisions-Führungssystems ist
als auch zum anderen zumindest näherungsweise den Schwerstrahl des Strahlenbündels am Eingang des Interferometers enthält. Im Zweistrahl-Interferometer besteht auch eine Schnittebene H-S, die sowohl senkrecht zur Schnittebene V-M ausgerichtet ist als auch zumindest näherungsweise den Schwerstrahl (SST) des Strahlenbündels am Eingang des Interferometers enthält. Weiterhin sind folgende Komponenten angeordnet:
- mindestens ein Fokussier-Objektiv am Ausgang des Zweistrahl-Interferometers mit dessen in Strahlrichtung nachgeordneter Brennebene,
- mindestens ein Empfänger elektromagnetischer Strahlung mit vielfacher Auslesung des Empfängers über der Zeit t zur zeitseriellen Detektion interferierender elektromagnetischer Strahlung vom Objekt in Form eines Interferogramms, wobei ein Interferogramm I(t) vom Empfänger elektromagnetischer Strahlung über der Zeit t detektiert wird,
- ein Messsystem zum Bestimmen des aktuellen optischen Gangunterschieds x_g des Zweistrahl-Interferometers über der Zeit t bei der Bewegung eines oder beider Endreflektoren, welches mit einem Interface zur Übergabe der Daten zum aktuellen optischen Gangunterschied x_g(t) an den Auswerte-Rechner oder das -Rechnersystem ausgebildet ist, um daraus die Interferogramm-Daten I_(x_g) zu bilden.

Insbesondere werden die folgenden Verfahrensschritte durchgeführt: Es wird mit den optischen Mitteln zur Bündelformung eine

Bestrahlung mindestens eines länglichen Bereiches, dessen Verhältnis von Längsausdehnung zu Querausdehnung mindestens 1,2 beträgt, in den beiden Interferometer-Aperturflächen (A1, A2) mit Längsrichtung des bestrahlten länglichen Bereiches zumindest näherungsweise senkrecht zur Schnittebene V-M durchgeführt.
und mit den, das Zweistrahl-Interferometer verlassenden und interferierenden Teil-Strahlungsbündeln in der Brennebene der dem Zweistrahl-Interferometer nachgeordneten Fokussier-Objektiv, wo sich Interferenzen gleicher Neigung ausbilden, oder einer zu dieser Brennebene optisch konjugierten Ebene wird
- entweder eine Bestrahlung des nicht selbst elektromagnetisch strahlenden Objekts durchgeführt wird und die vom Objekt dabei in Reflexion, Streuung und/oder Transmission ausgehende Strahlung mit Objektabbildung mittels mindestens einer dem Objekt nachgeordneten optischen Anordnung auf dem Empfänger detektiert
- oder im Fall des selbst elektromagnetische Strahlung emittierenden oder bestrahlten Objekts, angeordnet am Eingang des Zweistrahl-Interferometers, wird eine Bestrahlung des Empfängers zwecks Detektion der Strahlung durchgeführt.

Dabei enthält die Schnittebene V-M zumindest näherungsweise den Schwerstrahl des Bündels am Eingang des Interferometers.

Weiterhin wird vorzugsweise bei dem Verfahren zur Fourier-Transformations-Spektroskopie die Bestrahlung mindestens eines länglichen Bereiches mit optischen Mitteln zumindest näherungsweise in der Schnittebene V-M und in zur Schnittebene V-M parallelen Ebenen mit konvergierenden Strahlenbüscheln SB_V-M durchgeführt.

Weiterhin wird vorzugsweise bei dem Verfahren zur Fourier-Transformations-Spektroskopie zur bildgebenden Analyse eine laterale Strukturierung der Strahlung in der Brennebene des jeweiligen Fokussier-Objektivs oder in einer Ebene, die zu dieser Brennebene optisch konjugiert ist, mittels lichtabschattender, lichtreflektierender oder/und lichtabsorbierender statischer oder vorbestimmt dynamischer optischer Mittel, auch vorzugsweise unter Nutzung von räumlichen Lichtmodulatoren, durchgeführt. Damit kann eine linienhafte oder punktweise strukturierte Beleuchtung des Objekts erfolgen Nach Passieren des Interferometers wird das Objekt vorzugsweise strukturiert beleuchtet. Diese strukturierte Beleuchtung des Objekts kann zum einen Streulicht verringern. Bekannter Weise kann dies auch Vorteile hinsichtlich des Kontrasts der Abbildung bringen. Andererseits kann diese strukturierte Beleuchtung des Objekts aber auch zur Gewinnung von Tiefeninformationen auf der Grundlage der Streifentriangulation oder der Kontrastauswertung von Lichtstrukturen bei der Abbildung eingesetzt werden. Anwendbar ist auch der konfokale Ansatz in Verbindung mit der FT-Spektroskopie, wie das bereits in [8] und [9] beschrieben ist.

Weiterhin wird vorzugsweise bei dem Verfahren zur Fourier-Transformations-Spektroskopie mit optischen Mitteln eine Bestrahlung mindestens eines länglichen Bereiches in den beiden Interferometer-Aperturflächen (A1, A2) mit astigmatischer Strahlenbündelformung durchgeführt.

Somit können die Winkelbereiche in den beiden Schnittebenen V-S und H-M des Raumwinkels zumindest näherungsweise gleich gemacht werden, damit sich in der Brennebene des Fokussier-Objektivs demzufolge ein eher quadratisches oder ein eher kreisförmiges Bestrahlungsfeld ergibt. Somit kann das Verhältnis von lateraler Längsausdehnung zu minimaler lateraler Ausdehnung des Feldes sicher unter 2 bleiben.

Andererseits kann es bei Schrägbestrahlung des Feldes - unter Nutzung der dabei auftretenden projektiven Verzerrung - auch von Vorteil sein, ein anders Verhältnis im achssenkrechten Schnitt als eines um eins zu haben. Erst bei der Schrägbestrahlung des Feldes ergibt sich dann Verhältnis von Längsausdehnung zu minimaler Ausdehnung sicher unter 2. Dabei kann es sich im Feld um unter einem Neigungswinkel bestrahltes Gewebe zum Zweck der spektroskopischen Untersuchung handeln.

Weiterhin können bei dem Verfahren zur Fourier-Transformations-Spektroskopie zur bildgebenden Analyse den optischen Mitteln zur Bestrahlung mindestens eines länglichen Bereiches (lbB_A) mit astigmatischer Strahlenbündelformung außerdem noch lichtabschattende oder lichtreflektierende oder lichtabsorbierende Mittel zur lateralen Strukturierung der elektromagnetischen Strahlung in der vorgeordneten Zwischenbildebene ZBE_v zugeordnet sein. Diese können als Mehrfachschlitzblende, als Strahlung reflektierendes oder/und die Strahlung teilweise hindurchlassendes Liniengitter ausgebildet sein. Diese Mittel können auch in Form von räumlichen Lichtmodulatoren ausgebildet sein. Damit kann eine linienhafte strukturierte Beleuchtung des Objekts erfolgen, wobei die Linien stets parallel zur Schnittebene V-M ausgerichtet sind. Dies kann bekannter Weise Vorteile beim Kontrast der Abbildung bringen. Nach Passieren der Strahlung des Interferometers wird das Objekt vorzugsweise strukturiert beleuchtet. Diese strukturierte Beleuchtung des Objekts kann zum einen Streulicht verringern. Andererseits kann diese strukturierte Beleuchtung des Objekts aber auch zur Gewinnung von Tiefeninformationen auf der Grundlage der Streifentriangulation oder der Kontrastauswertung von Lichtstrukturen bei der Abbildung eingesetzt werden.

Weiterhin wird vorzugsweise bei dem Verfahren zur Fourier-Transformations-Spektroskopie mit optischen Mitteln eine Bestrahlung mindestens eines länglichen Bereiches in den beiden Interferometer-Aperturflächen (A1, A2) mit afokaler Strahlenbündelformung durchgeführt.

Weiterhin wird vorzugsweise bei dem Verfahren zur Fourier-Transformations-Spektroskopie mit optischen Mitteln eine Bestrahlung mindestens eines länglichen Bereiches in den beiden Interferometer-Aperturflächen (A1, A2) mit telezentrischer Strahlenbündelformung durchgeführt.

So kann auch eine Strahlenbündelformung für mehrere Strahlungsquellen mit denselben optischen Mitteln durchgeführt werden.

Weiterhin wird vorzugsweise bei dem Verfahren zur Fourier-Transformations-Spektroskopie mit optischen Mitteln eine Bestrahlung mindestens eines länglichen Bereiches in den beiden Interferometer-Aperturflächen (A1, A2) mit anamorphotischer Strahlenbündelformung durchgeführt.

Bei dem Verfahren zur Fourier-Transformations-Spektroskopie werden weiterhin zur Bestrahlung eines länglichen Bereiches in den beiden Interferometer-Aperturflächen (A1, A2) mit optischen Mitteln zumindest näherungsweise in der Schnittebene V-M und zumindest näherungsweise in zur Schnittebene V-M parallelen Ebenen zumindest näherungsweise fokussierte Punkte von Punkten der Strahlungsquelle mit konvergierenden Strahlenbüscheln SB_V-M gebildet.

Bei dem Verfahren zur Fourier-Transformations-Spektroskopie werden weiterhin zur Bestrahlung eines länglichen Bereiches mit optischen Mitteln in den beiden Interferometer-Aperturflächen (A1, A2) zumindest näherungsweise Strahlungsbüschel SB_H-S zumindest näherungsweise in der Schnittebene H-S und in zur Schnittebene H-S parallelen Ebenen erzeugt, welche schwächer fokussiert sind als die zum gleichen Punkt (P) der Strahlungsquelle gehörenden Fokuspunkte des Strahlungsbüschels SB_V M in der Schnittebene V-M.

Weiterhin werden vorzugsweise bei dem Verfahren zur Fourier-Transformations-Spektroskopie, mit optischen Mitteln die Strahlenbüschel SB_H-S in der Schnittebene H-S, die jeweils im Objektraum in je einem Punkt der Strahlungsquelle ihren Ausgangspunkt haben, im Zweistrahl-Interferometer zumindest näherungsweise als kollimierte Strahlenbüschel mit Konvergenz im Unendlichen ausgebildet.

Es bestehen demzufolge vorzugsweise unterschiedliche Brechkräfte in zwei senkrecht zueinander stehenden Schnitten. Der Ansatz funktioniert auch mit einer Planspiegel-Anordnung, wenn eine Führungsachse hinsichtlich der Verkippungen "sehr genau" ausgebildet ist. Das kann gut funktionieren, wenn es keine starken Vibrationen gibt.

Dadurch ist es möglich, dass die Achsen der jeweiligen Raumwinkelkegel auf den Flächenelementen der beiden Aperturflächen A1 und A1 in den beiden Interferometer-armen zumindest näherungsweise in der Schnittebene V-M zumindest näherungsweise parallel zueinander ausgerichtet sind und auch der Betrag des Raumwinkels zumindest näherungsweise jeweils gleich ist. Damit variiert das Winkelspektrum über den beiden Aperturflächen A1 und A1 nicht oder nur wenig. Dadurch ergibt sich eine effiziente Nutzung der Strahlungsenergie der Strahlungsquelle, auch in Form eines lateral recht scharf begrenzten - zumindest in einer Richtung - bestrahlten Feldes interferierender Strahlung in der Brennebene des Fokussier-Objektivs am Interferometerausgang.

So kann sich eine besonders große Robustheit für das Interferometer mit einer ausgewuchteten, kompakten Dachkant-Spiegel-Anordnung mit einem kleinen Rotations-Winkel ergeben. Der Rotations-Winkel liegt hierbei in der Regel im einstelligen Altgradbereich.

Vorzugsweise kann der Empfänger elektromagnetischer Strahlung auch nur ein einziges Empfängerelement besitzen, so dass auf die Bildgebung vollständig verzichtet wird und dafür sehr schnell gemessen werden kann. Somit wird dann im Scan nur ein einziges Interferogramm aufgenommen. Dies kann von Vorteil für Überblicksmessungen in unübersichtlichen Situationen sein, der dann eine bildgebende Spektralmessung folgen kann.

Vorzugsweise werden rotierende ausgewuchtete End-Reflektoren in Dachkant-Ausbildung im Interferometer eingesetzt mit Bestrahlung durch eine vorzugsweise astigmatische Optik in länglichen Bereichen, die mit ihrer Längsachse stets quer zu den Dachkant-End-Reflektoren (Achse y_tilt-invar) ausgebildet sind.

In einem weiteren Aspekt betrifft die Erfindung eine Anordnung zur Fourier-Transformations-Spektroskopie umfassend:
- ein Zweistrahl-Interferometer zum Generieren und Detektieren zumindest eines Interferogramms; und
- einen Auswerte-Rechner zur Berechnung der Fourier-Transformation des zumindest einen über einem optischen Gangunterschied x_g des Zweistrahl-Interferometers detektierten Interferogramms I_(x_g), um aus diesem ein Spektrum zu erhalten,
wobei das Zweistrahl-Interferometer folgende Komponenten aufweist:
- eine multispektrale Strahlungsquelle;
- der Strahlungsquelle nachgeordnete optische Mittel zur Bündelformung einer von der Strahlungsquelle ausgehenden elektromagnetischen Strahlung;
- mindestens eine Strahlteilersystem zur Amplitudenteilung der elektromagnetischen Strahlung,
- je einen Endreflektor in jedem der beiden Interferometerarme mit je einer Interferometer-Aperturfläche, wobei mindestens ein Endreflektor zur Erzeugung des optischen Gangunterschieds x_g motorisch beweglich ausgebildet ist, wobei
   - die Endreflektoren derart mit jeweils partieller Retro-Reflexions-Eigenschaft ausgebildet sind, dass sie jeweils in einer Ebene retro-reflektierend sind und in einer dazu senkrechten Ebene die Reflexionswirkung eines Planspiegels aufweisen, wodurch jeder Endreflektor eine Achse y_tilt-invar zumindest näherungsweise in deren Aperturfläche und zumindest näherungsweise senkrecht zum Schwerstrahl des Strahlenbündels derart aufweist, dass die retro-reflektierende Wirkung den Einfluss einer Kippung um die Achse y_tilt-invar auf die Interferenzerscheinung am Ausgang des Interferometers zumindest näherungsweise unterdrückt; oder
   - die Endreflektoren in Planspiegelform ausgebildet sind und für jeden Endreflektor jeweils ein diesen Endreflektor haltendes Schiebeglied auf je einem Präzisions-Führungssystem mit einer Achse y_very-small-tilt desselben angeordnet ist, wobei die Achse y_very-small-tilt rechtwinklig zur Schieberichtung des Präzisions-Führungssystems ist und wobei Verkippungen des Präzisions-Führungssystem um die Achse y_very-small-tilt geringer sind als um eine zur Achse y_very-small-tilt senkrechten Quer-Achse x_small-tilt;
- mindestens ein Fokussier-Objetiv am Ausgang des Zweistrahl-Interferometers mit dessen in Strahlrichtung nachgeordneter Brennebene F'_8;
- mindestens einen gerasterten Empfänger elektromagnetischer Strahlung, welcher für eine vielfache Auslesung über der Zeit t zur zeitseriellen Detektion interferierender elektromagnetischer Strahlung vom Objekt ausgelegt ist,
- ein Messsystem zum Bestimmen des aktuellen optischen Gangunterschieds x_g des Zweistrahl-Interferometers über der Zeit t bei der Bewegung zumindest eines der Endreflektoren,
wobei im Zweistrahl-Interferometer eine Schnittebene V-M besteht, die parallel zur Achse y_tilt-invar bzw. zur Achse y_very-small-tilt ist und den Schwerstrahl des Strahlenbündels des Interferometers enthält, und
wobei die optischen Mittel zur Bündelformung ausgelegt sind zur Bestrahlung mindestens eines länglichen Bereichs (lbB_A), dessen Verhältnis von Längsausdehnung zu Querausdehnung mindestens 1,2 beträgt, in den beiden Interferometer-Aperturflächen mit Längsausdehung des bestrahlten länglichen Bereichs (lbB_A) im Wesentlichen senkrecht zur Schnittebene V-M.

Vorzugsweise ist das Zweistrahl-Interferometer ausgelegt, eine Vielzahl von Interferogrammen gleichzeitig zu generieren und zu detektieren.

Vorzugsweise ist das Zweistrahl-Interferometer als Interferometer-Turm mit einer Vielzahl von entlang einer Turmhöhenachse angeordneten Interferometer-Zellen ausgebildet, wobei jeder optische Mittel zur Bestrahlung eines länglichen Bereiches (lbB_A) in den beiden Interferometer-Aperturflächen (A1, A2), mindestens ein Fokussier-Objektiv (8) und mindestens ein Detektor (18.1, 18.2, 18.3) zugeordnet sind.

Damit bietet die Erfindung insbesondere eine Anordnung zur FT-Spektroskopie, insbesondere auch zur bildgebenden Strahlungsquellen- und Stoff-Analyse aller Aggregatzustände sowie Tumorgewebe-Diagnostik. Die Analyse oder Diagnostik kann in Durchlicht- oder/und Auflicht-Technik erfolgen, beziehungsweise auch als Emissionsmessung erfolgen,
- insbesondere auch mit Erfassung von Streustrahlung,
- insbesondere auch mit Erfassung von gebeugter und/oder reflektierter oder von transmittierter Strahlung,
- sowie insbesondere auch mit Erfassung mittels Fluoreszenzanregung erzeugter Strahlung, mit einem Zweistrahl-Interferometer zur Generierung und Detektion einer Anzahl k von Interferogrammen - mit k größer/gleich 2. Üblicherweise wird k beim Stand der Technik hierbei in der Größenordnung von eher Eintausend bis Einhundertausend gemäß der Anzahl von Empfängerelementen eines gerasterten Empfängers liegen. Selbst eine Größenordnung von k von 10 Millionen ist machbar, stellt jedoch hohe Anforderungen an die Rechenleistung der Computer im Spektrometer-System.

Dabei ist dem Zweistrahl-Interferometer insbesondere mindestens ein Auswerte-Rechner oder - Rechnersystem zur Berechnung der Fourier-Transformation der k über dem optischen Gangunterschied x_g des Zweistrahl-Interferometers simultan detektierten Interferogramme I_n(x_g), mit n gleich1 bis k, um aus diesen jeweils ein Spektrum zu erhalten, zugeordnet.

Das Zweistrahl-Interferometer weist insbesondere folgende Komponenten auf:
- entweder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Ausgang des Zweistrahl-Interferometers angeordnet ist,
- oder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Eingang des Zweistrahl-Interferometers angeordnet ist,
- oder ein selbst elektromagnetische Strahlung emittierendes Objekt oder bestrahltes Objekt, auch in Arrayform, welches am Eingang des Zweistrahl-Interferometers angeordnet ist, im Weiteren jeweils auch als Strahlungsquelle bezeichnet,
- oder ein Zwischenbild einer multispektralen oder quasi-multispektralen Quelle elektromagnetischer Strahlung oder eines elektromagnetische Strahlung emittierenden Objekts oder eines bestrahlten Objekts, auch in Arrayform, im Weiteren jeweils auch als Strahlungsquelle bezeichnet,
- der Strahlungsquelle nachgeordnete optische Mittel zur Bündelformung der elektromagnetischen Strahlung derselben
- mindestens ein Strahlteilersystem zur Amplitudenteilung der elektromagnetischen Strahlung,
- je einen Endreflektor in jedem der beiden Interferometerarme mit je einer Interferometer-Aperturfläche (A1, A2) und mindestens ein Endreflektor zur Erzeugung des optischen Gangunterschieds x_g vorbestimmt motorisch beweglich ausgebildet ist, wobei
- entweder die Endreflektoren in Hybridform mit jeweils partieller Retro-Reflexions-Eigenschaft ausgebildet sind, das heißt in einer Ebene retro-reflektierend in der 90°-Ebene dazu mit der Reflexionswirkung eines Planspiegels,
- entweder in Form von je einem 90°-Dachkant-Reflektor in jedem Interferometerarm
- oder in Form von je einem Zylinder-Cats-eye-Reflektor in jedem Interferometerarm in Einfachzylinderspiegel- oder Doppel-Zylinderspiegel-Anordnung nach Schwarzschild.

Somit weist jeder Endreflektor insbesondere eine Achse y_tilt-invar zumindest näherungsweise in deren Aperturfläche und zumindest näherungsweise senkrecht zum Schwerstrahl des Strahlenbündels am Eingang des Interferometers auf, bei dem eine kleine Kippung um diese Achse y_tilt-invar keinen oder nur einen unschädlichen Einfluss auf die Interferenzerscheinung am Ausgang des Interferometers - im Sinne der Anwendung in einem Fourier-Spektrometer - hat. Jeder Endreflektor weist insbesondere eine, zu dieser Achse y_tilt-invar senkrechte Achse x_tilt-sens auf, wo auch kleine Kippungen eines Endreflektors um diese Achse x_tilt-sens die Interferenzerscheinung schädlich - im Sinne der Anwendung in einem Fourier-Spektrometer - verändern kann, wobei die Achse y_tilt-invar hierbei mit der Dachkante des 90°-Dachkant-Reflektors zusammenfällt.

Alternativ dazu sind die Endreflektoren vorzugsweise in Planspiegelform ausgebildet und für jeden Endreflektor ist jeweils ein diesen Endreflektor haltendes Schiebeglied auf je einem Präzisions-Führungssystem mit einer Achse y_very- small-tilt desselben angeordnet, wobei die Achse y_very- small-tilt rechtwinklig zur Schieberichtung des Präzisions-Führungssystems ist, und das Präzisions-Führungssystem mit so kleinen Verkippungen um die Achse y_very- small-tilt ausgebildet ist, dass die Beeinflussung der Interferenzerscheinung am Ausgang des Interferometers - im Sinne der Anwendung in einem Interferometer für die Fourier-Transformations-Spektroskopie - noch unschädlich ist. Beim Präzisions-Führungssystem treten jedoch kleinere Kippungen des Schiebeglieds um die zur Achse y_very- small-tilt senkrechte Quer-Achse x_small-tilt auf, so dass hierbei die Interferenzerscheinung am Ausgang des Interferometers - im Sinne der Anwendung in einem Fourier-Transformations-Spektrometer - schon mit Nachteil beeinflusst werden kann.

Im Zweistrahl-Interferometer besteht eine Schnittebene V-M, die sowohl zum einen
- entweder bei Anordnung von Endreflektoren in Hybridform mit jeweils partieller Retro-Reflexions-Eigenschaft zumindest näherungsweise parallel zur Achse y_tilt-invar ist oder diese auch enthält
- oder bei Anordnung von Endreflektoren in Planspiegelform zumindest näherungsweise
parallel zur Achse y_very- small-tilt des Präzisions-Führungssystems ist als auch zum anderen zumindest näherungsweise den Schwerstrahl des Strahlenbündels am Eingang des Interferometers enthält. Im Zweistrahl-Interferometer besteht insbesondere auch eine Schnittebene H-S, die sowohl senkrecht zur Schnittebene V-M ausgerichtet ist als auch zumindest näherungsweise den Schwerstrahl (SST) des Strahlenbündels am Eingang des Interferometers enthält. Weiterhin sind insbesondere folgende Komponenten angeordnet:
- mindestens ein Fokussier-Objektiv am Ausgang des Zweistrahl-Interferometers mit dessen in Strahlrichtung nachgeordneter Brennebene oder mindestens ein Fokussier-Objektiv-Array am Ausgang des Zweistrahl-Interferometers mit nachgeordneten Brennebenen,
- mindestens ein gerasterter Empfänger elektromagnetischer Strahlung mit vielfacher Auslesung des gerasterten Empfängers über der Zeit t zur zeitseriellen Detektion interferierender elektromagnetischer Strahlung vom Objekt in Form eines Daten- oder Bilderstapels, wobei je ein Interferogramm I(t)_n von jeweils einem Element des Empfängers elektromagnetischer Strahlung über der Zeit t detektiert wird,
- ein Messsystem zum Bestimmen des aktuellen optischen Gangunterschieds x_g des Zweistrahl-Interferometers über der Zeit t bei der Bewegung eines oder beider Endreflektoren, welches mit einem Interface zur Übergabe der Daten zum aktuellen optischen Gangunterschied x_g(t) an den Auswerte-Rechner oder das -Rechnersystem ausgebildet ist, um daraus mit den Daten des Daten- oder Bilderstapels jeweils die Interferogramm-Daten I_n(x_g) zu bilden.

Insbesondere sind bei der Anordnung, insbesondere auch zur bildgebenden FT-Spektroskopie im mobilen Einsatz in Lebens- und Materialbereichen, der Strahlungsquelle optische Mittel zur Bestrahlung eines länglichen Bereiches in den beiden Interferometer-Aperturflächen (A1, A2) mit der Längsrichtung des länglichen bestrahlten Bereiches, dessen Verhältnis von Längsausdehnung zu Querausdehnung mindestens 1,2 beträgt, zumindest näherungsweise senkrecht zur Schnittebene V-M nachgeordnet. Vorzugsweise kann der längliche bestrahlten Bereiches in sich auch noch feinstrukturiert ausgebildet sein. Diese vorzugsweise besteht vorzugsweise in der Längsrichtung mit vorzugsweise länglichen Feinbereichen. Auf diese vorzugsweise können im Abbildungsstrahlengang der Probe auf den gerasterten Detektor längliche Schlitze zur konfokalen Diskriminierung nach M. Minski abgestimmt sein. Dies dient auch zur Minimierung von Streulicht aus nicht adressierten Volumenbereichen der Probe.

Dabei ist bei der Anordnung zur Fourier-Transformations-Spektroskopie vorzugsweise die Strahlungsquelle in länglicher Form ausgebildet, deren Verhältnis von Längsausdehnung zu Querausdehnung mindestens 1,2 beträgt, wobei die Strahlungsquelle vorzugsweise so angeordnet ist, dass deren Längsachse zumindest näherungsweise senkrecht zur Schnittebene V-M ist. Die Längsausdehnung oder Längsachse der Strahlungsquelle ist somit vorzugsweise senkrecht zur Achse y_tilt-invar oder der Achse y_very small tilt.

Vorzugsweise kann die länglich ausgebildete Strahlungsquelle in sich auch noch strukturiert ausgebildet sein. Dies vorzugsweise in der Längsrichtung derselben. Die Strahlungsquelle kann im Sinne einer Feinstrukturierung ausgebildet sein. So können auch vorzugsweise Verfahren, die eine Information über die Tiefe der Probe bringen, wie Triangulations-. Autofokustechniken oder die konfokalen Techniken mit der spektralen Analyse kombiniert werden. Die Ausbildung der Strahlungsquelle im Sinne einer Feinstrukturierung kann in Verbindung mit Blenden, auch in Verbindung mit Schlitzblenden, im Abbildungsstrahlengang für die Probe erfolgen, die auf die Feinstrukturierung der Strahlungsquelle abgestimmt ist. Dies dient dann der Unterdrückung von Streulicht im Sinne des konfokalen Ansatzes nach M. Minski und kann die Auflösung in den drei Raumkoordinaten verbessern. Es können auch schwach mit elektromagnetischer Strahlung wechselwirkende Bereiche der Probe auch der spektralen Untersuchung zugeführt werden. Vorzugsweise ist es möglich, dass die Feinstrukturierung der Strahlungsquelle vorbestimmt gesteuert ausgeführt wird. Dies kann bekannter Weise auf der Basis von räumlichen Lichtmodulatoren (SLMs) erfolgen, beispielsweise unter Nutzung von Mikrospiegel-Arrays.

Vorzugsweise ist bei der Anordnung zur Fourier-Transformations-Spektroskopie die Strahlungsquelle so angeordnet, dass dabei entweder die Richtung von deren Querausdehnung oder die Richtung der Querausdehnung des auf den Endreflektoren von der Strahlungsquelle bestrahlten länglichen Bereichs jeweils zumindest näherungsweise parallel zur Achse y_tilt-invar der Endreflektoren in Hybridform oder parallel zur Achse y_very- small-tilt des Präzisions-Führungssystems gemacht ist.

Vorzugsweise sind bei der Anordnung zur Fourier-Transformations-Spektroskopie die optischen Mittel zur Bestrahlung eines länglichen Bereiches in den beiden Interferometer-Aperturflächen (A1, A2) zumindest näherungsweise astigmatisch strahlenbündelformend ausgebildet.

Vorzugsweise sind bei der Anordnung zur Fourier-Transformations-Spektroskopie die optischen Mittel zur Bestrahlung eines länglichen Bereiches in den beiden Interferometer-Aperturflächen (A1, A2) zumindest näherungsweise stigmatisch oder anastigmatisch strahlenbündelformend ausgebildet.

Vorzugsweise sind bei der Anordnung zur Fourier-Transformations-Spektroskopie die optischen Mittel zur Bestrahlung eines länglichen Bereiches in den beiden Interferometer-Aperturflächen (A1, A2) als afokales System ausgebildet.

Vorzugsweise sind bei der Anordnung zur Fourier-Transformations-Spektroskopie die optischen Mittel zur Bestrahlung eines länglichen Bereiches in den beiden Interferometer-Aperturflächen (A1, A2) anamorphotisch strahlenbündelformend ausgebildet. So kann ein länglicher Bereich in den beiden Interferometer-Aperturflächen (A1, A2) mit Längsrichtung desselben zumindest näherungsweise parallel zur Schnittebene H-S bestrahlt werden.

Vorzugsweise sind bei der Anordnung zur Fourier-Transformations-Spektroskopie die optischen Mittel zur Bestrahlung eines länglichen Bereiches in den beiden Interferometer-Aperturflächen (A1, A2) mit einer stärkeren positiven Brechkraft in der Schnittebene V-M im Vergleich zur Schnittebene H-S ausgebildet.

Vorzugsweise werden als optische Mittel zur Bestrahlung eines länglichen Bereiches eine Kombination aus Kollimator und zylindrischer Fokussier-Optik, beispielsweise auch Zylinder-Optiken in Linsen- oder Spiegelform eingesetzt.

Vorzugsweise ist bei der Anordnung zur Fourier-Transformations-Spektroskopie der Randstrahlwinkel alpha_V-M des Strahlenbüschels SB_V-M etwa gleich dem halben Feldwinkel w der Linienquelle gemacht.

Das ist die Bedingung für ein etwa quadratisch bestrahltes Objektfeld am Interferometerausgang in Fokusebene des Fokussier-Objektivs. Dabei ist 2 alpha_V-M der Vollwinkel des Bündels. Der Winkel zwischen einer Gerade g durch jeweils äußersten Punkt an der Strahlungsquelle und durch den ersten Hauptpunkt des Kollimatorobjektivs definiert den halben Feldwinkel w. Das Zylinderobjektiv ist vorzugsweise direkt nach dem Kollimator angeordnet.

Vorzugsweise ist bei der Anordnung zur Fourier-Transformations-Spektroskopie ein eindimensionales oder zweidimensionales Array von miniaturisierten linienförmigen Strahlungsquellen, deren Verhältnis von Längsausdehnung zu Querausdehnung mindestens 1,2 beträgt, mit jeweils jeder Strahlungsquelle zugeordneten optischen Mitteln jeweils auch in Form eines eindimensionalen oder zweidimensionalen Arrays zur Bestrahlung einer Vielzahl von länglichen Bereichen - mindestens jedoch zwei in den beiden Interferometer-Aperturflächen (A1, A2) - angeordnet.

Vorzugsweise fokussieren viele astigmatische Strahlenbüschel in den beiden Dachkant-End-Reflektoren und bilden dort jeweils eine Linie senkrecht zur Dachkante eines Dachkant-EndReflektors. Vorzugsweise "sammelt" ein vergleichsweise in der Lateral-Ausdehnung großes Fokussier-Objektiv am Ausgang des Interferometers die astigmatischen Interferenz-Bündel am Ausgang des Interferometers und überlagert diese inkohärent zu einem bestrahlten Feld. Die Haidinger-Ring-Systeme der Interferenz-Bündel kommen dort im Idealfall in Phase an.

Vorzugsweise stellen bei einer Anordnung zur Fourier-Transformations-Spektroskopie die Aperturflächen (A1, A2) der Endreflektoren zumindest in einer der beiden Schnittebenen V-M oder H-S die strahlenbündelbegrenzende Blende des optischen Gesamt-Systems dar.

Weiterhin können die Aperturflächen (A1, A2) der Endreflektoren zumindest näherungsweise in der Brennebene oder bei Astigmatismus in einer der beiden Brennebenen der optischen Mittel zur Bestrahlung eines länglichen Bereiches (lbB_A) angeordnet sein.

Weiterhin weisen bei einer Anordnung zur Fourier-Transformations-Spektroskopie die Endreflektoren in Hybridform mit jeweils partieller Retro-Reflexions-Eigenschaft vorzugsweise eine optisch genutzte Höhe h_hybrid in der Schnittebene V-M von maximal 70% von der optisch genutzten Lateralausdehnung der Endreflektoren in Hybridform in der Schnittebene H-S auf. Die einzelnen Endreflektoren in Hybridform können also als flache oder sogar als sehr flache Endreflektoren ausgebildet sein. Weiterhin sind die Endreflektoren in Hybridform jeweils vorzugsweise als Dachkantreflektoren ausgebildet, die als kompakte Baugruppe vorzugsweise gemeinsam motorisch drehbar um eine gemeinsame Rotations-Achse ausgebildet sind.

Alternativ weisen weiterhin bei einer Anordnung zur Fourier-Transformations-Spektroskopie die Endreflektoren in Hybridform mit jeweils partieller Retro-Reflexions-Eigenschaft vorzugsweise eine optisch genutzte Höhe h_hybrid in der Schnittebene V-M von mindestens 100% von der optisch genutzten Lateralausdehnung der Endreflektoren in Hybridform in der Schnittebene H-S auf. Die Endreflektoren in Hybridform können also als hohe oder sogar als sehr hohe Endreflektoren ausgebildet sein. Weiterhin sind die Endreflektoren in Hybridform jeweils vorzugsweise als Dachkantreflektoren ausgebildet, die als kompakte Baugruppe vorzugsweise gemeinsam motorisch drehbar um eine gemeinsame Rotations-Achse ausgebildet sind. In diesem Fall überdecken die Dachkantreflektoren mehrere oder sogar eine Vielzahl von Fokussier-Objektiven mit ihren Ausdehnungen in Richtung der Dachkanten am Ausgang des Interferometers. Somit ist mit einer sehr hohen - also in Richtung der Dachkante lang in Relation zu deren Querausbildung - ausgebildeten End-Reflektor-Baugruppe ein paralleler Viel-Kanal-Betrieb möglich. In ähnlicher Weise können auch mehrere optische Mittel oder eine Vielzahl von Strahlungsquellen und nachgeordneten optischen Mitteln zur Bestrahlung jeweils eines länglichen Bereiches (lbB_A) einer einzigen, jedoch dafür sehr hohen, bzw. sehr langen End-Reflektor-Baugruppe angeordnet sein. So können beispielsweise 32 längliche Bereiche, übereinander liegend, bestrahlt werden.

Es wird weiterhin bei einer Anordnung zur Fourier-Transformations-Spektroskopie vorgeschlagen, die Interferometer-Anordnung vorzugsweise in der geometrischen Form eines typischen City-Turmhochhauses mit eher kleiner Grundfläche in Bezug zur Höhenausdehnung und mit einer Vielzahl von Etagen, im Folgenden Interferometer-Turm mit Interferometer-Zellen in Etagenform genannt, auszubilden.

Dabei ist jede einzelne Interferometer-Zelle des Interferometer-Turm vorzugsweise voneinander separiert und vorzugsweise zu einem vollständigen bildgebenden Spektralkanal ausgebildet, indem jeweils optische Mitteln zur Bestrahlung eines länglichen Bereiches (lbB_A) in den beiden Interferometer-Aperturflächen (A1, A2) jeder einzelnen Interferometer-Zelle zugeordnet sind und jeder einzelnen Interferometer-Zelle jeweils auch mindestens ein Fokussier-Objektiv und mindestens ein gerasterter Detektor zugeordnet sind.

Die einzelnen Etagen, die hier den länglichen Bereichen (lbB_A) entsprechen, sind dabei - wie auch bei einem typischen City-Turmhochhaus vorzugsweise lateral beträchtlich weiter ausgedehnt als in der Höhe, was aber nicht zwingend so sein muss. Die bestrahlten länglichen Bereiche (lbB_A) in den beiden Interferometer-Aperturflächen (A1, A2) sind hierbei vorzugsweise zellenweise, also etagenweise, durch die erzeugenden optischen Mittel jeweils in Höhenrichtung voneinander separiert, ohne dass dazu körperliche Mittel einzusetzen sind.

Dem Interferometer-Turm ist ein Drehreflektor-Turm zugeordnet. Die Längsachse des Drehreflektor-Turms, welche hier auch die Drehachse darstellt, kann hierbei jede Position oder Lage im Raum einnehmen kann, so dass sich dann bei waagerechter Lage dieser Längsachse eher eine Walzen-Anordnung ergibt.

Dieser Ansatz ermöglicht also die stark parallelisierte spektrale, bildgebende Sensorik zur automatisierten schnellen Analytik z.B. in medizinischen Diagnose-Zentren oder bei industriellen Fertigungs-Prozessen, wo ständig Proben in großer Stückzahl genommen werden müssen.

Der Ansatz ermöglich besonders, einfach aufgrund seiner bevorzugten geometrischen Flachbauweise der einzelnen Kanäle statt einem - wie bisher meist - nun viele Spektral-Bild-Kanäle, z.B. 8, 16 oder 32 gleichzeitig - wie in einem Stapel (Stack) - anzuordnen. Diese Anordnung kann bevorzugt im mittleren oder fernen Infraroten Spektralbereich zur Anwendung kommen, da sich in diesem Bereich aufgrund der Wellenlänge oberhalb 6 Mikrometer, entsprechend Wellenzahlen unter 1667 Zentimeter-reziproke, die Toleranzforderungen im Vergleich zum sichtbaren Spektralbereich etwa um eine volle Größenordnung entschärfen, s. dazu auch [12]. Es lässt sich abschätzen, dass sich oberhalb der Wellenlänge von 6 Mikrometern sowohl die Forderungen hinsichtlich der Ebenheit der Spiegelflächen der Endreflektoren als auch die Forderungen nach der Präzision der Bewegung der Endspiegel des Interferometers so weit reduzieren, dass beim Stand der Technik bezüglich Konstruktion, verfügbaren Werkstoffen, Fertigungstechnik und Montagetechniken, einschließlich einer computer-assistierten Justierung für das Interferometers, die - auch in diesem Spektralbereich - noch recht hohen Toleranzforderungen zu erfüllen sind und sich auch unter Betriebsbedingungen der hyperspektralen, bildgebenden Sensor-Station langfristig einhalten lassen. Diese Betriebsbedingungen sollten nicht extrem sein, da es sich um Laborbedingungen handeln kann.

Somit kann ein einziger hoher, vorzugsweise monolithischer oder quasi- monolithischer Endreflektor mit einem einzigen motorischem Antriebssystem und einer einzigen Antriebsregelung die Erzeugung des benötigten optischen Gangunterschieds durch den Scan der Endreflektoren für jeden spektralen Bildkanal, hier im bildlichen Vergleich für jede einzelne Etage, simultan bewerkstelligen. So können medizinische Proben oder Materialproben in vorzugsweise 8fach-, 16fach- oder 32fach-Magazinen gleichzeitig in die hyperspektrale, bildgebenden Sensor-Station einfahren, gleichzeitig in wenigen Sekunden - je nach Aufgabe auch minutenlang - vermessen und gleichzeitig mit Magazin wieder aus dieser herausgefahren werden. Somit kann der Probendurchsatz bei bildgebenden Spektral-Messungen durch Parallelisierung enorm erhöht werden.

Zur hochautomatisierten, parallelisierten Analyse in Biotechnologie, Medizin und chemischen Produktion wird vorzugsweise das Zweistrahl-Interferometer in Form einer Stack-Struktur, also mit mehreren gestapelten Komponenten in Richtung der Achse der motorisch und vorbestimmt hochgenau drehenden Welle zur Aufnahme der Endreflektor-Komponenten ausgebildet.

Auch die vorgeordneten optischen Mittel zur Bestrahlung des Zweistrahl-Interferometers sind vorzugsweise in Stack- oder Stapelform ausgebildet. Somit gibt es also mehrere Strahlengänge, beispielsweise 16 Strahlengänge übereinander. Es werden demzufolge dann 16 einzelne Strahlungsquellen und auch 16 einzelne vorzugsweise Toroid-Spiegel oder refraktive Astigmaten - je nach Spektralbereich - für die Strahlenbündelformung am Eingang des Zweistrahl-Interferometers eingesetzt.

Die Proben befinden sich vorzugsweise in einem speziellen mechanischen Magazin gemäß der Rasterkonstanten der Stack-Geometrie. Es erfolgen nach dem jeweiligen parallelen Messen der Proben - jeweils bevorzugt mit gleichen Messparametern - schnelle Wechsel jeweils eines ganzen Magazins mit Proben. Hier befinden sich in einem Magazin vorzugsweise 16 Transmissions-Proben, die gleichzeitig gemessen werden können.

Dabei kann eine erste Messung, beispielsweise im MIR durchgeführt werden und eine zweite Messung in einem anderen Spektralbereich, beispielsweise im NIR, fortgesetzt werden. Hierbei ist es hilfreich, wenn durch eine hohe Präzision der feinverschiebbaren Proben-Magazine die Zuordnung der Messpunkte auf der Probe auf etwa 5 Mikrometer gegeben ist. Andererseits können auch Korrelations-basierte Verfahren die Zuordnung der Daten im Bild von Messungen in verschieden Spektralbereichen an unterschiedlichen Slots einer hyperspektralen, bildgebenden Sensor-Station ermöglichen.

Es wird weiterhin bei einer Anordnung zur Fourier-Transformations-Spektroskopie vorgeschlagen, die Interferometer-Anordnung vorzugsweise in der geometrischen Form eines typischen City-Turmhochhauses mit eher kleiner Grundfläche in Bezug zur Höhenausdehnung und mit einer Vielzahl von Etagen, im Folgenden Interferometer-Turm mit Interferometer-Zellen in Etagenform genannt, auszubilden.

Dabei ist - in diesem bildlichen Vergleich - jede einzelne Interferometer-Zelle des Interferometer-Turm zu einem vollständigen Spektralkanal ausgebildet, indem jeweils optische Mitteln zur Bestrahlung eines länglichen Bereiches (lbB_A) in den beiden Interferometer-Aperturflächen (A1, A2) jeder Interferometer-Zelle zugeordnet sind und jeder einzelnen Interferometer-Zelle jeweils auch mindestens ein Fokussier-Objektiv und mindestens ein Detektor zugeordnet sind. Dieser Ansatz mit Stapelung von spektralen Messkanälen kann also auch zur einkanaligen FT-Spektroskopie genutzt werden.

Es wird weiterhin bei einer Anordnung zur Fourier-Transformations-Spektroskopie bei Anwendung von 90°-Dachkant-Endreflektoren vorgeschlagen, in einem Zweistrahl-Interferometer-System die Interferometer-Endreflektor-Anordnung vorzugsweise in der geometrischen Form eines typischen City-Turmhochhauses mit eher kleiner Grundfläche in Bezug zur Höhenausdehnung und mit einer Vielzahl von Etagen, im Folgenden Endreflektor-Turm mit Interferometer-Zellen in Etagenform (Flachzellen-Struktur) genannt, auszubilden.

Es handelt sich bei dem Endreflektor-Turm mit Interferometer-Zellen in Etagenform im Zweistrahl-Interferometer-System vorzugsweise um einen hochkant stehenden Quader, der als Gesamtkörper vorzugsweise gedreht wird, um den optischen Gangunterschied für jeden hyperspektralen, bildgebenden Sensorkanal in gleicher Weise simultan bereitzustellen. Die Zellen mit 90°-Dachkant-Endreflektoren stellen vorzugsweise flache Zellen dar.

Es ist also ein Endreflektor-Turm angeordnet, der als Gesamtkörper vorzugsweise drehbar ausgebildet ist. Dabei erfolgt die Drehung des Endreflektor-Turms vorzugsweise nur im Teilbereich eines Vollkreises, typischerweise beträgt diese hier nur wenige Altgrad. Dabei sind die 90°-Dachkant-Endreflektoren vorzugsweise über die volle Höhe des Endreflektor-Turms mit den - die Spiegelflächen bildenden - Flächen vorzugsweise durchgehend ausgebildet. Dabei kann die Verspiegelung dieser Flächen nur in Teilbereichen ausgebildet sein, um Streustrahlung zu minimieren oder eine vorbestimmte Öffnungsblendenwirkung zu erzielen.

Vorzugsweise sind zwei, drei, vier oder auch im Extremfall bis zu 6 Seitenbereiche dieses hochkant stehenden drehbaren Endreflektor-Turms jeweils als eine Front von Endreflektor-Gruppen - vorzugsweise in 90°-Doppeldachkant-Struktur ausgebildet. Die Nutzung von mehr als vier Seitenbereichen wird besonders einfach möglich, wenn das Interferometer anstelle einer typischen 90°-Michelson-Anordnung hier eine vorzugsweise 105°- oder 120°-Anordnung, als Winkel zwischen den beiden Interferometer-Armen, aufweist. In diesem Fall beträgt der Winkel zwischen den Verbindungslinien zum Drehpunkt nur 75° oder 60°. So kann jeder dieser Seitenbereiche, wobei hier 6 Seitenbereiche als das Maximum angesehen werden, des Endreflektor-Turms jeweils einem parallelisiertem Beleuchtungsstrahlengang, mehreren Strahlteilern, mehreren Fokussier-Objektiven und mehrere gerasterten Detektoren zugeordnet sein. Dabei kann eine starke bis sehr Infrarot-Strahlungsquelle vorzugsweise mehrere Kanäle mit Infrarot-Strahlung versorgen, indem dieser Infrarot-Strahlungsquelle mindestens ein Spiegel in Array-Form nachgeordnet ist, der zur Parallelisierung der Strahlengänge dient. Vorzugsweise kann dies auch ein Zylinderspiegel in Array-Form sein.

Es muss darauf hingewiesen werden, dass unerwünschter Weise eine 105°- oder gar eine 120°-Michelson-Anordnung bei Nutzung sich drehender 90°-Doppeldachkant-Reflektoren im Vergleich zu einer 90°-Michelson-Anordnung mit 90°-Doppeldachkant-Reflektoren signifikant empfindlicher gegenüber der Kippung der Drehachse ist, weil sich bei einer 105°- oder 120°-Michelson-Anordnung die Kippanteile der Drehachse partiell addieren, was im Ergebnis die Interferenz von stärker zueinander verkippten Wellenfronten - im Vergleich zur 90°-Anordnung bei gleichem Kippwinkel - mit sich bringt. Dies kann - je nach Betrag der Kippung - für die Anwendung in einem FTS gegebenenfalls schädlich sein.

Ein drehbarer Endreflektor-Turm, im Folgenden auch als Drehreflektor-Turm bezeichnet, steht jeweils im Zentrum einer Spektrometer-Messeinrichtung. Es handelt sich dabei also um eine neue Klasse eines bevorzugt stationären Hochleistungs-Sensorsystems, das hier als hyperspektrale bildgebende Sensorstation (HybISS) oder Englisch "Hyperspectral Imaging Sensor Station (HysISS)" bezeichnet wird.

Vorzugsweise bietet sich dieser hochparallelisierte Ansatz für den mittleren und auch fernen Infrarot-Bereich (MIR, FIR) an, da hier die Genauigkeits-und Toleranzforderungen, insbesondere für das Interferometer-System, beim Stand der Technik vergleichsweise einfach gegenüber dem sichtbaren Spektralbereich zu erfüllen sind.

Zunehmend muss eine große Anzahl von Messungen gleicher oder sehr ähnlicher Proben im MIR und gegebenenfalls auch FIR für die medizinische Diagnose in einem medizinischen Analyse-Zentrum für einen Ballungsraum mit Großstadt durchgeführt werden.

Hyperspektrale bildgebende Sensorstationen (HybISS) dieser Art können durchaus über die simultane Nutzung mehrerer Seiten des im Teilbereich eines Vollkreises, beispielsweise hier 10°, drehbaren Endreflektor-Turms in der Summe eine Anzahl von 64 oder 128 parallelen Kanälen aufweisen. Diese arbeiten vorzugsweise in einem synchronisierten Takt.

Eine Auswuchtung des Drehreflektor-Turms erfolgt auch unter Nutzung der Massen der jeweils gegenüberliegenden Endreflektor-Baugruppen. Zur Drehung desselben kann ein geregelter bürstenloser Doppel- oder Mehrfachantrieb eingesetzt werden, da ja nur im Teilereich eines Vollkreises gedreht wird. Die Lagerung der durchgehenden Welle für den Drehreflektor-Turm kann dreifach- oder auch bis 8-fach ausgeführt sein. Das Messsystem zur Gewinnung des optischen Gangunterschieds kann als laser-interferometrisches Doppel-Referenzmesssystem, inklusiv mindestens eines hochgenauen Nullpunktgebers ausgebildet sein, ein Referenzmesssystem oben und eines unten am Drehreflektor-Turm angeordnet. So besteht für jede einzelne Endreflektor-Gruppe mittels Interpolation die Möglichkeit der hochgenauen Zuordnung des jeweiligen optischen Gangunterschieds, wenn bei Drehung des Drehreflektor-Turm s eine Restkippung der Drehachse in der Größenordnung von Winkelsekunden - maximal im einstelligen Winkelsekundenbereich - auftritt. Dazu ist die Restkippung numerisch zu stimmen. Diese Restkippung ist für den Modulationsgrad einer jeden einzelnen Zelle in der Regel überhaupt nicht schädlich, beeinflusst aber dennoch gegebenenfalls den optischen Gangunterschied, so dass dieser von Zelle zu Zelle etwas variieren kann. Dies kann numerisch korrigiert werden, damit die Wellenzahlgenauigkeit im berechneten Spektrum hoch bleibt.

Dabei ist die Drehachse des Drehreflektor-Turms durch den Schnitt der Strahlteilerflächen gegeben und die Dachkanten befinden sich jeweils möglichst genau im gleichen Abstand von der Drehachse. Dies führt zur Reduzierung der lateralen Shear und sichert den gleichen optischen Gangunterschied für alle Reflektor-Gruppen am Drehreflektor-Turm.

Die Konstruktion des Drehreflektor-Turms ist dabei extrem torsionsteif und mit sehr hoher Verwindungssteifigkeit ausgeführt. Dies kann beispielsweise mittels CFK-Komponenten großer Querabmessungen erreicht werden. Das Antriebs-Regelungssystem ist auf die Erzeugung einer konstanten Änderung des optischen Gangunterschieds über der Zeit im Scan der Endreflektoren des Drehreflektor-Turms optimiert.

Dabei ist es weiterhin vorzugsweise möglich, dass ein Stapel von Proben, ein Stapel von gerasterten Matrix-Empfängern, ein Stapel von mehreren Strahlteilern angeordnet sind. Jedoch kann ein Strahlteiler, auch vorzugsweise als Doppelplatten-Strahlteiler-System, auch für die gleichzeitige Nutzung durch mehrere gestapelte Messkanäle in unterschiedlichen Teilbereichen desselben angeordnet sein.

Dabei kann in einem Großlabor die Anordnung von mehreren beschriebenen Sensor-Stationen in Form von bildgebenden Fourier-Spektrometern - jeweils mit Drehreflektor-Türmen - in ähnlicher Form wie bei einer Großstadtanlage ausgebildet sein.

Der sehr hohe Parallelisierungsgrad mittels einer hier beschriebenen Sensor-Station unter Nutzung eines Drehreflektor-Turms ist sehr sinnvoll, da bei höheren spektralen Auflösungen an wenig kooperative Transmissions-Proben - beispielsweise, wenn diese optisch sehr dicht sind, - auch bis zu 10 Stunden infolge einer sehr hohen Anzahl von Wiederholungsmessungen zur Mittelwertbildung (Akkumulation) im Messprozess verbleiben können. Dabei sind auch 10.000 Wiederholungsmessungen nichts völlig Ungewöhnliches. Die bei einigen Messungen notwendigen hohen Akkumulationszahlen verringern den Probendurchsatz sehr stark.

Es lässt sich abschätzen, dass sich beim Einsatz konventioneller Strahlungsquellen und bei der weitgehenden Vollauslastung einer hyperspektralen bildgebenden Sensorstation, beispielsweise mit 128 bildgebenden Spektralkanälen als Kleinserien-Anlage, über wenige Jahre die Analyse-Stunde für jeden einzelnen bildgebenden Spektralkanal kostendeckend unter 10 Euro bringen lassen.

Weiterhin sind vorzugsweise bei der Anordnung zur Fourier-Transformations-Spektroskopie die Bestrahlungs- und/oder die Fokussier-Objektive, im Weiteren auch als Fokussier-Optiken bezeichnet, am Ausgang des Interferometers in Form von eindimensionalen oder in Form von zweidimensionalen Optik-Arrays mit Fokussier-Objektiven ausgebildet.

Weiterhin sind vorzugsweise bei der Anordnung zur Fourier-Transformations-Spektroskopie die optischen Mittel zur Bestrahlung eines länglichen Bereiches in den beiden Interferometer-Aperturflächen (A1, A2) als eine Kombination je eines off-axis Ellipsoid-Spiegels und je eines torischen off-axis Spiegels oder als eine Kombination je eines off-axis Ellipsoid-Spiegels und je eines torischen off-axis Spiegels in einem Array ausgebildet. Dabei können die Spiegel auch mittels Freiformflächen für die Feldkorrektur ausgebildet sein.

Weiterhin sind vorzugsweise bei der Anordnung zur Fourier-Transformations-Spektroskopie die optischen Mittel zur Bestrahlung eines länglichen Bereiches in den beiden Interferometer-Aperturflächen (A1, A2) als eine Kombination eines off-axis Paraboloid-Spiegels und eines Zylinderspiegel-Arrays mit mehreren oder einer Vielzahl von Zylinderspiegel ausgebildet. Dadurch können viele längliche Bereiche in den beiden Interferometer-Aperturflächen (A1, A2) bestrahlt werden. Dabei können die Spiegel auch mittels Freiformflächen für die Feldkorrektur ausgebildet sein.

Weiterhin sind vorzugsweise bei der Anordnung zur Fourier-Transformations-Spektroskopie die Dachkanten-Reflektoren aus optisch blankem Kohlen-Faser-verstärktem Kunststoff (CFK) mit Goldbeschichtung der optisch wirksamen Flächen hergestellt. Diese weist bei Anwendung von Kohlen-Faser-verstärktem Kunststoff (CFK) in der geeigneten Konfiguration und Anwendung eine besonders geringe Temperaturdehnung auf.

Weiterhin sind vorzugsweise bei der Anordnung zur Fourier-Transformations-Spektroskopie die beiden Dachkant-Reflektor länglich in deren Höhenausdehnung im Vergleich zu deren maximaler Lateralausdehnung ausgebildet und so ist eine Vielzahl - mindestens jedoch zwei - von bestrahlten länglichen Bereichen (lbB) in den beiden Interferometer-Aperturflächen (A1, A2) übereinanderliegend angeordnet. Die bestrahlten länglichen Bereiche (lbB) in den beiden Interferometer-Aperturflächen (A1, A2) sind vorzugsweise voneinander separiert.

Weiterhin ist vorzugsweise bei der Anordnung zur Fourier-Transformations-Spektroskopie die Strahlungsquelle mit Frequenzkamm-Charakteristik ausgebildet und vorzugsweise ist diese als Frequenzkamm-Laser ausgebildet. Dies kann zur Erhöhung der spektralen Auflösung genutzt werden.

Weiterhin kann eine hyperspektrale bildgebende Sensorstation auf der Basis der FTS an einen Beschleuniger angedockt werden, um energiereiche Synchrotron-Strahlung nutzen zu können. Durch energiereiche Synchrotron-Strahlung kann die Messungen beschleunigt werden.

Weiterhin ist vorzugsweise bei der Anordnung zur Fourier-Transformations-Spektroskopie die elektromagnetische Strahlung einer Strahlungsquelle selbst der Untersuchungsgegenstand. Die Strahlungsquelle wird hierbei, vorzugsweise im nah-infraroten Spektralbereich, mittels einer Vor-Optik auf eine Spaltblende in der Zwischenbildebene ZBE_v zumindest teilweise abgebildet. Von der Spaltblende ausgehend wird mittels nachfolgender vorzugsweise astigmatischer optischen Mittel ein länglicher Bereich im Zweistrahl-Interferometer bestrahlt. Als gerasterter Detektor dient eine schnelle Zeilenkamera mit vorzugsweise sehr hoch oder lang ausgebildeten Detektorelementen, um die Strahlungsenergie im Detektionsfeld zu einem möglichst hohen Anteil erfassen zu können. Die Bildinformation wird nur in der Längsrichtung der Spaltblende aufgelöst vor, was aber bei vielen Messaufgaben akzeptabel ist. Um die volle hyperspektrale Bildinformation zu erhalten kann ein Scan der Spaltblende in Querrichtung derselben durchgeführt werden.

Bei der astigmatischen Abbildung eines selbst strahlenden Objekts mit Kollimierung in der Schnittebene H-S bleibt die Ortauflösung in dieser Schnittebene H-S auch nach dem Fokusobjektiv auf dem Detektor erhalten. Dies kann vorzugsweise für die eindimensionale Abbildung der Quelle mittels eines Zeilendetektors mit großem Verhältnis von Breite zu Länge der Detektorelemente genutzt werden.

Bei geeigneter Strahlenführung kann das Strahlenbündel vorzugsweise die Dachkantreflektoren passieren, ohne dabei über eine Dachkante gehen zu müssen. Das kann wegen Streulicht und hinsichtlich eines hohen Interferogramm-Modulationsgrades von Vorteil sein, ist aber nicht zwingend.
Am Ausgang des Interferometers erfolgt vorzugsweise eine Strahlenbündelformung der beiden interferierenden Strahlenbündel mittels einer fokussierenden Abbildungsstufe auf das spektral und ortsaufgelöst zu vermessende Objekt. Dazu kann vorzugweise ein parabolischer Off-axis-Spiegel eingesetzt werden.

Die vom Objekt reflektierte gestreute oder transmittierte Strahlung wird vorzugsweise über eine weitere Abbildungsstufe - vorzugsweise eine 4f-Spiegelstufe auf den NIR-, MIR-Bildempfänger abgebildet. Dort wird das Haidinger-Ringsystem vom Bildempfänger detektiert.

Zum einen: Vorzugsweise können bei einer Kurz-Scan-Variante mit vergleichsweise geringer spektraler Auflösung die Dachkantreflektoren auch mittels starrer Piezo-Translator-Steller, gegebenenfalls auch mit Festkörper-Elementen versehen, bewegt werden. Vorzugsweise kann diese Bewegung auch gegensinnig in Bezug auf den Strahlteiler erfolgen, wodurch sich der Stellweg pro Tripel-Reflektor oder pro Dachkantreflektor bei gleicher Änderung des optischen Gangunterschieds halbiert. Dies ermöglicht beispielsweise bei einem Scanweg von 200 µm pro Reflektor, was eine Änderung des optischen Gangunterschieds von 800 µm erzeugt, den Einsatz direkt gekoppelter Piezo-Steller.

Zum anderen: Die Dachkantreflektoren werden bekannter Weise in einer hochkompakten Baugruppe gemeinsam angeordnet, die drehbar ausgebildet ist. Die Lagerung derselben erfolgt vorzugsweise mittels zwei spielfreier, schwach verspannter Wälzkörper-Lagern oder vorzugsweise auch mittels Festkörper-Elementen. Vorzugsweise erfolgt eine Auswuchtung der gesamten Drehreflektor-Baugruppe gemeinsam mit der ohnehin vorhandenen Masse der bewegten Motorkomponenten zur Erzeugung der Präzisionsdrehbewegung.

Es besteht somit auch die Möglichkeit, vergleichsweise kleine und somit kostengünstigere Dachkantreflektoren oder Planspiegel bei der bildgebenden Fourier-Transformations-Spektroskopie als Endreflektoren einsetzen zu können. Der Scanweg der Dachkantreflektoren kann bei vielen Anwendungen in der Größenordnung deutlich unter 1 cm sein.

Eine dem Zwei-Strahl-Interferometer nachgeordnete Fourier-Optik erzeugt ein im Scan üblicherweise veränderliches Haidinger-Ringsystem auf der Objekt-Oberfläche. Das im Scan - also in jeder Reflektor-Position - veränderte Haidinger-Ringsystem wird vielfach detektiert und dabei stets vom Bildempfänger lateral aufgelöst. Der Phasengang im Feld wird vorzugsweise ebenfalls detektiert und kann numerisch bestimmt und auch numerisch korrigiert werden. Dabei wird für jeden Pixel des Bildempfängers bei der Reflektor-Bewegung der optische Gangunterschied des Interferogramms den detektierten Intensitätswerten des Interferogramms - beispielsweise durch eine Interpolation im Feld - zugeordnet. Durch ein beispielsweise laser-interferometrisches Referenz-Messsystem wird der optische Gangunterschied an wenigstens einem Punkt des Feldes erfass. Am besten erfolgt die Strahlführung über die DachkantReflektoren selbst. So wird ein Interferogramm I(x_g) (x_g = optischer Gangunterschied, I = Intensität im Interferogramm) gebildet sowie gespeichert und dann - bei der FFT der Interferogramm-Intensität - verwendet. Diese Variation des optischen Gangunterschieds im Feld und deren Berücksichtigung bei der FFT stellt für den kundigen Fachmann kein Problem beim Stand der modernen Rechentechnik und Sensorik dar.

Auch die laterale Shear kann sich beim Einsatz von Dachkanten im vorzugsweise rotatorischen Scan der Dachkanten etwas verändern. Dies führt gegebenenfalls zu Veränderungen im optischen Gangunterschied. Dies kann einkalibriert werden, wenn es sich um eine systematische Abweichung handelt. Bei zufälligen Abweichungen ist vorzugsweise eine simultane Erfassung mit numerischer Kompensation notwendig.

Das vorteilhafte beim Einsatz von Dachkantreflektoren ist: Die laterale Shear mit vergleichsweise geringem Betrag - wie hier typisch - verringert bei Bild gestützter Sensorik nicht den Modulationsgrad im Signal. Es gibt nur die Shear-Streifen in der Fokusebene des Fokussier-Objektivs, die dort das auch auftretende Haidinger-Feld etwas dezentrieren können. Wenn die resultierenden Streifen als Überlagerung von Interferenz gleicher Neigung und Shear nicht zu eng benachbart werden, können diese erfasst werden. Dann kann dies numerisch im optischen Gangunterschied oder bei der Wellenzahl im errechneten Spektrum berücksichtigt werden.

In dieser Schrift sind wesentliche Details zur Fourier-Transformations-Spektroskopie und zur Tumorgewebe-Diagnostik im infraroten Spektralbereich im Einzelnen nicht dargestellt. Dennoch genügt die hier gegebene Lehre dem kundigen Fachmann mit hinreichender Ausbildung in der Physik, den Ingenieurswissenschaften und der Medizin zur nutzbringenden Anwendung der Fourier-Transformations-Spektroskopie in der beschriebenen Art und Weise auch bei vergleichsweise harten und widrigen Umgebungsbedingungen.

In einem weiteren Aspekt biete die Erfindung ein Verfahren zur FT-Spektroskopie, insbesondere auch zur bildgebenden Strahlungsquellen- und Stoff-Analyse aller Aggregatzustände sowie Tumorgewebe-Diagnostik. Die Analyse oder Diagnostik kann in Durchlicht- oder/und Auflicht-Technik, beziehungsweise auch als Emissionsmessung erfolgen,
- insbesondere auch mit Erfassung von Streustrahlung bei Durchlicht- oder Auflicht,
- insbesondere auch mit Erfassung von gebeugter und/oder reflektierter oder von transmittierter Strahlung,
- sowie insbesondere auch mit Erfassung mittels Fluoreszenzanregung erzeugter Strahlung,
mit einem Zweistrahl-Interferometer zur Generierung und Detektion einer Anzahl k von Interferogrammen - mit k größer/gleich 2.

Üblicherweise wird k beim Stand der Technik hierbei in der Größenordnung von eher Eintausend bis Einhunderttausend gemäß der Anzahl von Empfängerelementen eines gerasterten Empfängers liegen. Selbst eine Größenordnung von k von 10 Millionen ist machbar, stellt jedoch hohe Anforderungen an die Rechenleistung der Computer im Spektrometer-System.

Dabei ist dem Zweistrahl-Interferometer insbesondere mindestens ein Auswerte-Rechner oder - Rechnersystem zur Berechnung der Fourier-Transformation der k über dem optischen Gangunterschied x_g des Zweistrahl-Interferometers detektierten Interferogramme I_n(x_g), mit n gleich1 bis k, um aus diesen jeweils ein Spektrum zu erhalten, zugeordnet.

Das Zweistrahl-Interferometer weist dabei insbesondere folgende Komponenten auf:
- entweder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Ausgang des Zweistrahl-Interferometers angeordnet ist,
- oder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Eingang des Zweistrahl-Interferometers angeordnet ist,
- oder ein selbst elektromagnetische Strahlung emittierendes Objekt oder bestrahltes Objekt, auch in Arrayform, welches am Eingang des Zweistrahl-Interferometers angeordnet ist, im Weiteren jeweils auch als Strahlungsquelle bezeichnet,
- oder ein Zwischenbild einer multispektralen oder quasi-multispektralen Quelle elektromagnetischer Strahlung oder eines elektromagnetische Strahlung emittierenden Objekts oder eines bestrahlten Objekts, auch in Arrayform, im Weiteren jeweils auch als Strahlungsquelle bezeichnet,
- der Strahlungsquelle nächgeordnete optische Mittel zur Bündelformung der elektromagnetischen Strahlung derselben
- mindestens ein Strahlteilersystem zur Amplitudenteilung der elektromagnetischen Strahlung,
- je einen Endreflektor in jedem der beiden Interferometerarme mit je einer Interferometer-Aperturfläche und beide Endreflektoren in Kombination als Doppel-Endreflektor-Baugruppe zur Erzeugung des optischen Gangunterschieds x_g gemeinsam vorbestimmt motorisch drehbar ausgebildet sind,
wobei die Doppel-Endreflektor-Baugruppe aus der Kombination 90°-Dachkant-Spiegel mit liegender Dachkante und mit zwei an den Enden der Dachkante gegenüberliegenden und zueinander parallel angeordneten Planspiegeln besteht, wobei die Normalen der Planspiegelflächen jeweils parallel zur liegenden Dachkante sind, so dass hiermit zwei Raumecken gebildet sind,
und im Zweistrahl-Interferometer eine Schnittebene V-M besteht, die sowohl senkrecht auf der liegenden Dachkante steht als auch zum anderen zumindest näherungsweise den Schwerstrahl des Strahlenbündels am Eingang des Interferometers enthält, und im Zweistrahl-Interferometer auch eine Schnittebene H-S besteht,
die sowohl senkrecht zur Schnittebene V-M und parallel zur liegenden Dachkante der Doppel-Endreflektor-Baugruppe ausgerichtet ist,
als auch zumindest näherungsweise den Schwerstrahl (SST) des Strahlenbündels am Eingang des Interferometers enthält.

Der multispektralen oder quasi-multispektralen Quelle elektromagnetischer Strahlung kann dabei ein Faserbündel-Querschnittswandler nachgeordnet sein, der am Ausgang desselben eine rechteckige, vorzugsweise längliche Abstrahlfläche erzeugt.

Im Zweistrahl-Interferometer besteht eine Schnittebene V-M, die sowohl zum einen
- entweder bei Anordnung von Endreflektoren in Hybridform mit jeweils partieller Retro-Reflexions-Eigenschaft zumindest näherungsweise parallel zur Achse y_tilt-invar ist oder diese auch enthält
- oder bei Anordnung von Endreflektoren in Planspiegelform zumindest näherungsweise parallel zur Achse y_very- small-tilt des Präzisions-Führungssystems ist
als auch zum anderen zumindest näherungsweise den Schwerstrahl des Strahlenbündels am Eingang des Interferometers enthält. Im Zweistrahl-Interferometer besteht insbesondere auch eine Schnittebene H-S, die sowohl senkrecht zur Schnittebene V-M ausgerichtet ist als auch zumindest näherungsweise den Schwerstrahl (SST) des Strahlenbündels am Eingang des Interferometers enthält. Weiterhin sind insbesondere folgende Komponenten angeordnet:
- mindestens ein Fokussier-Objektiv am Ausgang des Zweistrahl-Interferometers mit dessen in Strahlrichtung nachgeordneter Brennebene oder mindestens ein Fokussier-Objektiv-Array am Ausgang des Zweistrahl-Interferometers mit nachgeordneten Brennebenen,
- mindestens ein gerasterter Empfänger elektromagnetischer Strahlung mit vielfacher Auslesung des gerasterten Empfängers über der Zeit t zur zeitseriellen Detektion interferierender elektromagnetischer Strahlung vom Objekt in Form eines Daten- oder Bilderstapels, wobei je ein Interferogramm I(t)_n von jeweils einem Element des Empfängers elektromagnetischer Strahlung über der Zeit t detektiert wird,
- ein Messsystem zum Bestimmen des aktuellen optischen Gangunterschieds x_g des Zweistrahl-Interferometers über der Zeit t bei der Bewegung eines oder beider Endreflektoren, welches mit einem Interface zur Übergabe der Daten zum aktuellen optischen Gangunterschied x_g(t) an den Auswerte-Rechner oder das -Rechnersystem ausgebildet ist, um daraus mit den Daten des Daten- oder Bilderstapels jeweils die Interferogramm-Daten I_n(x_g) zu bilden.

Insbesondere werden in einem Aspekt die folgenden Verfahrensschritte durchgeführt.: Es wird mit den optischen Mitteln zur Bündelformung insbesondere eine

Bestrahlung mindestens eines länglichen Bereiches, dessen Verhältnis von Längsausdehnung zu Querausdehnung mindestens 1,2 beträgt, in den beiden Interferometer-Aperturflächen (A1, A2) mit Längsrichtung des bestrahlten länglichen Bereiches zumindest näherungsweise senkrecht zur Schnittebene V-M durchgeführt.
und mit den, das Zweistrahl-Interferometer verlassenden und interferierenden Teil-Strahlungsbündeln in der Brennebene F_FO' der dem Zweistrahl-Interferometer nachgeordneten Fokussier-Objektiv, wo sich Interferenzen gleicher Neigung ausbilden, oder einer zu dieser Brennebene optisch konjugierten Ebene wird
- entweder eine Bestrahlung des nicht selbst elektromagnetisch strahlenden Objekts durchgeführt wird und die vom Objekt dabei in Reflexion, Streuung und/oder Transmission ausgehende Strahlung mit Objektabbildung mittels mindestens einer dem Objekt nachgeordneten optischen Anordnung auf dem gerasterten Empfänger detektiert
- oder im Fall des selbst elektromagnetische Strahlung emittierenden oder bestrahlten Objekts, angeordnet am Eingang des Zweistrahl-Interferometers, wird eine Bestrahlung des gerasterten Empfängers zwecks Detektion der Strahlung durchgeführt.

Dabei enthält die Schnittebene V-M den Schwerstrahl des Bündels am Eingang des Interferometers.

Weiterhin bietet die Erfindung in einem Aspekt insbesondere ein Verfahren und eine Anordnung zur FT-Spektroskopie, insbesondere auch zur bildgebenden Strahlungsquellen- und Stoff-Analyse aller Aggregatzustände sowie Tumorgewebe-Diagnostik. Die Analyse oder Diagnostik kann in Durchlicht- oder/und Auflicht-Technik, beziehungsweise auch als Emissionsmessung erfolgen,
- insbesondere auch mit Erfassung von Streustrahlung bei Durchlicht- oder Auflicht,
- insbesondere auch mit Erfassung von gebeugter und/oder reflektierter oder von transmittierter Strahlung,
- sowie insbesondere auch mit Erfassung mittels Fluoreszenzanregung erzeugter Strahlung,
mit einem Zweistrahl-Interferometer zur Generierung und Detektion einer Anzahl k von Interferogrammen - mit k größer/gleich 2. Üblicherweise wird k beim Stand der Technik hierbei in der Größenordnung von eher Eintausend bis Einhunderttausend gemäß der Anzahl von Empfängerelementen eines gerasterten Empfängers liegen. Selbst eine Größenordnung von k von 10 Millionen ist machbar, stellt jedoch hohe Anforderungen an die Rechenleistung der Computer im Spektrometer-System.

Dabei ist dem Zweistrahl-Interferometer mindestens ein Auswerte-Rechner oder -Rechnersystem zur Berechnung der Fourier-Transformation der k über dem optischen Gangunterschied x_g des Zweistrahl-Interferometers detektierten Interferogramme I_n(x_g), mit n gleich1 bis k, um aus diesen jeweils ein Spektrum zu erhalten, zugeordnet.

Das Zweistrahl-Interferometer weist dabei insbesondere folgende Komponenten auf:
- entweder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Ausgang des Zweistrahl-Interferometers angeordnet ist,
- oder mindestens eine multispektrale oder quasi-multispektrale Quelle elektromagnetischer Strahlung, auch in Array-Form - im Weiteren jeweils als Strahlungsquelle bezeichnet - zur Bestrahlung eines Objekts, welches am Eingang des Zweistrahl-Interferometers angeordnet ist,

- oder ein selbst elektromagnetische Strahlung emittierendes Objekt oder bestrahltes Objekt, auch in Arrayform, welches am Eingang des Zweistrahl-Interferometers angeordnet ist, im Weiteren jeweils auch als Strahlungsquelle bezeichnet,
- oder ein Zwischenbild einer multispektralen oder quasi-multispektralen Quelle elektromagnetischer Strahlung oder eines elektromagnetische Strahlung emittierenden Objekts oder eines bestrahlten Objekts, auch in Arrayform, im Weiteren jeweils auch als Strahlungsquelle bezeichnet,
- der Strahlungsquelle nachgeordnete optische Mittel zur Bündelformung der elektromagnetischen Strahlung derselben
- mindestens ein Strahlteilersystem zur Amplitudenteilung der elektromagnetischen Strahlung,
- je einen Endreflektor in jedem der beiden Interferometerarme mit je einer Interferometer-Aperturfläche (A1, A2).

Insbesondere sind beide Endreflektoren in Kombination als Doppel-Endreflektor-Baugruppe zur Erzeugung des optischen Gangunterschieds x_g gemeinsam vorbestimmt motorisch drehbar ausgebildet,
wobei die Doppel-Endreflektor-Baugruppe aus der Kombination 90°-Dachkant-Spiegel mit liegender Dachkante und mit zwei an den Enden der Dachkante gegenüberliegenden und zueinander parallel angeordneten Planspiegeln besteht, wobei die Normalen der Planspiegelflächen jeweils parallel zur liegenden Dachkante sind, so dass hiermit zwei Raumecken gebildet sind.

Im besteht Zweistrahl-Interferometer eine Schnittebene V-M,
die sowohl senkrecht auf der liegenden Dachkante steht als auch zum anderen zumindest näherungsweise den Schwerstrahl des Strahlenbündels am Eingang des Interferometers enthält, und im Zweistrahl-Interferometer auch eine Schnittebene H-S besteht,
die sowohl senkrecht zur Schnittebene V-M und parallel zur liegenden Dachkante der Doppel-Endreflektor-Baugruppe ausgerichtet ist,
als auch zumindest näherungsweise den Schwerstrahl (SST) des Strahlenbündels am Eingang des Interferometers enthält.

Der multispektralen oder quasi-multispektralen Quelle elektromagnetischer Strahlung kann dabei ein Faserbündel-Querschnittswandler nachgeordnet sein, der am Ausgang desselben eine rechteckige, vorzugsweise längliche Abstrahlfläche erzeugt.

Im Zweistrahl-Interferometer besteht eine Schnittebene V-M, die sowohl zum einen
- entweder bei Anordnung von Endreflektoren in Hybridform mit jeweils partieller Retro-Reflexions-Eigenschaft zumindest näherungsweise parallel zur Achse y_tilt-invar ist oder diese auch enthält
- oder bei Anordnung von Endreflektoren in Planspiegelform zumindest näherungsweise parallel zur Achse y_very- small-tilt des Präzisions-Führungssystems ist
als auch zum anderen zumindest näherungsweise den Schwerstrahl des Strahlenbündels am Eingang des Interferometers enthält. Im Zweistrahl-Interferometer besteht insbesondere auch eine Schnittebene H-S, die sowohl senkrecht zur Schnittebene V-M ausgerichtet ist als auch zumindest näherungsweise den Schwerstrahl (SST) des Strahlenbündels am Eingang des Interferometers enthält. Weiterhin sind insbesondere folgende Komponenten angeordnet:
- mindestens ein Fokussier-Objektiv am Ausgang des Zweistrahl-Interferometers mit dessen in Strahlrichtung nachgeordneter Brennebene oder mindestens ein Fokussier-Objektiv-Array am Ausgang des Zweistrahl-Interferometers mit nachgeordneten Brennebenen,
- mindestens ein gerasterter Empfänger elektromagnetischer Strahlung mit vielfacher Auslesung des gerasterten Empfängers über der Zeit t zur zeitseriellen Detektion interferierender elektromagnetischer Strahlung vom Objekt in Form eines Daten- oder Bilderstapels, wobei je ein Interferogramm I(t)_n von jeweils einem Element des Empfängers elektromagnetischer Strahlung über der Zeit t detektiert wird,
- ein Messsystem zum Bestimmen des aktuellen optischen Gangunterschieds x_g des Zweistrahl-Interferometers über der Zeit t bei der Bewegung eines oder beider Endreflektoren, welches mit einem Interface zur Übergabe der Daten zum aktuellen optischen Gangunterschied x_g(t) an den Auswerte-Rechner oder das -Rechnersystem ausgebildet ist, um daraus mit den Daten des Daten- oder Bilderstapels jeweils die Interferogramm-Daten I_n(x_g) zu bilden.

Insbesondere werden die folgenden Verfahrensschritte durchgeführt: Es wird mit den optischen Mitteln zur Bündelformung eine

Bestrahlung mindestens eines in den beiden Interferometer-Aperturflächen (A1, A2) durchgeführt.
und mit den, das Zweistrahl-Interferometer verlassenden und interferierenden Teil-Strahlungsbündeln in der Brennebene F_FO' der dem Zweistrahl-Interferometer nachgeordneten Fokussier-Objektiv, wo sich Interferenzen gleicher Neigung ausbilden, oder einer zu dieser Brennebene optisch konjugierten Ebene wird
- entweder eine Bestrahlung des nicht selbst elektromagnetisch strahlenden Objekts durchgeführt wird und die vom Objekt dabei in Reflexion, Streuung und/oder Transmission ausgehende Strahlung mit Objektabbildung mittels mindestens einer dem Objekt nachgeordneten optischen Anordnung auf dem gerasterten Empfänger detektiert
- oder im Fall des selbst elektromagnetische Strahlung emittierenden oder bestrahlten Objekts, angeordnet am Eingang des Zweistrahl-Interferometers, wird eine Bestrahlung des gerasterten Empfängers zwecks Detektion der Strahlung durchgeführt.

Dabei enthält die Schnittebene V-M den Schwerstrahl des Bündels am Eingang des Interferometers.

Vorzugsweise sind die Endreflektoren in einer Zweistrahl-Interferometer-Anordnung zur Fourier-Spektroskopie mit vollständigen Retro-Reflexionseigenschaften ausgebildet. Dies erfolgt entweder in Form eines Full cube-Reflektors mit zwei Tripelpunkten. Dieser Full cube-Reflektor besteht aus zwei parallel mit Abstand zueinander angeordneten Planspiegeln, also beabstandeten Planspiegeln, wobei in den freien Abstand eine Vielzahl von 90°-Dachkantspiegel-Anordnungen hochgenau eingesetzt ist. Deren Dachkanten sind jeweils parallel zu den beiden Normalen der zueinander parallelen Planspiegel angeordnet. Durch eine sehr langgezogene Ausbildung der zwei beabstandeten Planspiegel kann also eine Vielzahl von 90°-Dachkant-Spiegel-Anordnungen mit den Dachkanten parallel zueinander in einer Reihen- oder Stapelanordnung eingesetzt werden, so dass eine Multi-Reflektor-Anordnung besteht. Dese Multi-Reflektor-Anordnung ist als Teil eines rotierenden Drehreflektor-Turms zum Zweck der Erzeugung des benötigten optischen Gangunterschieds für ein Interferometer zur Fourier-Spektroskopie nutzbar.

Oder es wird ein Doppel-Tripelreflektor mit einem langgezogene Basis-Planspiegel ausgebildet, auf den eine Vielzahl von jeweils beabstandeten Paaren von 90°-Dachkantspiegel-Anordnungen - mit Dachkantenlage jeweils parallel zu Normalen des Planspiegels - in Reihenform aufgebracht ist. So entsteht ebenfalls eine vielfache Doppel-Tripel-Reflektor-Anordnung. Auch diese Multi-Reflektor-Anordnung ist als Teil eines rotierenden Drehreflektor-Turms zum Zweck der Erzeugung des benötigten optischen Gangunterschieds für ein Interferometer zur Fourier-Spektroskopie nutzbar.

In beiden Doppel-Tripelreflektor-Anordnungen werden vorzugsweise längliche Bereiche auf den Reflektor-Flächen bestrahlt.

Weiterhin wird vorzugsweise bei dem Verfahren zur Fourier-Transformations-Spektroskopie mit optischen Mitteln die Bestrahlung mindestens eines länglichen Bereiches zumindest näherungsweise in der Schnittebene V-M und in zur Schnittebene V-M parallelen Ebenen mit konvergierenden Strahlenbüscheln SB_V-M durchgeführt.

Weiterhin wird vorzugsweise bei dem Verfahren zur Fourier-Transformations-Spektroskopie mit optischen Mitteln eine Bestrahlung mindestens eines länglichen Bereiches in den beiden Interferometer-Aperturflächen (A1, A2) mit astigmatischer Strahlenbündelformung durchgeführt.

Somit können die Winkelbereiche in den beiden Schnittebenen V-S und H-M des Raumwinkels zumindest näherungsweise gleich gemacht werden, damit sich in der Brennebene des Fokussier-Objektivs demzufolge ein eher quadratisches oder ein eher kreisförmiges Bestrahlungsfeld ergibt. Somit kann das Verhältnis von lateraler Längsausdehnung zu minimaler lateraler Ausdehnung des Feldes sicher unter 2 bleiben.

Weiterhin können bei dem Verfahren zur Fourier-Transformations-Spektroskopie zur bildgebenden Analyse den optischen Mitteln zur Bestrahlung mindestens eines länglichen Bereiches (lbB_A) mit astigmatischer Strahlenbündelformung außerdem noch lichtabschattende oder lichtreflektierende oder lichtabsorbierende Mittel zur lateralen Strukturierung der elektromagnetischen Strahlung - vorzugsweise in der vorgeordneten Zwischenbildebene ZBE_v - zugeordnet sein. Diese können als Mehrfachschlitzblende, als Strahlung reflektierendes oder/und die Strahlung teilweise hindurchlassendes Liniengitter ausgebildet sein. Diese Mittel können auch in Form von räumlichen Lichtmodulatoren ausgebildet sein. Damit kann eine linienhafte strukturierte Beleuchtung des Objekts erfolgen, wobei die Linien stets parallel zur Schnittebene V-M ausgerichtet sind.

Es wird weiterhin bei einer Anordnung zur Fourier-Transformations-Spektroskopie vorgeschlagen, die Interferometer-Anordnung vorzugsweise in der geometrischen Form eines typischen City-Turmhochhauses mit eher kleiner Grundfläche in Bezug zur Höhenausdehnung und mit einer Vielzahl von Etagen, im Folgenden Interferometer-Turm mit Interferometer-Zellen in Etagenform genannt, auszubilden.

Dabei ist jede einzelne Interferometer-Zelle des Interferometer-Turms vorzugsweise voneinander separiert und vorzugsweise zu einem vollständigen bildgebenden Spektralkanal ausgebildet, indem jeweils optische Mitteln zur Bestrahlung eines länglichen Bereiches (lbB_A) in den beiden Interferometer-Aperturflächen (A1, A2) jeder einzelnen Interferometer-Zelle zugeordnet sind und jeder einzelnen Interferometer-Zelle jeweils auch mindestens ein Fokussier-Objektiv und mindestens ein gerasterter Detektor zugeordnet sind. Jedem Interferometer-Turm ist ein Drehreflektor-Turm zugeordnet.

Die einzelnen Etagen, die hier den länglichen Bereichen (lbB_A) entsprechen, sind dabei - wie auch bei einem typischen City-Turmhochhaus vorzugsweise lateral beträchtlich weiter ausgedehnt als in der Höhe, was aber nicht zwingend so sein muss. Die bestrahlten länglichen Bereiche (lbB_A) in den beiden Interferometer-Aperturflächen (A1, A2) sind hierbei vorzugsweise zellenweise, also etagenweise, durch die erzeugenden optischen Mittel jeweils in Höhenrichtung voneinander separiert, ohne dass dazu körperliche Mittel eingesetzt sind.

Jeder Interferometer-Turm enthält einen Drehreflektor-Turm. Die Längsachse des Drehreflektor-Turms, welche hier auch die Drehachse darstellt, kann jede Position oder Lage im Raum einnehmen, so dass sich dann bei waagerechter Lage dieser Längsachse eher eine Walzen-Anordnung ergibt. Die Lage eines Drehreflektor-Turms kann im Raum beliebig sein.

Dieser Ansatz ermöglicht also die stark parallelisierte spektrale, bildgebende Sensorik zur automatisierten schnellen Analytik z.B. in medizinischen Diagnose-Zentren oder bei industriellen Fertigungs-Prozessen, wo ständig Proben in großer Stückzahl genommen werden müssen.

Hierbei besteht die Doppel-Endreflektor-Baugruppe aus der Kombination 90°-Dachkant-Spiegel-Gruppe mit liegender Dachkante und mit zwei an den Enden der Dachkante gegenüberliegenden und zueinander parallel angeordneten Planspiegeln, wobei die Normalen der Planspiegelflächen jeweils parallel zur liegenden Dachkante sind, so dass hiermit zwei Raumecken gebildet sind.

Die in dieser Schrift diskutierten Spiegel-Anordnungen können auch als Anordnungen mit refraktivem Material ausgebildet sein, bei dem eine oder mehrere Außenflächen verspiegelt sind.

Die Darstellung der spektralen Daten kann in der dem Fachmann geläufigen Form der Datenwürfel mit zwei lateralen Koordinaten und einer spektralen Koordinate erfolgen.

Für das Auffinden von signifikanten Merkmalen in einer Messprobe, die mittels eines mobilen hyperspektralen bildgebenden Sensors oder einer hyperspektralen bildgebenden Sensorstationen gewonnen wurde, ist jedoch auch die Zusammenstellung und die fortlaufende Auflistung der ermittelten Spektren aller Bildpunkte sinnvoll, die dann seriell oder parallelisiert hinsichtlich bekannter spektraler Signaturen in Bezug auf vorgegebene spezielle Fragestellungen durchmustert und abgefragt werden.

### Beschreibung der Figuren

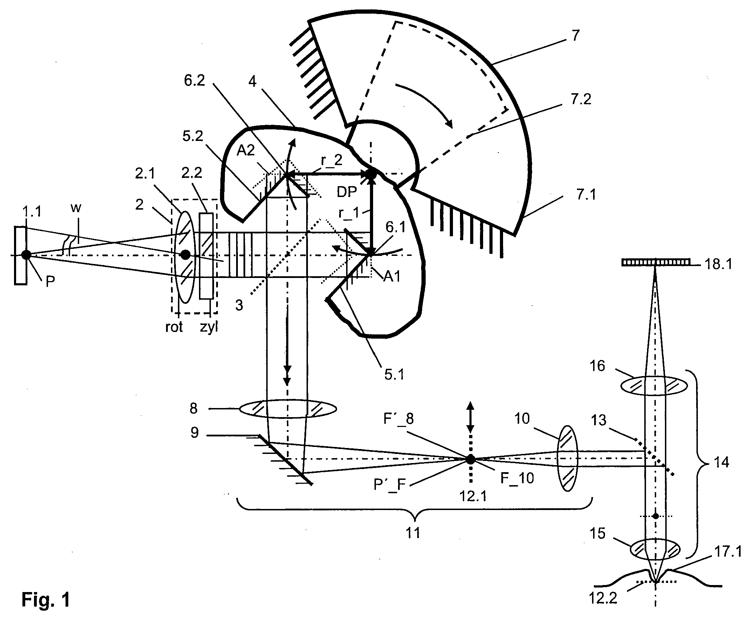

Die Erfindung wird nachfolgend am Beispiel bevorzugter Ausführungsformen anhand der Figuren 1 bis 25 und in 5 Ausführungsbeispielen ohne Figur beschrieben.

Unter Messstrahlung und Licht, auch im Sinne von Beleuchtung für ein FT-Spektrometer, wird in dieser Schrift stets die vom tiefen UV- über den VIS-, NIR-, MIR-, FIR- bis zum Terahertz-Bereich mittels FT-Spektroskopie zu analysierende elektromagnetische Strahlung verstanden.

Die Figur 1 stellt eine Anordnung des Zweistrahl-Interferometers für ein Bild-gebendes FT-Spektrometer dar, das hier für den sichtbaren (VIS) und den nahinfraroten (NIR) Bereich ausgelegt ist. Die hier eingesetzten Komponenten sind bis auf die Endreflektoren des Zweistrahl-Interferometers transmissiv. Die von einer länglichen Strahlungsquelle (1.1), welche spektral breitbandig im VIS- und NIR-Bereich ausgebildet ist, ausgehende Strahlung, auch die vom leuchtenden Punkt P, gelangt in eine refraktive, astigmatische Optik (2) mit einer ersten rotationssymmetrischen Optik-Komponente 2.1 und einer zweiten, dieser nachgeordneten Zylinder-Optik-Komponente 2.2 mit einer senkrecht zur Zeichenebene ausgerichteten Zylinder-Achse. Der Feldwinkel w beschreibt die laterale Ausdehnung der länglichen Strahlungsquelle (1). In der Zeichenebene entstehen von den Punkten der Strahlungsquelle (1.1) kollimierte Strahlenbüschel. In der Ebene senkrecht zur Zeichenebene, welche auch den Schwerstrahl des von der Strahlungsquelle (1.1) ausgehenden Bündels enthält, erfolgt eine Strahlenbündelformung von den Strahlenbüscheln, die von den Punkten der Strahlungsquelle (1.1) ausgehen, mit Fokussierung. Die Lage der Dachkante 6.1 definiert hier den Ort der Aperturfläche A1 und die Lage der Dachkante 6.2 definiert hier den Ort der Aperturfläche A2. Die Aperturflächen A1 und A2 des Zweistrahl-Interferometers enthalten sowohl jeweils die Dachkanten 6.1 und 6.2 und befinden sich zumindest näherungsweise auch jeweils senkrecht zu den Schwerstrahlen der einfallenden Strahlenbündel. Die Differenz der Radien der Dreharme zwischen jeweiliger Dachkante 6.1 und 6.2, hier mit r_1 und r_2 bezeichnet, darf im sichtbaren (VIS) und den nahinfraroten (NIR) dabei nur im Bereich weniger Mikrometer liegen. Allgemein wird dies jedoch stets von der kürzesten detektierten Wellenlänge der Strahlung im Interferometer bestimmt.

Numerische Korrekturen hinsichtlich eines im Feld variablen optischen Gangunterschieds durch Shear sind beim Auftreten von Shear-Streifen mit Bild-aufnehmenden Detektoren grundsätzlich möglich. Jedoch müssen die Shear-Streifen noch gut aufgelöst werden können, also der Modulationsgrad im detektierten Interferogramm noch hinreichend hoch sein. Bei Nichteinhaltung dieser Bedingung entstehen über der Rotation der Doppel-Dachkant-Reflektorgruppe 4 sich verändernde Shear-Streifen, siehe hierzu auch [3]. Im Extremfall kann der Interferenzkontrast dabei auch gegen null gehen, was für die FTS völlig inakzeptabel ist.

Die im Zweistrahl-Interferometer an der Strahlteilerbaugruppe 3 aufgeteilte elektromagnetische Strahlung gelangt auf eine rotierende Doppel-Dachkant-Reflektorgruppe 4, die um den Drehpunkt DP mit einer hier nicht dargestellten mechanischen hochpräzisen Kugellager-Drehlagerung für die Rotation von wenigen Altgrad im Teilbereich von 360° ausgebildet ist. Die Rotation der Doppel-Dachkant-Reflektorgruppe 4 dient zur Erzeugung des optischen Gangunterschieds x_g im Interferometer. Die Doppel-Dachkant-Reflektorgruppe 4 wird von einem Scheibenläufermotor 7 mit Stator 7.1 und Scheibenläufer 7.2 angetrieben, wobei am Scheibenläufermotor 7 ein elektrischer Antrieb mit einem Regelsystem zur Erzeugung einer vorbestimmten und konstanten ersten Ableitung des optischen Gangunterschieds x_g über der Zeit eingesetzt ist, das mit einem hier nicht dargestellten laser-interferometrischen Referenzsystem zur Gewinnung des aktuellen optischen Gangunterschieds x_g unter Nutzung der Laufwege der Referenzstrahlen über die beiden Dachkant-Reflektoren 5.1 und 5.2 gekoppelt ist.

Die rotierende Reflektorgruppe 4 besteht also aus zwei Dachkant-Reflektoren 5.1 und 5.2 mit den jeweiligen Dachkanten 6.1 und 6.2. Die an der Strahlteilerbaugruppe 3 aufgeteilte Strahlung wird an den beiden Dachkant-Reflektoren 5.1 und 5.2 reflektiert und es kommt an der Strahlteilerbaugruppe 3 wieder zur Vereinigung der elektromagnetischen Strahlung, die das Zweistrahl-Interferometer verlässt und auf das Fokussier-Objektiv 8 trifft. Dieses bildet gemeinsam mit dem Objektiv 10 und einem Umlenkspiegel die optische Transferstufe 11, in dessen zusammenfallenden Brennebenen von Zweistrahl-Interferenzen gleicher Neigung lokalisiert sind, sich ein Schlitzblendenraster 12.1 angeordnet ist und der Bildpunkt P'_F durch Fächerstrahlen gebildet wird. Der hintere Brennpunkt F'_8 des Fokussier Objektivs 8 und der vordere Brennpunkt F_10 des Objektivs 10 fallen zusammen. Über eine Einkoppel-Strahlteilerbaugruppe 11 gelangt die interferierende Strahlung in den Strahlengang einer hier schwach vergrößernden mikroskopischen Abbildungsstufe 14, bestehend aus dem schwach vergrößernden Objektiv 15 und dem Tubusobjektiv 16, auf das Auflicht-Objekt 17, wo Zweistrahl-Interferenzen gleicher Neigung entstehen, da die Auflicht-Objektebene und die Brennebene des Fokussier-Objektivs 8 optisch zumindest näherungsweise konjugiert sind.

Es entsteht auf dem Auflicht-Objekt 15 ein Interferenzbild, das auch einen oder mehrere Haidingerringe als Ausbildung der Interferenzen gleicher Neigung aufweisen kann. Ein Teil der interferierenden elektromagnetischen Strahlung wird je nach spektraler Beschaffenheit des lichtstreuenden Auflicht-Objekts 17 Wellenlängen abhängig von diesem absorbiert, gestreut und/oder reflektiert, wodurch die Interferenzerscheinung beeinflusst wird, da so in Abhängigkeit von der Wellenlänge oder Wellenzahl dann Intensitätsanteile der elektromagnetischen Strahlung im Interferenzbild fehlen. Das ist der bekannte Messeffekt.

Die mikroskopische Abbildungsstufe 14 bildet das aus der Wechselwirkung mit dem Auflicht-Objekt 17 resultierende Interferenzbild auf einen gerasterten Matrix-Detektor 18.1 für den VIS-und NIR-Bereich ab. Bei Rotation der Doppel-Reflektorgruppe 4, die zu einem Scan führt, entsteht mittels jedem Empfängerelement (Pixel) der gerasterten Matrix-Detektors 18.1 über der Zeit ein Interferogramm, das aus Intensitätswerten resultiert, die dem optischen Gangunterschied x_g zugeordnet wurden. Dabei besteht eine strenge Synchronisation des gerasterten Matrix-Detektors 18.1 zur Veränderung des optischen Gangunterschieds x_g des Zweistrahl-Interferometers, so dass jeweils ein Interferogramm I_n(x_g) von einem strahlenden Bildpunkt, der vom Auflicht-Objekt 17 stammt, von je einem detektierenden Pixel n des gerasterten Matrix-Detektors 18.1 in hoch-äquidistanten Abtast-Intervallen des optischen Gangunterschieds x_g gebildet wird.

Das hier nicht dargestellte Messsystem zur Bestimmung des optischen Gangunterschieds x_g des Zweistrahl-Interferometers ist als Laser-Interferometer mit einer stabilisierten Single-Mode-Laserdiode aufgebaut und nutzt für den interferometrischen Strahlengang sowohl die Strahlteilerbaugruppe 4 für die Messstrahlung als auch die Seitenbereiche der Dachkant-Reflektoren 5.1 und 5.2, so dass stets genau der optische Gangunterschied x_g gemessen wird, der auch für die Interferenz der Messstrahlung besteht, was auch bei temperaturbedingten Starrkörper-Verschiebungen der Interferometer-Komponenten gilt. Die Bildaufnahme wird zur Erzeugung des optischen Gangunterschieds x_g hochgenau synchronisiert, so dass ein Bilderstapel über dem optischen Gangunterschied x_g als Ergebnis eines Interferometer-Scans vorliegt. Die Änderung des optischen Gangunterschieds x_g zwischen zwei Bildaufhahmen betragt maximal den Wert der halben kürzesten Wellenlänge von Strahlung, die den Bildempfänger im Interferometer-Scan erreichen kann und zur Detektion kommt, um das Sampling-Theorem einzuhalten. Der Strahlengang für einen Weißlicht-Interferenz-Nullpunktgeber ist dem des Laser-Interferometers räumlich unmittelbar benachbart und dient zur Gewinnung des Startsignals bei der Aufnahme von Interferogrammen. Diese bei der Fourier-Transformations-Spektroskopie seit Jahrzehnten mit Erfolg angewandten Prinzipien sind dem kundigen Fachmann bestens bekannt.

Die FFT des Interferogramms eines Pixel n mittels eines hier nicht dargestellten Auswerte-Rechners 19 führt zur Berechnung eines Spektrums p_n(sigma) mit sigma als der Wellenzahl aus jedem Pixel n, das ein Interferogramm I_n(x_g) über dem optischen Gangunterschied x_g liefert, der durch hochgenaue Messung bereitgestellt und den Intensitätsdaten zugeordnet wird. Somit liegen nach der schnellen Fourier-Transformation (FFT) mittels Auswerte-Rechner die ortsaufgelösten Spektren p_n(sigma, x, y) mit sigma als der Wellenzahl und mit x und y als Lateralkoordinaten des Objekts vor. Der Vergleich mit einer Referenzprobe liefert dann nach Kalibrierung des Systems ortsaufgelöste, also bildgebende, spektrale Daten geringer Messunsicherheit vom Auflicht-Objekt 17 in Form eines Bilderstapels 20. Diese Zusammenhänge zur bildgebenden Fourier-Transformations-Spektroskopie sind dem kundigen Fachmann in der bildgebenden Spektroskopie bestens bekannt.

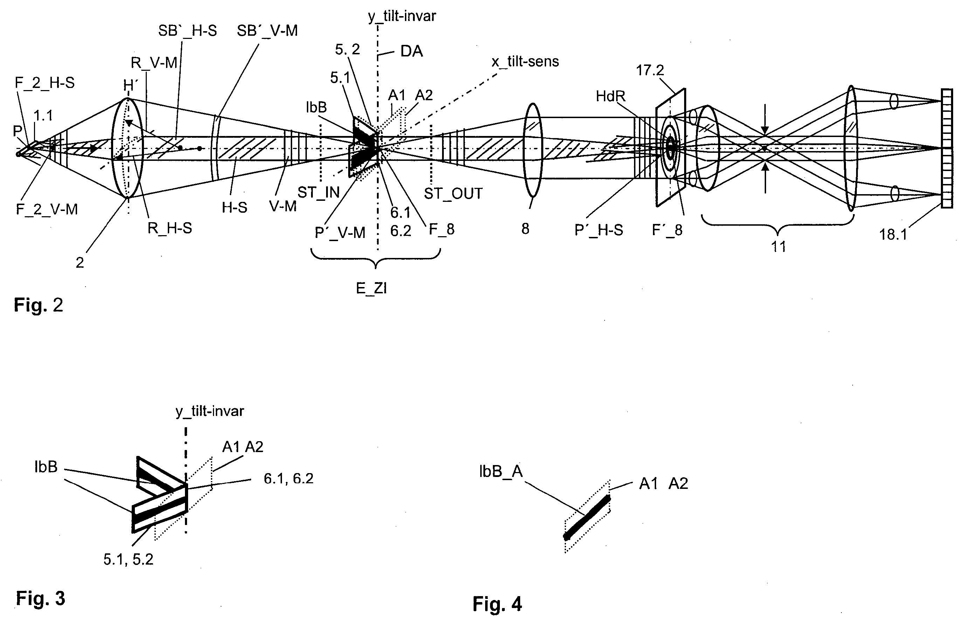

Die Figur 2 stellt den entfalteten Strahlengang einer Anordnung des Zweistrahl-Interferometers für ein Bild-gebendes FT-Spektrometer dar, das hier für den sichtbaren (VIS) und den nahinfraroten (NIR) Bereich ausgelegt ist. Die hier eingesetzten Komponenten sind bis auf die Dachkant-Reflektoren 5.1 und 5.2 des Zweistrahl-Interferometers transmissiv. Die von einer länglichen Strahlungsquelle (1.1) ausgehende Strahlung gelangt in ein refraktives, astigmatisches Objektiv 2, wobei die Brechkraft in der Schnittebene V-M signifikant größer als in der der Schnittebene H-S ist, was durch die symbolisch dargestellten Krümmungsradien unterschiedlichen Betrages R_V-M und R_H-S verdeutlicht wird. Auf dieser Strahlungsquelle 1.1 befindet sich auch zumindest näherungsweise der Brennpunkt F_2_H-S des refraktiven astigmatischen Objektivs 2 für die Schnittebene Ebene H-S, der mit dem Punkt P zusammenfällt. Die Fächerstrahlen in der V-M-Schnittebene werden nach Durchgang durch das refraktive astigmatische Objektiv 2 zu einem kollimierten Strahlenbüschel SB'_H-S transformiert. In den Positionen ST_IN und ST_OUT befinden sich im entfalteten Strahlengang die Strahlteilerflächen, die hier im entfalteten Strahlengang E_ZI des Zweistrahl-Interferometers ohne Wirkung dargestellt sind. Die Dachkant-Reflektoren 5.1 und 5.2 des Zweistrahl-Interferometers werden um die Drehachse gedreht, um den benötigten optischen Gangunterschied erzeugen zu können, was aus Figur 1 hervorgeht. Auf diesen befindet sich der längliche bestrahlte Bereich lbB_A in Aperturfläche, der durch die Strahlenbüschel nur eine sehr geringe Höhenausdehnung aufweist. Die Dachkanten 6.1 und 6.2 definieren hier die Achse y_tilt_invar, um die eine Drehung keine Kippung von Wellenfronten generiert. Dagegen erzeugt eine Kippung um die die Achse x_tilt_sens eine hier schädliche Kippung von Wellenfronten. Nach der Reflexion an den Dachkant-Reflektoren 5.1 und 5.2 werden die Strahlenbündel nach dem Passieren der Strahlteilerfläche vereinigt, wobei ST_OUT hier nur die Lage des Strahlteilerfläche anzeigt, verlassen das Zweistrahl-Interferometer und gelangen auf das Fokussier-Objektiv 8. In dessen Fokus entstehen die Interferenzen gleicher Neigung, auch als Haidinger-Ringe HdR bekannt. Das Durchlicht-Objekt 17.2 wird mit den interferierenden Strahlenbündeln bestrahlt und mittels Abbildungsstufe 11 erfolgt die Objektabbildung auf den gerasterter Matrix-Detektor 18.1, der speziell für den VIS-NIR-Bereich ausgelegt ist.

Die Figur 3 zeigt die Bestrahlung der Dachkant-Reflektoren 5.1 und 5.2. in einem länglichen bestrahlten Bereich lbB mit geringer Höhenausdehnung. Die Figur 4 zeigt den länglichen bestrahlten Bereich lbB_A in den Aperturflächen A1 und A2, welche sich durch die Dachkant-Reflektoren 5.1 und 5.2 ergeben, als Beispiel für Bestrahlung der Aperturfläche.

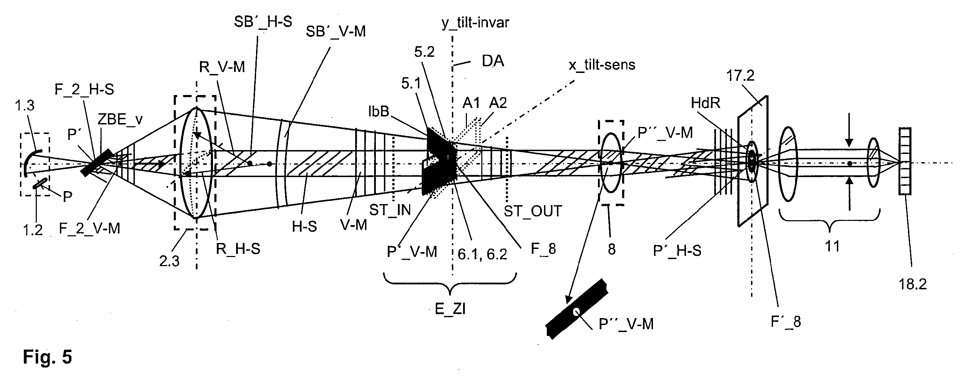

In der Figur 5 wird ein länglicher Globar 1.2, der im MIR-Bereich spektral breitbandig ist, mittels eines Rotations-Ellipsoids 1.3 etwa mehrfach vergrößert. Es folgt eine astigmatische Abbildungsstufe 2.3, welche als Toroidspiegel mit zwei Brennweiten ausgebildet ist, was im entfalteten Strahlengang hier jedoch nicht sichtbar ist. In der Schnittebene H-S ergibt sich ein kollimierten Strahlenbüschel SB'_H-S. Dagegen erfolgt in der Schnittebene V-M mittels Strahlenbüschel SB"_V-M mittels der astigmatischen Abbildungsstufe 2.3 zumindest näherungsweise eine Fokussierung in die Pupille des Fokussier-Objektivs 8, wodurch dort der Fokusspunkt P"_V-M gebildet wird. Somit besitzt das Fokussier-Objektiv 8 nur eine vergleichsweise geringe Bauhöhe, was eine gute Voraussetzung für die Stapelung von Kanälen in einer parallelisierten Anlage darstellt. So kann mittels Fokussier-Objektiv 8 ein Weichteil-Objekt mit Interferenz-Strahlung beaufschlagt werden, wodurch es zu gestreuter Strahlung kommt, die erfasst wird. Hier ist ein lichtstreuendes Durchlicht-Objekt 17.2 dargestellt.

Wenn der Spektralbereich im mittleren Infrarot adressiert werden soll, kann durch den Einsatz von Kantensperrfiltern im optischen System der kürzerwellige Spektralbereich mit Vorteil gesperrt werden und somit auch nicht vom gerasterten MIR-Detektor erfasst werden. Dann ist ein - hinsichtlich der Abtastschrittweite - deutlich gröberes Sampling der Interferogramme im Vergleich zum kürzerwelligen Spektralbereich möglich, wodurch ist ein signifikant schnelleres Gewinnen von Interferogramm-Daten für die Spektrenberechnung mittels FFT möglich ist.

Zu Figur 5 wird hier ein zusätzliches Ausführungsbeispiel 1 ohne Figur gegeben: In der Zwischenbildebene ZBE_v ist nach dem Rotations-Ellipsoid 1.3 ein Liniengitter mit senkrecht zum länglichen bestrahlten Bereich angeordneten Linien angeordnet. Dies führt zu einer strukturierten Beleuchtung des Objekts. Auf dem Mikro-Bolometer-Array18.2 ist zur Abtastung eine Gold-Gegen-Streifen-Struktur aufgebracht. Durch synchronisierte Bewegung von Liniengitter und Mikro-Bolometer-Array 18.2, die vor jedem Interferometer-Scan erfolgt, ist eine kontraststeigernde hyperspektrale Erfassung des lichtstreuenden Durchlicht-Objekts 17.2 möglich.

Die Figur 6 verdeutlicht die Zielstellung. Es geht in dieser Schrift nicht vordergründig um die Erhöhung des Lichtleitwertes groß_lambda in einem Interferometer, sondern um die Erhöhung der Robustheit durch die Verringerung der Ausdehnung der Aperturfläche in einer kritischen Dimension, hier die vertikale Richtung, wenn um die horizontale Achse Kippung besteht.

Da die Aperturflächen in beiden Fällen im Detail A und im Detail B etwa gleich groß sind, sind bei etwa gleichem Raumwinkel auch die Lichtleitwerte als Produkt von Aperturfläche und Raumwinkel im Detail A und im Detail B etwa gleich. Aber die "Längsvariante" in Detail B ist weniger Tilt-sensitiv, wenn um eine horizontale Achse Kippung (Tilt) auftritt. Als Vorteil an Robustheit gegenüber Tilt gibt der Quotient aus dem Seitenverhältnis des länglichen Rechtecks hier einen Hinweis. Der Lichtleitwert ist in beiden Fällen hier etwa gleich.

Die Figur 7 zeigt noch einmal einen Astigmaten als Kombination aus rotationssymmetrischer Optik-Komponente mit positiver Brechkraft, also hier eine Sammellinse, und einer Zylinder-Optik-Komponente, hier eine refraktive Zylinderlinse positiver Brechkraft.

In der Figur 8 ist der Astigmat als Kombination eines Off-axis-Rotations-Paraboloids 2.5 und eines Off-axis-Zylinder-Paraboloids 2.6, beide jeweils mit positiver Brechkraft, dargestellt. Dabei ist der Off-axis-Zylinder-Paraboloid 2.6. mit Freiform-Korrektur ausgebildet.

Figur 9 stellt ein Array von länglichen Strahlungsquellen 1.5 mit einem Linien-Array 2.7 mit astigmatischen, fokussierenden Objektiven 2, hier mit refraktiven Komponenten, dar. Mit dem Array von länglichen Strahlungsquellen 1.5 kann die Größenordnung 1000 W elektrische Gesamtleistung realisiert werden, wenn 32 einzelne längliche Strahlungsquellen angeordnet sind. So kann eine parallelisierte Bestrahlung eines Drehreflektor-Turmes erfolgen. Dieser kann als Einseiten-, Zwei-Seiten-Drehreflektor-Turm mit Dachkant-Spiegeln 22 oder Vierseiten-Drehreflektor-Turm mit Dachkant-Spiegeln 23.

Weiterhin ist in einem Ausführungsbeispiel 2 eine Bestrahlung eines Drehreflektor-Turms mit Tripelreflektoren 24.1 realisiert, wobei die Tripelreflektor-Gruppe jeweils aus einer Dachkant-Spiegel und zwei Planspiegeln besteht.

Andererseits wird in einem Ausführungsbeispiel 3 ein Drehreflektor-Turm mit Tripelreflektoren 24.2 bestrahlt, bei dem die Tripelreflektor-Gruppe jeweils aus zwei Dachkant-Spiegeln und einem Planspiegel besteht

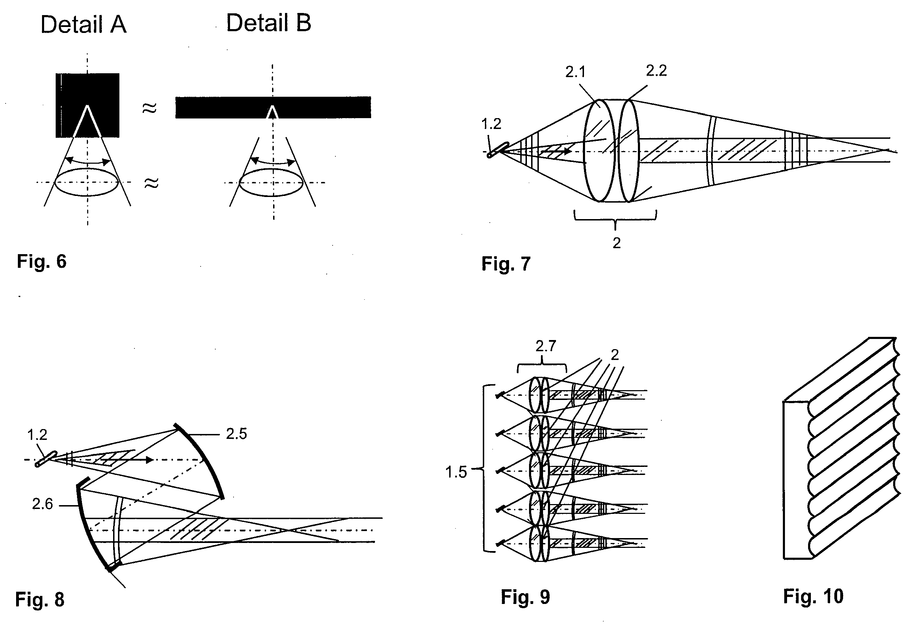

Figur 10 stellt ein Zylinderspiegel-Array 2.8 als Komponente einer astigmatischen Spiegel-Optik dar, die mit einem Off-axis-Rotations-Paraboloid 2.5 kombiniert wird.

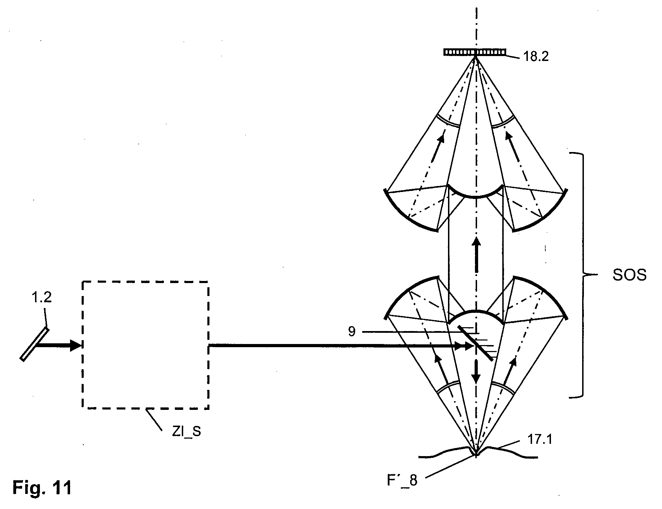

Die Figur 11 zeigt ein System mit einer nachgeordneten mikroskopischen Abbildungsstufe mit Schwarzschild-Objektiven zur Bestrahlung eines Auflicht-Objekts 17.1 mit nachfolgender Abbildung auf ein flächiges Mikro-Bolometer-Array18.2.

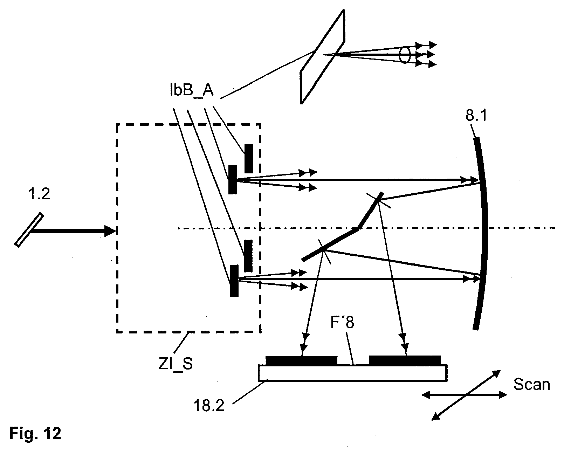

In der Figur 12 werden mittels Fokussier-Objektiv in Spiegelausbildung 8.1 zwei Kanäle am Ausgang eines Zweistrahl-Interferometers zusammengeführt und gemeinsam einem x- und y-verschiebbaren flächigen Mikro-Bolometer-Array 18.2 zugeordnet. Der x- und y- Scan dient zur Generierung eines vollflächigen hyperspektralen Bildes. Es ist von Vorteil, dass moderne Mikro-Bolometer vergleichsweise massearm und rüttelfest sind.

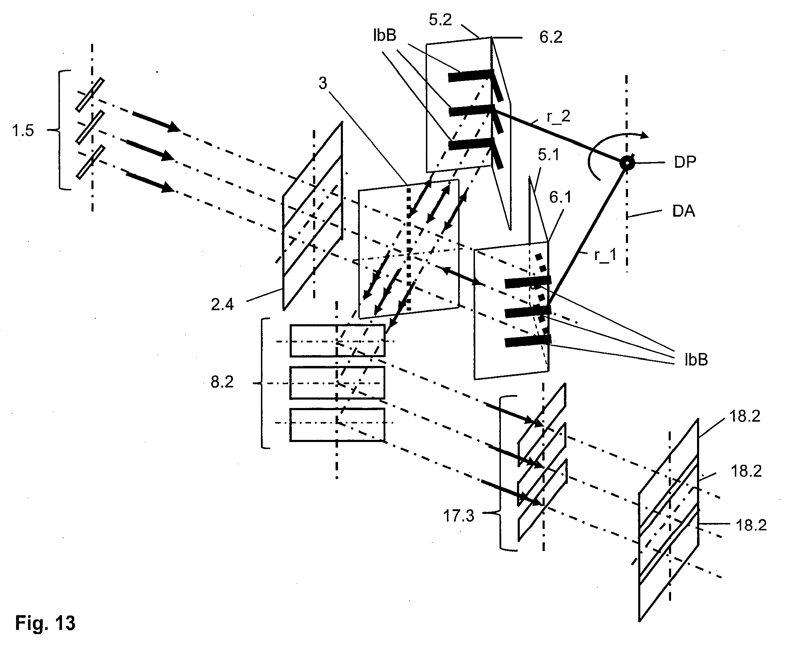

Die Figur 13 zeigt ein multikanaliges hyperspektrales System, wobei hier nur 3 Kanäle wegen der Beibehaltung der Anschaulichkeit dargestellt sind. Insgesamt sind die Dachkant-Reflektoren 5.1 und 5.2 vergleichsweise hoch ausgebildet. Das reduziert das Massenträgheitsmoment der Drehreflektor-Gruppe und verbessert die Dynamik bei der Rotationsbewegung.

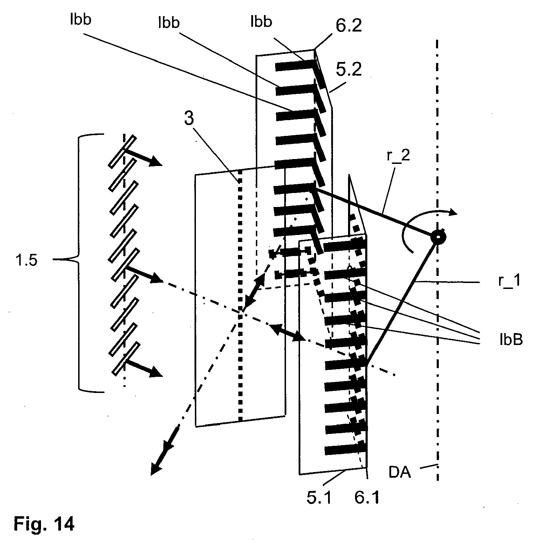

Die Figur 14 verdeutlicht das Potenzial dieses Stapelansatzes mit insgesamt eher flacher Bauweise für die Einzelkanäle. Hierbei geht es um eine sehr stark parallelisierte Detektion. Es werden also viele schmale Felder in der Höhe gebildet, die mit einem Linien-Spiegel-Array 8.2 mit fokussierenden Elementen, hier flache, gestapelte Off-axis-Rotations-Paraboloide, am Interferometer-Ausgang erfasst werden. Wichtig ist hierbei, dass die einzelnen länglichen bestrahlten Bereiche lbB und ihre zugehörigen Bündel bis zur Detektion und auch dort lateral getrennt bleiben, damit eine ortsaufgelöste Kippfehler-Korrektur, das bedeutet eine ortsaufgelöste Korrektur des optischen Gangunterschieds durchgeführt werden kann, die notwendig ist, wenn die Welle des Reflektor-Gruppe kontinuierlich in der Drehbewegung etwas kippt, beispielsweise um den Betrag 10 Winkel-Sekunden. Dies beeinflusst im mittleren Infrarot-Bereich noch nicht signifikant den Modulationsgrad in den detektierten Interferogrammen, kann aber schon die Wellenzahlgenauigkeit im errechneten Spektrum beeinflussen.

In dieser Anordnung werden 24 Kanäle angeordnet, jeder 1 Zoll (25,4 mm) hoch, welcher nur ein einziges Messsystem für den globalen optischen Gangunterschied und ein einziger motorischer Antrieb zugeordnet sind. Durch die hohen Dachkant-Reflektoren ist das Massenträgheitsmoment der Doppel- Dachkant-Reflektor-Gruppe relativ klein. Also ist eine vergleichsweise schnelle Beschleunigung und Abbremsung möglich. Es erfolgt hierbei eine vielfache Rotation im Teilbereich von wenigen Altgrad, um eine hohe Akkumulationszahl erreichen zu können. Dies ist ein Ansatz bei der automatisierten und hoch-parallelisierten Probenanalyse in Biotechnologie, Medizin und chemischen Produktion mit sehr hohem Probendurchsatz pro Zeiteinheit.

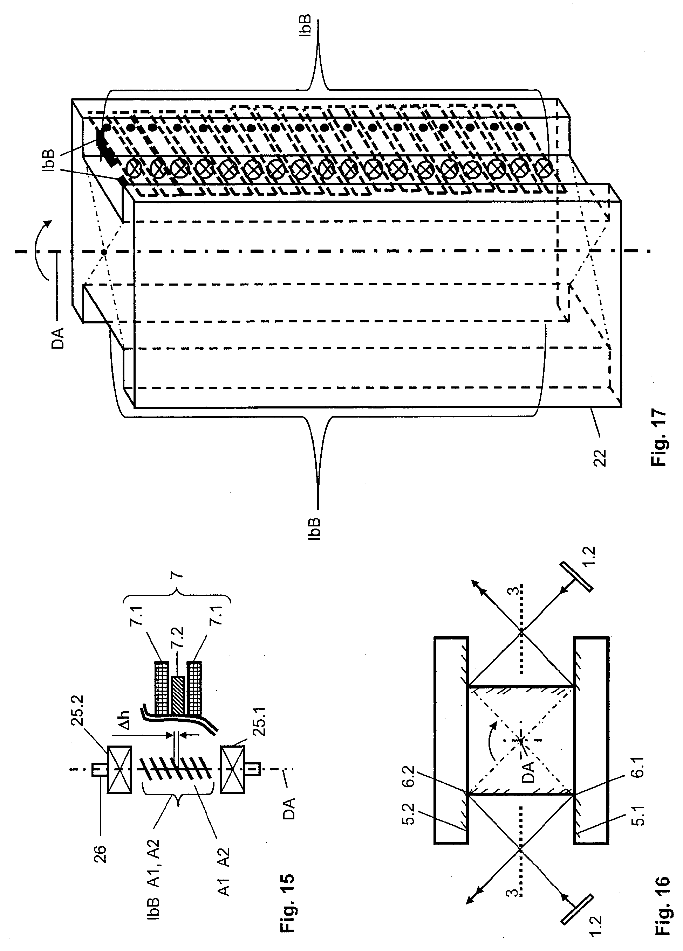

Figur 15 stellt den motorischen Antrieb für die rotierende Doppel-Dachkant-Reflektorgruppe 4 dar, der als Scheibenläufermotor 7 ausgebildet ist und aus Stator 7.1 und Scheibenläufer 7.2 besteht. Über der Höhe Δh, die jeweils der Höhe des länglichen bestrahlten Bereiches lbB entspricht, darf die Kippung um die Achse x_tilt-sens der Doppel-Dachkant-Reflektorgruppe 4 maximal ein Zehntel der kürzesten Wellenlänge im Spektrum betragen, damit der Modulationsgrad im Interferogramm hoch bleibt. Die Antriebswelle für Drehreflektor-Gruppe 26 ist in bewährter Weise mittels zwei spielfreier, verspannter Präzisions-Kugellager 25.1 und 25.2 gelagert. In einem Ausführungsbeispiel 4 ohne Figur ist die Antriebswelle für Drehreflektor-Gruppe 26 dreifach gelagert, was bei einer langen Antriebswelle für Drehreflektor-Gruppe 26 von Vorteil für die Interferometer-Anordnung ist. Es wird auf eine hohe Torsionssteifigkeit der Anordnung geachtet.

Die Anordnung gemäß Figur 16 stellt die Draufsicht auf eine Stapel-Anordnung gemäß Figur 17 dar. Diese wird zweiseitig betrieben, um die Anzahl der simultan zu nutzenden spektralen bildgebenden Kanäle weiter zu erhöhen.

Die Stapel-Anordnung gemäß Figur 17 zeigt die Möglichkeit, einen Zwei-Seiten-Drehreflektor-Turm 22 mit Dachkant-Spiegeln einzusetzen. Es werden in der Höhe mehrere Strahlteiler übereinander positioniert. Jeder ist mit seiner eigenen mechanischen Fassung ausgebildet, da es sich als wenig praktikabel erwiesen hat, sehr lange Strahlteiler in Rechteckform aufzubauen. Die Rasterkonstante für diese Zwei-Seiten-Drehreflektor-Turm 22 mit Dachkant-Spiegeln beträgt 1 Zoll, so dass sich eine genutzte Gesamtlänge, hier in Höhenrichtung, von 16 Zoll ergibt.

Jeder Strahlengang weist dabei am Ausgang des Zweistrahl-Interferometers sein eigenes zugeordnetes Fokussier-Objektiv 8 mit eigener optischer Achse auf, damit die elektromagnetische Strahlung aus den adressierten Strahlengängen und damit auch aus den Durchlicht-Objekten 17.2 bei der Detektion der Interferogramme lateral sicher getrennt werden kann. Dagegen sind die Strahlteiler im Zweistrahl-Interferometer beispielsweise jeweils zwei Strahlengängen gleichzeitig zugeordnet, also diese lateral überdecken, so dass nur 8 Strahlteiler mit jeweils 2 Zoll Ausdehnung in Richtung der Achse der drehenden Welle zum Einsatz kommen.

Es kommen 16 gerasterte flächige Mikro-Bolometer-Arrays 18.2 als gerasterte Detektoren zum Einsatz. Ein Zwei-Seiten-Drehreflektor-Turm 22 mit Dachkant-Spiegeln wird in einer Abdeckhaube mit optimierten Öffnungen für die Strahlenbündel mit Präzisions-Thermostatisierung betrieben. Auf die Darstellung der Komponenten zur Positionierung und zum Transport der Objekte sowie die Magazine für die Objekte wurde hier völlig verzichtet.

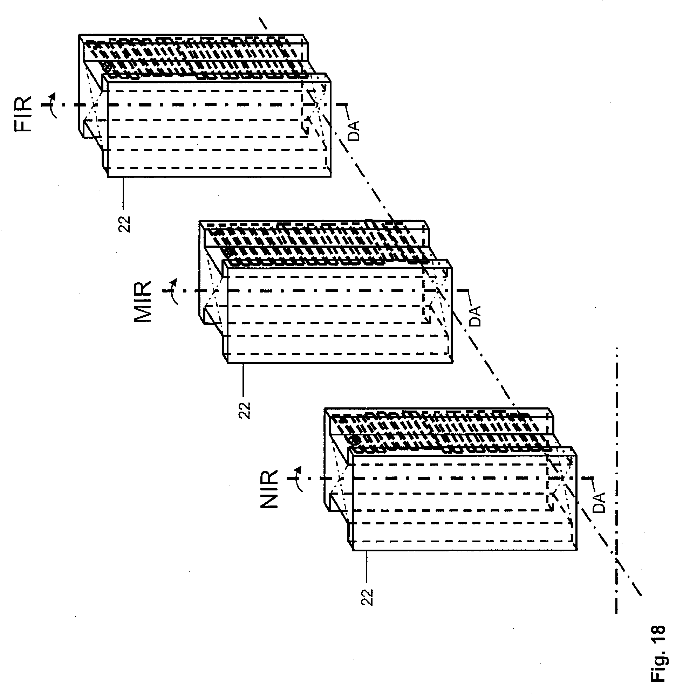

Die Figur 18 stellt die Anordnung von drei voneinander völlig unabhängigen Zwei-Seiten-Drehreflektor-Türmen 22 mit Dachkant-Spiegeln für die Anwendung in einem medizinischen Analyse-Zentrum für die drei einzelne Spektralbereiche NIR, MIR und FIR dar.

In einem Ausführungsbeispiel 5 ohne Figur ist ein Zwei-Seiten-Drehreflektor-Turm 22 für ein kleineres Analyse-Zentrum in drei Abschnitten in der Höhe aufgeteilt, welche für drei einzelne Spektralbereiche im NIR, MIR und FIR ausgebildet sind. Diese Aufteilung nach Anzahl der spektralen bildgebenden Messkanäle kann - je nach Probenaufkommen und typischer Proben-Messzeit - auch in sehr ungleichem Maße in einem System mit Drehreflektor-Turm 22 erfolgen.

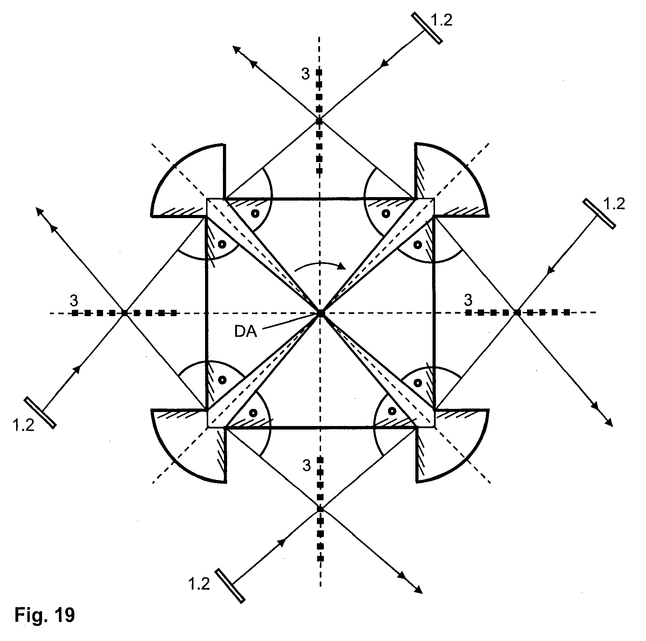

In der Figur 19 ist die Draufsicht auf einen Vierseiten-Drehreflektor-Turm 23 dargestellt. Aus Gründen der mechanischen Stabilität, damit Material für Konstruktion vorhanden ist, wurde speziell hierzu eine Interferometer-Anordnung mit einem Winkel größer als 90° zwischen den beiden Interferometer-Armen, hier in der Figur 19 näherungsweise 100°, gewählt. Damit beträgt der Einfallswinkel auf die Strahlteiler 3 hier jeweils näherungsweise 40°. Die leicht asymmetrische Anordnung der Dachkanten zum Schwerstrahl wird hier mit Vorteil eines einzigen durchgehenden Planspiegels in der Reflektor-Baugruppe in Kauf genommen.

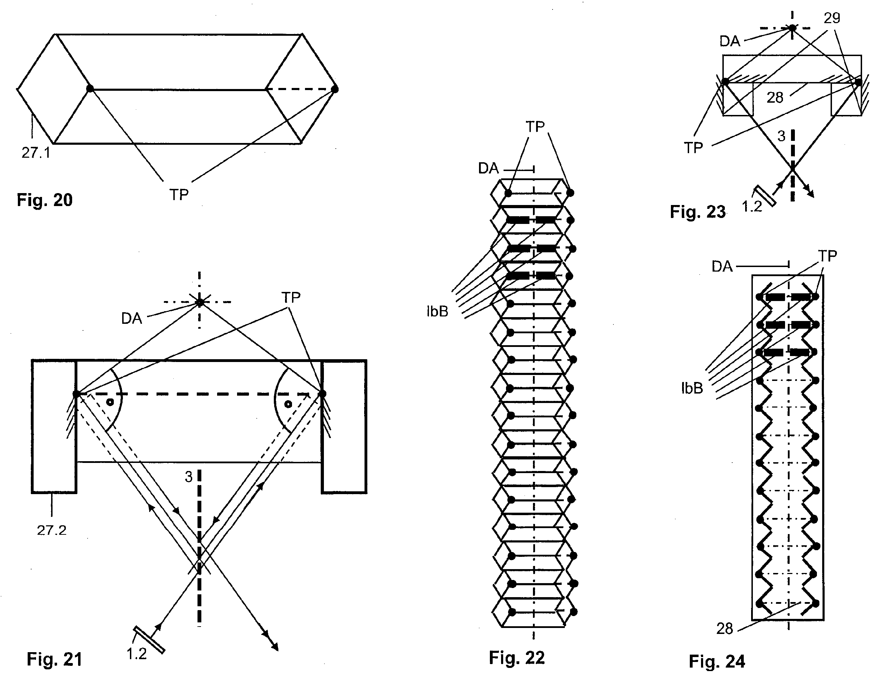

Der Vollständigkeit halber ist auch eine Stapel-Variante für ein hochparallelisiertes Messsystem, die ebenfalls der hochgradigen Parallelisierung der spektralen bildgebenden Kanäle dient, mit Tripel-Reflektoren als Baugruppe minimaler Komplexität in Figur 20 dargestellt. Es ist eine Anordnung 27.1 mit zwei Tripelpunkten TP als mathematisches Modell gezeigt. Diese wird auch als Full-cube-Reflektor bezeichnet und weist jeweils genau zwei Tripelpunkte TP auf. Dieser Full-cube-Reflektor ist hierbei mit einer Dachkanten und zwei Planspiegeln als Basiselemente aufgebaut.

Die Figur 21 stellt hierzu die Struktur eines Zweistrahl-Interferometers mit der Rotation eines Full-cube-Reflektors 27.2 in reale Baugruppe dar. Wegen der Angleichung der jeweiligen Einfallswinkel auf die drei Spiegelflächen einer Raumecke empfiehlt sich hier ein moderates Abgehen von der 90°-Anordnung des Michelson-Interferometers. Der sich so ergebende Winkel zwischen den Schwerstrahlen in den beiden Interferometer-Armen liegt deutlich unter 90°.

Zur Interferometer-Sensor- und Rechner-gesteuerten Montage mittels Bild gebender Phasenschiebe-Interferometrie werden in die beiden parallelen planen Außenspiegel jeweils vormontierte 90°-Präzisions-Dachkantreflektoren eingesetzt. Dies ist beim Stand der o. g. Montagetechnik für den kundigen Fachmann auch in der für die Interferometrie im mittleren Infrarot-Bereich geforderten Winkel-Genauigkeit gut machbar.

Die Figur 22 stellt eine Stapel-Variante für ein hochparallelisiertes Messsystem mittels Full-cube-Reflektoren gemäß Ausbildung 27.1 dar. Auch diese Anordnung weist jeweils genau zwei Tripelpunkte TP auf. Von Vorteil ist der in der Höhe hier ungeteilt durchgehende Planspiegel.

Die Figur 23 stellt eine Doppel-Tripelanordnung mit zwei Dachkanten 29, die auf einem durchgehenden Planspiegel 28 sitzen, dar Auch diese Anordnung ist mittels Interferometer-Sensor- und Rechner-gesteuerten Montage mittels Bild gebender Phasenschiebe-Interferometrie in der benötigten Genauigkeit durch den kundigen Fachmann herstellbar.

Die Figur 24 zeigt die Ausbildung eines Drehreflektor-Turms 24.2 mit Tripelreflektor-Gruppen, die jeweils aus zwei Dachkantreflektoren 29 und einem durchgehenden Planspiegel 28 bestehen. Ein über die volle Höhe durchgehender Planspiegel großer Dicke und aus Material geringster Temperaturausdehnung stellt einen großen Vorteil hinsichtlich der zu erbringenden Genauigkeit und Langzeitstabilität dar.

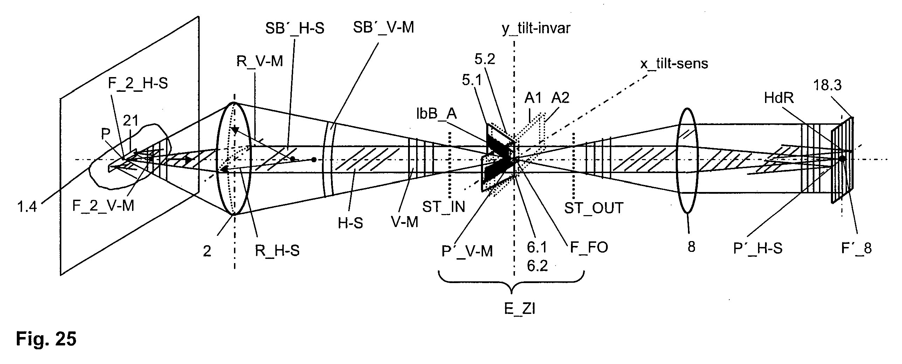

Die Figur 25 zeigt eine selbst strahlende Quelle elektromagnetischer Strahlung 1.4, bei der nur ein Spalt durch die Spaltblende 21 freigegeben ist. Dieser tastet die selbst strahlende Quelle elektromagnetischer Strahlung 1.4 ab. Auf dem gerasterten Zeilendetektor 18.3 für den mittleren Infrarot-Bereich und mit Detektorelementen großer Höhe entsteht die Abbildung in y-Richtung verschmiert, in x-Richtung dagegen scharf. Zur Gewinnung der flächigen Bildinformation wird zwischen Spaltblende 21 und selbst strahlender Quelle elektromagnetischer Strahlung 1.4 eine Relativbewegung nach jedem Interferometer-Scan durchgeführt. Zur weiteren Beschreibung des Abbildungsstrahlenganges siehe auch zu Figur 2.

**Bezugszeichenliste**

| **Bezugszeichen** | **Bezeichnung** |
|---|---|
| 1.1 | Längliche Strahlungsquelle, spektral breitbandig im VIS- und NIR-Bereich |
| 1.2 | länglicher Globar, spektral breitbandig im MIR- und FIR-Bereich |
| 1.3 | Rotations-Ellipsoid als Reflektorspiegel der Globar-Strahlungsquelle |
| 1.4 | selbst strahlende Quelle oder strahlendes Bild einer Strahlungsquelle elektromagnetischer Strahlung |
| 1.5 | Array von länglichen Strahlungsquellen |
| 2 | refraktives astigmatisches Objektiv, auch Symbol für astigmatisches Objektiv beliebiger Bauart |
| 2.1 | rotationssymmetrische Optik-Komponente mit positiver Brechkraft |
| 2.2 | Zylinder-Optik-Komponente |
| 2.3 | Toroid-Spiegel, astigmatisches Spiegelobjektiv, hier nur symbolisch dargestellt |
| 2.4 | Linien-Array mit astigmatischen, fokussierenden Elementen, hier Toroide |
| 2.5 | Off axis-Rotations-Paraboloid |
| 2.6 | Off-axis-Zylinder-Paraboloid |
| 2.7 | Linien-Array mit astigmatischen, fokussierenden Objektiven 2, hier mit refraktiven Komponenten |
| 2.8 | Zylinderspiegel-Array |
| 3 | Strahlteilerbaugruppe |
| 4 | rotierende Doppel-Dachkant-Reflektorgruppe |
| 5.1 | erster Dachkant-Reflektor |
| 5.2 | zweiter Dachkant-Reflektor |
| 6.1 | erste Dachkante |
| 6.2 | zweite Dachkante |
| 7 | Scheibenläufermotor |
| 7.1 | Stator |
| 7.2 | Scheibenläufer |
| 8 | Fokussier-Objektiv |
| 8.1 | Fokussier-Objektiv in Spiegelausbildung |
| 8.2 | Linien-Spiegel-Array mit fokussierenden Elementen, hier flache, gestapelte Off-axis-Rotations-Paraboloide |
| 9 | Umlenkspiegel |
| 10 | Objektiv |
| 11 | optische Transferstufe, Abbildungsstufe |
| 12.1 | Schlitzblendenraster |
| 12.2 | Bild des Schlitzblendenrasters |
| 13 | Einkoppel-Strahlteilerbaugruppe |
| 14 | schwach vergrößernde mikroskopische Abbildungsstufe |
| 15 | schwach vergrößerndes Objektiv |
| 16 | Tubusobjektiv |
| 17.1 | lichtstreuendes Auflicht-Objekt |
| 17.2 | lichtstreuendes Durchlicht-Objekt |
| 17.3 | Array von lichtstreuenden Durchlicht-Objekten |
| 18.1 | gerasterter Matrix-Detektor, speziell für den VIS-NIR-Bereich ausgelegt |
| 18.2 | flächiges Mikro-Bolometer-Array |
| 18.3 | gerasterter Zeilendetektor für den mittleren Infrarot-Bereich |
| 19 | Auswerterechner |
| 20 | Bilderstapel |
| 21 | Spaltblende |
| 22 | Zwei-Seiten-Drehreflektor-Turm mit Dachkant-Spiegeln |
| 23 | Vierseiten-Drehreflektor-Turm mit Dachkant-Spiegeln |
| 24.1 | Drehreflektor-Turm mit Tripelreflektoren, Tripelreflektor-Gruppe bestehend jeweils aus einer Dachkant-Spiegel und zwei Planspiegeln |
| 24.2 | Drehreflektor-Turm mit Tripelreflektoren, Tripelreflektor-Gruppe bestehend jeweils aus zwei Dachkant-Spiegeln und einem Planspiegel |
| 25.1, 25.2 | spielfreies verspanntes Präzisions-Kugellager |
| 26 | Antriebswelle für Drehreflektor-Gruppe |
| 27.1 | Full-cube-Reflektor mit zwei Tripelpunkten TP als mathematisches Modell |
| 27.2 | Full-cube-Reflektor mit zwei Tripelpunkten TP als reale Baugruppe |
| 28 | durchgehender Planspiegel |
| 29 | Dachkantreflektor, jeweils aufsitzend auf durchgehendem Planspiegel 28 |
| A, A1, A2 | Aperturflächen |
| DA | Drehachse |
| DP | Drehpunkt |
| E_ZI | entfaltetes Zweistrahl-Interferometer |
| FFT | schnelle Fourier-Transformation |
| H-S | horizontale Schnittebene |
| HdR | Haidinger-Ringe |
| lbB | länglicher bestrahlter Bereich |
| lbB_A | länglicher bestrahlter Bereich in Aperturfläche |
| P | leuchtender Punkt auf der Strahlungsquelle auf der optischen Achse der nachfolgenden Optik |
| P' | durch Strahlenbüschel SB_H-S in der Schnittebene V-M erzeugte Fokuspunkte |
| P" | durch Strahlenbüschel SB_H-S in der Schnittebene V-M erzeugte Fokuspunkte |
| SB_H-S | vom Punkt P der Strahlungsquelle (1.1) ausgehendes Strahlenbüschel in der Schnittebene H-S |
| SB'_H-S | kollimiertes Strahlenbüschel in der Schnittebene H-S |
| SB_V-M | vom Punkt P der Strahlungsquelle (1.1) ausgehendes Strahlenbüschel in der Schnittebene V-M |
| SB'_V-M | Fokus-generierendes Strahlenbüschel in der Schnittebene V-M |
| SOS | Schwarzschild-Objektiv-System |
| ST_IN | eingangsseitige Lage der Strahlteilerfläche im entfalteten Strahlengang |
| ST_OUT | ausgangsseitige Lage der Strahlteilerfläche im entfalteten Strahlengang |
| TP | Tripelpunkt oder Raumeckenpunkt |
| V_A | Verhältnis von maximaler zu minimaler Ausdehnung der Apertur |
| V-M | Vertikale Schnittebene |
| ZBE_v | Zwischenbildebene für die Strahlungsquelle vor dem Interferometer |
| ZI_S | Zweistrahl-Interferometer-System |

## Patentansprüche

1. Verfahren zur Fourier-Transformations-Spektroskopie umfassend:
- Generieren und Detektieren zumindest eines Interferogramms mittels eines Zweistrahl-Interferometers; und
- Berechnung der Fourier-Transformation des zumindest einen über einem optischen Gangunterschied x_g des Zweistrahl-Interferometers detektierten Interferogramms l_x_g, um aus diesem ein Spektrum zu erhalten,
wobei das Zweistrahl-Interferometer folgende Komponenten aufweist:
- eine multispektrale Strahlungsquelle (1.1, 1.2, 1.4, 1.5);
- der Strahlungsquelle (1.1, 1.2, 1.4, 1.5) nachgeordnete optische Mittel (2, 2.1, 2.2, 2.3, 2.4, 2.5, 2.6, 2.7, 2.8) zur Bündelformung einer von der Strahlungsquelle ausgehenden elektromagnetischen Strahlung;
- mindestens eine Strahlteilersystem (3) zur Amplitudenteilung der elektromagnetischen Strahlung;
- je einen Endreflektor in jedem der beiden Interferometerarme mit je einer Interferometer-Aperturfläche (A1, A2), wobei mindestens ein Endreflektor (5.1, 5.2) zur Erzeugung des optischen Gangunterschieds x_g motorisch beweglich ausgebildet ist, wobei
- - die Endreflektoren derart mit jeweils partieller Retro-Reflexions-Eigenschaft ausgebildet sind, dass sie jeweils in einer Ebene retro-reflektierend sind und in einer dazu senkrechten Ebene die Reflexionswirkung eines Planspiegels aufweisen, wodurch jeder Endreflektor eine Achse y_tilt-invar zumindest näherungsweise in deren Aperturfläche und zumindest näherungsweise senkrecht zum Schwerstrahl des Strahlenbündels derart aufweist, dass die retro-reflektierende Wirkung den Einfluss einer Kippung um die Achse y_tilt-invar auf die Interferenzerscheinung am Ausgang des Interferometers zumindest näherungsweise unterdrückt; oder
- - die Endreflektoren in Planspiegelform ausgebildet sind und für jeden Endreflektor jeweils ein diesen Endreflektor haltendes Schiebeglied auf je einem Präzisions-Führungssystem mit einer Achse y_very-small-tilt desselben angeordnet ist, wobei die Achse y_very-small-tilt rechtwinklig zur Schieberichtung des Präzisions-Führungssystems ist und wobei Verkippungen des Präzisions-Führungssystem um die Achse y_very-small-tilt geringer sind als um eine zur Achse y_very-small-tilt senkrechten Quer-Achse x small-tilt;
- mindestens ein Fokussier-Objektiv am Ausgang des Zweistrahl-Interferometers mit dessen in Strahlrichtung nachgeordneter Brennebene F'_8;
- mindestens einen gerasterten Empfänger (18.1, 18.2, 18.3) elektromagnetischer Strahlung, welcher für eine vielfache Auslesung über der Zeit t zur zeitseriellen Detektion interferierender elektromagnetischer Strahlung vom Objekt ausgelegt ist; und
- ein Messsystem zum Bestimmen des aktuellen optischen Gangunterschieds x_g des Zweistrahl-Interferometers über der Zeit t bei der Bewegung zumindest eines der Endreflektoren,
wobei im Zweistrahl-Interferometer eine Schnittebene V-M besteht, die parallel zur Achse y_tilt-invar bzw. zur Achse y_very-small-tilt ist und den Schwerstrahl (SST) des Strahlenbündels des Interferometers enthält, und
wobei mit den optischen Mitteln (2, 2.1, 2.2, 2.3, 2.4, 2.5, 2.6, 2.7, 2.8) zur Bündelformung eine Bestrahlung mindestens eines länglichen Bereichs (lbB_A), dessen Verhältnis von Längsausdehnung zu Querausdehnung mindestens 1,2 beträgt, in den beiden Interferometer-Aperturflächen (A1, A2) mit Längsausdehnung des bestrahlten länglichen Bereichs (lbB_A) im Wesentlichen senkrecht zur Schnittebene V-M durchgeführt wird.

2. Verfahren nach Anspruch 1,
wobei mittels des Zweistrahl-Interferometers eine Vielzahl von Interferogrammen gleichzeitig generiert und detektiert werden; und/oder
wobei das Zweistrahl-Interferometer als Interferometer-Turm mit einer Vielzahl von entlang einer Turmhöhenachse angeordneten Interferometer-Zellen ausgebildet ist, wobei jeder optische Mittel (2, 2.1, 2.2, 2.3, 2.4, 2.5, 2.6, 2.7, 2.8) zur Bestrahlung eines länglichen Bereiches (lbB_A) in den beiden Interferometer-Aperturflächen (A1, A2), mindestens ein Fokussier-Objektiv (8) und mindestens ein Detektor (18.1, 18.2, 18.3) zugeordnet sind.

3. Verfahren nach Anspruch 1 oder 2, wobei die multispektrale Strahlungsquelle (1.1, 1.2, 1.4, 1.5) umfasst:
- mindestens eine multispektrale oder quasi-multispektrale Quelle elektromagnetischer Strahlung (1.1, 1.2, 1.4, 1.5) auch in Array-Form - im Weiteren jeweils als Strahlungsquelle bezeichnet - zur Bestrahfung eines Objekts (17.1, 17.2, 17.3), welches am Ausgang des Zweistrahl-Interferometers angeordnet ist; und/oder
- mindestens eine multispektrale oder quasi-multispektrale Quelle elektromagnetischer Strahlung, auch in Arrayform - im Weiteren jeweils als Strahlungsquelle bezeichnet - zur Bestrahlung eines Objekts, welches am Eingang des Zweistrahl-Interferometers angeordnet ist; und/oder
- ein selbst elektromagnetische Strahlung emittierendes Objekt (1.4) oder bestrahltes Objekt, auch in Arrayform, welches am Eingang des Zweistrahl-Interferometers angeordnet ist, im Weiteren jeweils auch als Strahlungsquelle bezeichnet; und/oder
- ein Zwischenbild einer multispektralen oder quasi-multispektralen Quelle elektromagnetischer Strahlung oder eines elektromagnetische Strahlung emittierenden Objekts oder eines bestrahlten Objekts, auch in Arrayform, im Weiteren jeweils auch als Strahlungsquelle bezeichnet.

4. Verfahren nach einem der vorangegangenen Ansprüche, wobei mit den, das Zweistrahl-Interferometer verlassenden und interferierenden Teil-Strahlungsbündeln in der Brennebene F'_8 des dem Zweistrahl-Interferometer nachgeordneten Fokussier-Objektivs (8), wo sich Interferenzen gleicher Neigung ausbilden, oder einer zu dieser Brennebene F'_8 optisch konjugierten Ebene
- entweder eine Bestrahlung des nicht selbst elektromagnetisch strahlenden Objekts (17.1, 17.2, 17.3) durchgeführt wird und die vom Objekt (17.1, 17.2, 17.3) dabei in Reflexion, Streuung und/oder Transmission ausgehende Strahlung mit Objektabbildung mittels mindestens einer dem Objekt (17) nachgeordneten optischen Anordnung (14, 15, 16) auf dem gerasterten Empfänger (18.1, 18.2, 18.3) detektiert wird;
- oder im Fall des selbst elektromagnetische Strahlung emittierenden oder bestrahlten Objekts (1.4) eine Bestrahlung des gerasterten Empfängers (18.1, 18.2, 18.3) zwecks Detektion der Strahlung durchgeführt wird und dabei das selbst elektromagnetische Strahlung emittierende oder bestrahlte Objekt (1.4) am Eingang des Zweistrahl-Interferometers angeordnet und den optischen Mitteln für eine ein- oder mehrstufige optische Abbildung vorgeordnet ist oder ein Bild oder Zwischenbild des selbst elektromagnetische Strahlung emittierenden oder bestrahlten Objekts (1.4) den optischen Mitteln (2, 2.1, 2.2, 2.3, 2.4, 2.5, 2.6, 2.7, 2.8) für eine ein- oder mehrstufige optische Abbildung vorgeordnet ist.

5. Verfahren nach einem der vorangegangenen Ansprüche,
wobei die Bestrahlung mindestens eines länglichen Bereiches (lbB_A) mit optischen Mitteln (2, 2.1, 2.2, 2.3, 2.4, 2.5, 2.6, 2.7, 2.8) zumindest näherungsweise in der Schnittebene V-M und in zur Schnittebene V-M parallelen Ebenen mit konvergierenden Strahlenbüscheln SB_V-M durchgeführt wird; und/oder
wobei mit optischen Mitteln (2, 2.1, 2.2, 2.3, 2.4, 2.5, 2.6, 2.7, 2.8) eine Bestrahlung mindestens eines länglichen Bereiches (lbB_A) in den beiden Interferometer-Aperturflächen (A1, A2) mit astigmatischer, afokaler, telezentrischer und/oder anamorphotischer Strahlenbündelformung durchgeführt wird; und/oder
wobei den optischen Mitteln (2, 2.1, 2.2, 2.3, 2.4, 2.5, 2.6, 2.7, 2.8) zur Bestrahlung mindestens eines länglichen Bereiches (lbB_A) außerdem noch lichtabschattende oder lichtreflektierende oder lichtabsorbierende Mittel (12.1) zur lateralen Strukturierung der elektromagnetischen Strahlung in der vorgeordneten Zwischenbildebene ZBE_v zugeordnet sind.

6. Verfahren nach einem der vorangegangenen Ansprüche, wobei zur Bestrahlung eines länglichen Bereiches (lbB_A) in den beiden Interferometer-Aperturflächen (A1, A2) mit optischen Mitteln (2, 2.1, 2.2, 2.3, 2.4, 2.5, 2.6, 2.7, 2.8)
zumindest näherungsweise in der Schnittebene V-M und zumindest näherungsweise in zur Schnittebene V-M parallelen Ebenen zumindest näherungsweise fokussierte Punkte von Punkten der Strahlungsquelle (1.1, 1.2) mit konvergierenden Strahlenbüscheln SB_V-M gebildet werden; und/oder
zumindest näherungsweise Strahlungsbüschel SB_H-S zumindest näherungsweise in einer Schnittebene H-S und in zur Schnittebene H-S parallelen Ebenen erzeugt werden, welche schwächer fokussiert sind als die zum gleichen Punkt (P) der Strahlungsquelle (1.1, 1.2) gehörenden Fokuspunkte des Strahlungsbüschels SB_V M in der Schnittebene V-M, wobei die Schnittebene H-S senkrecht zur Schnittebene V-M ausgerichtet ist und den Schwerstrahl (SST) des Strahlenbündels des Interferometers enthält.

7. Verfahren nach einem der vorangegangenen Ansprüche, wobei mit optischen Mitteln (2, 2.1, 2.2, 2.3, 2.4, 2.5, 2.6, 2.7, 2.8) Strahlenbüschel SB_H-S in einer Schnittebene H-S, die jeweils im Objektraum in je einem Punkt (P) der Strahlungsquelle (1.1, 1.2, 1.4,1.5) ihren Ausgangspunkt haben, im Zweistrahl-Interferometer als zumindest näherungsweise kollimierte Strahlenbüschel mit Konvergenz im Unendlichen ausgebildet werden, wobei die Schnittebene H-S senkrecht zur Schnittebene V-M ausgerichtet ist und den Schwerstrahl (SST) des Strahlenbündels des Interferometers enthält.

8. Verfahren nach einem der vorangegangenen Ansprüche, insbesondere auch zur bildgebenden Strahlungsquellen- und Stoff-Analyse aller Aggregatzustände sowie Tumorgewebe-Diagnostik,
wobei die Endreflektoren in Form von je einem 90°-Dachkant-Reflektor (5.1, 5.2) in jedem Endreflektor oder in Form von je einem Zylinder-Cats-eye-Reflektor in Einfachzylinderspiegel- oder Doppel-Zylinderspiegel-Anordnung nach Schwarzschild ausgebildet sind; und/oder
wobei beide Endreflektoren in Kombination als Doppel-Endreflektor-Baugruppe zur Erzeugung des optischen Gangunterschieds x_g gemeinsam vorbestimmt motorisch drehbar ausgebildet sind, und wobei die Doppel-Endreflektor-Baugruppe (27.2) aus der Kombination 90°-Dachkant-Spiegel mit liegender Dachkante und mit zwei an den Enden der Dachkante gegenüberliegenden und zueinander parallel angeordneten Planspiegeln besteht, wobei die Normalen der Planspiegelflächen jeweils parallel zur liegenden Dachkante sind, so dass hiermit zwei Raumecken gebildet sind.

9. Anordnung zur Fourier-Transformations-Spektroskopie umfassend:
- ein Zweistrahl-Interferometer zum Generieren und Detektieren zumindest eines Interferogramms; und
- einen Auswerte-Rechner (19) zur Berechnung der Fourier-Transformation des zumindest einen über einem optischen Gangunterschied x_g des Zweistrahl-Interferometers detektierten Interferogramms l_x_g, um aus diesem ein Spektrum zu erhalten,
wobei das Zweistrahl-Interferometer folgende Komponenten aufweist:
- eine multispektrale Strahlungsquelle (1.1, 1.2, 1.4, 1.5)
- der Strahlungsquelle (1.1, 1.2, 1.4, 1.5) nachgeordnete optische Mittel (2, 2.1, 2.2, 2.3, 2.4, 2.5, 2.6, 2.7, 2.8) zur Bündelformung einer von der Strahlungsquelle ausgehenden elektromagnetischen Strahlung;
- mindestens eine Strahlteilersystem (3) zur Amplitudenteilung der elektromagnetischen Strahlung,
- je einen Endreflektor in jedem der beiden Interferometerarme mit je einer Interferometer-Aperturfläche (A1, A2), wobei mindestens ein Endreflektor (5.1, 5.2) zur Erzeugung des optischen Gangunterschieds x_g motorisch beweglich ausgebildet ist, wobei
- - die Endreflektoren derart mit jeweils partieller Retro-Reflexions-Eigenschaft ausgebildet sind, dass sie jeweils in einer Ebene retro-reflektierend sind und in einer dazu senkrechten Ebene die Reflexionswirkung eines Planspiegels aufweisen, wodurch jeder Endreflektor eine Achse y_tilt-invar zumindest näherungsweise in deren Aperturfläche und zumindest näherungsweise senkrecht zum Schwerstrahl des Strahlenbündels derart aufweist, dass die retro-reflektierende Wirkung den Einfluss einer Kippung um die Achse y_tilt-invar auf die Interferenzerscheinung am Ausgang des Interferometers zumindest näherungsweise unterdrückt; oder
- - die Endreflektoren in Planspiegelform ausgebildet sind und für jeden Endreflektor jeweils ein diesen Endreflektor haltendes Schiebeglied auf je einem Präzisions-Führungssystem mit einer Achse y_very-small-tilt desselben angeordnet ist, wobei die Achse y_very-small-tilt rechtwinklig zur Schieberichtung des Präzisions-Führungssystems ist und wobei Verkippungen des Präzisions-Führungssystem um die Achse y_very-small-tilt geringer sind als um eine zur Achse y_very-small-tilt senkrechten Quer-Achse x small-tilt;
- mindestens ein Fokussier-Objektiv am Ausgang des Zweistrahl-Interferometers mit dessen in Strahlrichtung nachgeordneter Brennebene F'_8;
- mindestens einen gerasterten Empfänger (18.1, 18.2, 18.3) elektromagnetischer Strahlung, welcher für eine vielfache Auslesung über der Zeit t zur zeitseriellen Detektion interferierender elektromagnetischer Strahlung vom Objekt ausgelegt ist,
- ein Messsystem zum Bestimmen des aktuellen optischen Gangunterschieds x_g des Zweistrahl-Interferometers über der Zeit t bei der Bewegung zumindest eines der Endreflektoren,
wobei im Zweistrahl-Interferometer eine Schnittebene V-M besteht, die parallel zur Achse y_tilt-invar bzw. zur Achse y_very-small-tilt ist und den Schwerstrahl (SST) des Strahlenbündels des Interferometers enthält, und
wobei die optischen Mittel (2, 2.1, 2.2, 2.3, 2.4, 2.5, 2.6, 2.7, 2.8) zur Bündelformung ausgelegt sind zur Bestrahlung mindestens eines länglichen Bereichs (lbB_A), dessen Verhältnis von Längsausdehnung zu Querausdehnung mindestens 1,2 beträgt, in den beiden Interferometer-Aperturflächen (A1, A2) mit Längsausdehung des bestrahlten länglichen Bereichs (lbB_A) im Wesentlichen senkrecht zur Schnittebene V-M.

10. Anordnung nach Anspruch 9,
wobei das Zweistrahl-Interferometer ausgelegt ist, eine Vielzahl von Interferogrammen gleichzeitig zu generieren und zu detektieren; und/oder
wobei das Zweistrahl-Interferometer als Interferometer-Turm mit einer Vielzahl von entlang einer Turmhöhenachse angeordneten Interferometer-Zellen ausgebildet ist, wobei jeder optische Mittel (2, 2.1, 2.2, 2.3, 2.4, 2.5, 2.6, 2.7, 2.8) zur Bestrahlung eines länglichen Bereiches (lbB_A) in den beiden Interferometer-Aperturflächen (A1, A2), mindestens ein Fokussier-Objektiv (8) und mindestens ein Detektor (18.1, 18.2, 18.3) zugeordnet sind.

11. Anordnung nach einem der Ansprüche 9 oder 10,
wobei die Strahlungsquelle in länglicher Form ausgebildet ist, deren Verhältnis von Längsausdehnung zu Querausdehnung mindestens 1,2 beträgt, wobei die Strahlungsquelle (1.1, 1.2, 1.4, 1.5) so angeordnet ist, dass deren Längsachse zumindest näherungsweise senkrecht zur Schnittebene V-M ist; und/oder
wobei ein eindimensionales oder zweidimensionales Array von miniaturisierten linienförmigen Strahlungsquellen (1.5), deren Verhältnis von Längsausdehnung zu Querausdehnung mindestens 1,2 beträgt, mit jeweils jeder Strahlungsquelle zugeordneten optischen Mitteln zur Bestrahlung eines länglichen Bereiches (lbB_A) in den beiden Interferometer-Aperturflächen (A1, A2) jeweils auch in Form eines eindimensionalen oder zweidimensionalen Arrays zur Bestrahlung einer Vielzahl von länglichen Bereichen - mindestens jedoch zwei - in den beiden Interferometer-Aperturflächen (A1, A2) angeordnet ist.

12. Anordnung nach einem der Ansprüche 9 und 11,
wobei die optischen Mittel (2, 2.1, 2.2, 2.3, 2.4, 2.5, 2.6, 2.7, 2.8) zur Bestrahlung eines länglichen Bereiches (lbB_A) in den beiden Interferometer-Aperturflächen (A1, A2) zumindest näherungsweise astigmatisch, stigmatisch, anastigmatisch oder anamorphotisch strahlenbündelformend ausgebildet sind; und/oder
wobei die optischen Mittel (2, 2.1, 2.2, 2.3, 2.4, 2.5, 2.6, 2.7, 2.8) zur Bestrahlung eines länglichen Bereiches (lbB_A) in den beiden Interferometer-Aperturflächen (A1, A2) als afokales System ausgebildet sind; und/oder
wobei die optischen Mittel (2, 2.1, 2.2, 2.3, 2.4, 2.5, 2.6, 2.7, 2.8) zur Bestrahlung eines länglichen Bereiches (lbB_A) in den beiden Interferometer-Aperturflächen (A1, A2) mit einer stärkeren positiven Brechkraft in der Schnittebene V-M im Vergleich zu einer Schnittebene H-S ausgebildet sind, wobei die Schnittebene H-S senkrecht zur Schnittebene V-M ausgerichtet ist und den Schwerstrahl (SST) des Strahlenbündels des Interferometers enthält.

13. Anordnung nach einem der Ansprüche 9 bis 12,
wobei der Randstrahlwinkel alpha_V-M des Strahlenbüschels SB_V-M etwa gleich dem halben Feldwinkel w der Strahlungsquelle (1.1, 1.2, 1.4, 1.5) gemacht ist; und/oder
wobei Bestrahlungs- und/oder Fokussier-Optiken am Ausgang des Interferometers in Form von eindimensionalen (2.4, 2.7, 2.8) oder in Form von zweidimensionalen Optik-Arrays ausgebildet sind.

14. Anordnung nach einem der Ansprüche 9 bis 13,
wobei die Aperturflächen (A1, A2) der Endreflektoren zumindest in einer der beiden Schnittebenen V-M oder H-S zumindest näherungsweise die Strahlenbündel begrenzende Blende des optischen Gesamt-Systems darstellen, wobei die Schnittebene H-S senkrecht zur Schnittebene V-M ausgerichtet ist und den Schwerstrahl (SST) des Strahlenbündels des Interferometers enthält; und/oder
wobei die Endreflektoren (5.1, 5.2) in Hybridform mit jeweils partieller Retro-Reflexions-Eigenschaft eine optisch genutzte Höhe h_hybrid in der Schnittebene V-M von maximal 70% von der optisch genutzten Lateralausdehnung der Endreflektoren (5.1, 5.2) in Hybridform in einer Schnittebene H-S aufweisen, wobei die Schnittebene H-S senkrecht zur Schnittebene V-M ausgerichtet ist und den Schwerstrahl (SST) des Strahlenbündels des Interferometers enthält; und/oder
wobei die Endreflektoren (5.1, 5.2) in Hybridform eine optisch genutzte Höhe h_hybrid in der Schnittebene V-M von mindestens 100% von der optisch genutzten Lateralausdehnung der Endreflektoren (5.1, 5.2) in Hybridform in einer Schnittebene H-S aufweisen, wobei die Schnittebene H-S senkrecht zur Schnittebene V-M ausgerichtet ist und den Schwerstrahl (SST) des Strahlenbündels des Interferometers enthält.

15. Anordnung nach einem der Ansprüche 9 bis 14,
wobei die optischen Mittel zur Bestrahlung eines länglichen Bereiches (IIB_A) in den beiden Interferometer-Aperturflächen (A1, A2) als eine Kombination je eines off-axis Ellipsoid-Spiegels und je eines off-axis torischen Spiegels (2.3) oder als eine Kombination je eines off-axis Ellipsoid-Spiegels und je eines torischen off-axis Spiegels (2.4) in einem Array ausgebildet sind; oder
wobei die optischen Mittel (2, 2.1, 2.2, 2.3, 2.4, 2.6, 2.7) zur Bestrahlung eines länglichen Bereiches (lbB) in den beiden Interferometer-Aperturflächen (A1, A2) als eine Kombination eines off-axis Paraboloid-Spiegels (2.5) und eines Zylinderspiegel-Arrays (2.8) mit mehreren oder einer Vielzahl von Zylinderspiegel ausgebildet sind.

16. Anordnung nach einem der Ansprüche 9 bis 15,
wobei die Dachkanten-Reflektoren (5.1, 5.2) aus optisch blankem Kohlen-Faser-verstärktem Kunststoff (CFK) mit Goldbeschichtung der optisch wirksamen Flächen hergestellt sind; und/oder
wobei die beiden Dachkant-Reflektoren (5.1, 5.2) länglich in deren Höhenausdehnung im Vergleich zu deren maximaler Lateralausdehnung ausgebildet sind und so eine Vielzahl - mindestens jedoch zwei - von bestrahlten länglichen Bereichen (lbB) in den beiden Interferometer-Aperturflächen (A1, A2) übereinanderliegend angeordnet ist.

## Claims

1. A method for Fourier transform spectroscopy, comprising:
- generating and detecting at least one interferogram by a two-beam interferometer; and
- calculating the Fourier transformation of the at least one interferogram l_x_g detected over an optical path difference x_g of the two-beam interferometer, in order to obtain a spectrum therefrom,
wherein the two-beam interferometer has the following components:
- a multispectral radiation source (1.1, 1.2, 1.4, 1.5);
- optical means (2, 2.1, 2.2, 2.3, 2.4, 2.5, 2.6, 2.7, 2.8) downstream of the radiation source (1.1, 1.2, 1.4, 1.5) for forming a bundle of an electromagnetic radiation emanating from the radiation source;
- at least one beam splitter system (3) for splitting the amplitude of the electromagnetic radiation;
- one respective terminal reflector in each of the two interferometer arms having one respective interferometer aperture face (A1, A2), wherein at least one terminal reflector (5.1, 5.2) is configured to be movable by a motor for generating the optical path difference x_g, wherein
- - the terminal reflectors are formed with a respective partial retro-reflection property such that they are each retro-reflective in one plane and have the reflection effect of a plane mirror in a plane perpendicularly thereto, whereby each terminal reflector has an axis y_tilt-invar at least approximately in its aperture face and at least approximately perpendicularly to the principle beam of the bundle of rays such that the retro-reflective effect at least approximately suppresses the influence of a tilting around the axis y_tilt-invar on the interference phenomenon at the exit of the interferometer; or
- - the terminal reflectors are formed in a plane mirror shape and a respective sliding element retaining said terminal reflector is arranged on one respective precision guiding system having one axis y_very-small-tilt of the same, wherein the axis y_very-small-tilt is orthogonal to the sliding direction of the precision guiding system and wherein tiltings of the precision guiding system around the axis y_very-small-tilt are smaller than around a cross axis x_small-tilt perpendicular to the axis y_very-small-tilt;
- at least one focusing lens at the exit of the two-beam interferometer having its focal plane F'_8 downstream in the beam direction;
- at least one incremental receiver (18.1, 18.2, 18.3) of electromagnetic radiation, which is designed for a multiple readout over the time t for a time-serial detection of interfering electromagnetic radiation from the object, and
- a measuring system for determining the current optical path difference x_g of the two-beam interferometer over the time t when at least one of the terminal reflectors is moving,
wherein an intersecting plane V-M is present in the two-beam interferometer, which is parallel to the axis y_tilt-invar and the axis y_very-small-tilt, respectively, and which contains the principle beam (SST) of the bundle of rays of the interferometer, and
wherein an irradiation of at least an elongate area (lbB_A), the ratio of the longitudinal extension to the lateral extension thereof being at least 1.2, is carried out with the optical means (2, 2.1, 2.2, 2.3, 2.4, 2.5, 2.6, 2.7, 2.8) for forming a bundle in the two interferometer aperture faces (A1, A2) with the longitudinal extension of the irradiated elongate area (lbB_A) being essentially perpendicular to the intersecting plane V-M.

2. The method according to claim 1,
wherein by means of the two-beam interferometer a plurality of interferograms is generated and detected simultaneously; and/or
wherein the two-beam interferometer is configured as interferometer tower having a plurality of interferometer cells along a tower height axis, wherein at least one focusing lens (8) and at least one detector (18.1, 18.2, 18.3) are associated to each optical means (2, 2.1, 2.2, 2.3, 2.4, 2.5, 2.6, 2.7, 2.8) for irradiating an elongate area (lbB_A) in the two interferometer aperture faces (A1, A2).

3. The method according to claim 1 or 2, wherein the multispectral radiation source (1.1, 1.2, 1.4, 1.5) comprises:
- at least one multispectral or quasi-multispectral source of electromagnetic radiation (1.1, 1.2, 1.4, 1.5), also in array form - in the following respectively designated as radiation source - for irradiating an object (17.1, 17.2, 17.3) arranged at the exit of the two-beam interferometer; and/or
- at least one multispectral or quasi-multispectral source of electromagnetic radiation, also in array form - in the following respectively designated as radiation source - for irradiating an object arranged at the entry of the two-beam interferometer; and/or
- an object (1.4) emitting electromagnetic radiation by itself or an irradiated object, also in array form, which is arranged at the entry of the two-beam interferometer, in the following also respectively designated as irradiation source, respectively; and/or
- an intermediate image of a multispectral or quasi-multispectral source of electromagnetic radiation or of an object emitting electromagnetic radiation or an irradiated object, also in array form, in the following also respectively designated as radiation source.

4. The method of any one of the preceding claims, wherein with the interfering partial bundles of rays exiting the two-beam interferometer in the focal plane F'_8 of the focusing lens (8) downstream of the two-beam interferometer, wherein interferences having the same tilt are formed, or in a plane optically conjugated to this focal plane F'_8,
- either an irradiation of the object (17.1, 17.2, 17.3), which is not by itself electromagnetically radiating, is carried out and the radiation emanating from the object (17.1, 17.2, 17.3) in reflection, scattering and/or transmission with object reproduction by at least one optical arrangement (14, 15, 16) downstream of the object (17) is detected on the incremental receiver (18.1, 18.2, 18.3);
- or in case of the object emitting electromagnetic irradiation by itself or the irradiated object (1.4) an irradiation of the incremental receiver (18.1, 18.2, 18.3) is carried out with the purpose of detecting the radiation and wherein the object emitting electromagnetic irradiation by itself or irradiated object (1.4) is arranged at the entry of the two-beam interferometer and is arranged upstream of the optical means for a single-stage or multi-stage optical reproduction or an image or intermediate image of the object emitting electromagnetic irradiation by itself or irradiated object (1.4) is arranged upstream of the optical means (2, 2.1, 2.2, 2.3, 2.4, 2.5, 2.6, 2.7, 2.8) for a single-stage or multi-stage optical reproduction.

5. The method of any one of the preceding claims,
wherein the irradiation of at least an elongate area (lbB_A) with optical means (2, 2.1, 2.2, 2.3, 2.4, 2.5, 2.6, 2.7, 2.8) is carried out at least approximately in the intersecting plane V-M and in planes parallel to the intersecting plane V-M with converging bundles of rays SB_V-M); and/or
wherein with optical means (2, 2.1, 2.2, 2.3, 2.4, 2.5, 2.6, 2.7, 2.8) an irradiation of at least an elongate area (lbB_A) in the two interferometer aperture faces (A1, A2) is carried out with astigmatic, afocal, telecentric and/or anamorphic forming of a bundle of rays; and/or
wherein the optical means (2, 2.1, 2.2, 2.3, 2.4, 2.5, 2.6, 2.7, 2.8) for irradiation of at least an elongate area (lbB A) are further associated with light-shadowing or light-reflecting or light-absorbing means (12.1) for laterally structuring the electromagnetic radiation of the upstream intermediate image plane ZBE_v.

6. The method of any one of the preceding claims, wherein for the irradiation of an elongate area (lbB_A) in the two interferometer aperture faces (A1, A2) with optical means (2, 2.1, 2.2, 2.3, 2.4, 2.5, 2.6, 2.7, 2.8)
at least approximately focused points of points of the radiation source (1.1, 1.2) with converging bundles of rays SB_V-M are formed at least approximately in the intersecting plane V-M and at least approximately in planes parallel to the intersecting plane V-M; and/or
at least approximately bundles of rays SB_H-S are generated at least approximately in an intersecting plane H-S and in planes parallel to the intersecting plane H-S, which are focused weaker than the focus points of the bundle of rays SB_V M in the intersecting plane V-M belonging to the same point (P) of the radiation source (1.1, 1.2), wherein the intersecting plane H-S is aligned perpendicularly to the intersecting plane V-M and includes the principle beam (SST) of the bundle of rays of the interferometer.

7. The method of any one of the preceding claims, wherein with optical means (2, 2.1, 2.2, 2.3, 2.4, 2.5, 2.6, 2.7, 2.8) bundles of rays SB_H-S in an intersecting plane H-S, which respectively originate in the object space in one respective point (P) of the radiation source (1.1, 1.2, 1.4, 1.5), are formed in the two-beam interferometer as at least approximately collimated bundles of rays converging in the infinite, wherein the intersecting plane H-S is aligned perpendicularly to the intersecting plane V-M and includes the principal beam (SST) of the bundle of rays of the interferometer.

8. The method of any one of the preceding claims, in particular also for the imaging radiation source and material analysis of all aggregate states as well as for tumor diagnostics,
wherein the terminal reflectors are formed in the shape of one respective 90° ridge reflector (5.1, 5.2) in each terminal reflector or in the shape of one respective cylinder-cats-eye-reflector in a single cyclindrical mirror or double cyclindrical mirror arrangement according to Schwarzschild; and/or
wherein both terminal reflectors are formed in combination as double terminal reflector assembly for generating the optical path difference x_g to be rotatable together by a motor in a predetermined manner, and wherein the double terminal reflector assembly (27.2) consists of the combination 90° ridge mirror with horizontal ridge and two plane mirrors opposed at the end of the ridge and being parallel to each other, wherein the normals of the plane mirror faces are each parallel to the horizontal ridge, so that two space corners are formed therewith.

9. An arrangement for Fourier transform spectroscopy, comprising:
- a two-beam interferometer for generating and detecting at least one interferogram; and
- an evaluating calculator (19) for calculating the Fourier transformation of the at least one interferogram l_x_g detected over an optical path difference x_g of the two-beam interferometer, in order to obtain a spectrum therefrom,
wherein the two-beam interferometer has the following components:
- a multispectral radiation source (1.1, 1.2, 1.4, 1.5);
- optical means (2, 2.1, 2.2, 2.3, 2.4, 2.5, 2.6, 2.7, 2.8) downstream of the radiation source (1.1, 1.2, 1.4, 1.5) for forming a bundle of an electromagnetic radiation source emanating from the radiation;
- at least one beam splitter system (3) for splitting the amplitude of the electro-magnetic radiation;
- one respective terminal reflector in each of the two interferometer arms having one respective interferometer aperture face (A1, A2), wherein at least one terminal reflector (5.1, 5.2) is configured to be movable by a motor for generating the optical path difference x_g, wherein
- - the terminal reflectors are formed with a respective partial retro-reflection property such that they are respectively retro-reflective in one plane and have the reflection effect of a plane mirror in a plane perpendicularly thereto, whereby each terminal reflector has an axis y_tilt-invar at least approximately in its aperture face and at least approximately perpendicularly to the principle beam of the bundle of rays such that the retro-reflective effect at least approximately suppresses the influence of a tilting around the axis y_tilt-invar on the interference phenomenon at the exit of the interferometer; or
- - the terminal reflectors are formed in a plane mirror shape and a respective sliding element retaining said terminal reflector is arranged on one respective precision guiding system having one axis y_very-small-tilt of the same, wherein the axis y_very-small-tilt is orthogonal to the sliding direction of the precision guiding system and wherein tiltings of the precision guiding system around the axis y_very-small-tilt are smaller than around a cross axis x_small-tilt perpendicular to the axis y _very-small-tilt;
- at least one focusing lens at the exit of the two-beam interferometer having its focal plane F'_8 downstream in the beam direction;
- at least one incremental receiver (18.1, 18.2, 18.3) of electromagnetic radiation, which is designed for a multiple readout over the time t for a time-serial detection of interfering electromagnetic radiation from the object, and
- a measuring system for determining the current optical path difference x_g of the two-beam interferometer over the time t when at least one of the terminal reflectors is moving,
wherein an intersecting plane V-M is present in the two-beam interferometer, which is parallel to the axis y_tilt-invar and the axis y_very-small-tilt, respectively, and which contains the principle beam (SST) of the bundle of rays of the interferometer, and
wherein the optical means (2, 2.1, 2.2, 2.3, 2.4, 2.5, 2.6, 2.7, 2.8) for forming a bundle are configured for irradiating at least an elongate area (lbB_A), the ratio of the longitudinal extension to the lateral extension thereof being at least 1.2, in the two interferometer aperture faces (A1, A2) with the longitudinal extension of the irradiated elongate area (lbB_A) being essentially perpendicular to the intersecting plane V-M.

10. The arrangement according to claim 9,
wherein the two-beam interferometer is configured to simultaneously generate and detect a plurality of interferograms; and/or
wherein the two-beam interferometer is configured as interferometer tower having a plurality of interferometer cells along a tower height axis, wherein at least one focusing lens (8) and at least one detector (18.1, 18.2, 18.3) are associated to each optical means (2, 2.1, 2.2, 2.3, 2.4, 2.5, 2.6, 2.7, 2.8) for irradiating an elongate area (lbB_A) in the two interferometer aperture faces (A1, A2).

11. The arrangement according to claim 9 or 10,
wherein the radiation source is formed in an elongate shape, wherein the ratio of the longitudinal extension to the lateral extension thereof is at least 1.2, wherein the radiation source (1.1, 1.2, 1.4, 1.5) is arranged such that its longitudinal axis is at least approximately perpendicular to the intersecting plane V-M; and/or
wherein a one-dimensional or two-dimensional array of miniaturized linear radiation sources (1.5), wherein the ratio of the longitudinal extension to the lateral extension thereof is at least 1.2, is arranged with optical means for irradiating an elongate area (lbB_A) in the two interferometer aperture faces (A1, A2) associated to each radiation source, which are each also in the form of a one-dimensional or two-dimensional array for irradiating a plurality of elongate areas - but at least two - in the two interferometer aperture faces (A1, A2).

12. The arrangement according to any one of claims 9 and 11,
wherein the optical means (2, 2.1, 2.2, 2.3, 2.4, 2.5, 2.6, 2.7, 2.8) for irradiating an elongate area (lbB_A) in the two interferometer aperture faces (A1, A2) are formed at least approximately astigmatic, stigmatic, anastigmatic or anamorphic for forming bundles of rays; and/or
wherein the optical means (2, 2.1, 2.2, 2.3, 2.4, 2.5, 2.6, 2.7, 2.8) for irradiating an elongate area (lbB_A) in the two interferometer aperture faces (A1, A2) are formed as afocal system; and/or
wherein the optical means (2, 2.1, 2.2, 2.3, 2.4, 2.5, 2.6, 2.7, 2.8) for irradiating an elongate area (lbB_A) in the two interferometer aperture faces (A1, A2) are formed with a stronger positive refractive power in the intersecting plane V-M compared to an intersecting plane H-S, wherein the intersecting plane H-S is aligned perpendicularly to the intersecting plane V-M and includes the principal beam (SST) of the bundle of rays of the interferometer.

13. The arrangement according to any one of claims 9 to 12,
wherein the edge ray angle alpha_V-M of the bundle of rays SB_V-M is made approximately half of the field angle w of the radiation source (1.1, 1.2, 1.4, 1.5); and/or
wherein the irradiation and/or focusing optics at the exit of the interferometer are configured in the shape of one-dimensional (2.4, 2.7. 2.8) or two-dimensional optical arrays.

14. The arrangement according to any one of claims 9 to 13,
wherein the aperture faces (A1, A2) of the terminal reflectors represent at least in one of the two intersecting planes V-M or H-S at least approximately the aperture limiting the bundle of rays of the total optical system, wherein the intersecting plane H-S is aligned perpendicularly to the intersecting plane V-M and includes the principal beam (SST) of the bundle of rays of the interferometer; and/or
wherein the terminal reflectors (5.1, 5.2) in hybrid form each having a partial retro-reflection property have an optically utilized height h_hybrid in the intersecting plane V-M of at most 70 % of the optically utilized lateral extension of the terminal reflectors (5.1, 5.2) in hybrid form in an intersecting plane H-S, wherein the intersecting plane H-S is aligned perpendicularly to the intersecting plane V-M and includes the principal beam (SST) of the bundle of rays of the interferometer; and/or
wherein the terminal reflectors (5.1, 5.2) in hybrid form have an optically utilized height h_hybrid in the intersecting plane V-M of at least 100 % of the optically utilized lateral extension of the terminal reflectors (5.1, 5.2) in hybrid form in an intersecting plane H-S, wherein the intersecting plane H-S is aligned perpendicularly to the intersecting plane V-M and includes the principal beam (SST) of the bundle of rays of the interferometer.

15. The arrangement according to any one of claims 9 to 14,
wherein the optical means for irradiating an elongate area (IIB_A) in the two interferometer aperture faces (A1, A2) are configured as a combination of one respective off-axis ellipsoid mirror and one respective off-axis toric mirror (2.3) or as a combination of one respective off-axis ellipsoid mirror and one respective off-axis toric mirror (2.4) in an array; or
wherein the optical means (2, 2.1, 2.2, 2.3, 2.4, 2.5, 2.6, 2.7) for irradiating an elongate area (lbB) in the two interferometer aperture faces (A1, A2) are formed as a combination of an off-axis paraboloid mirror (2.5) and a cylindrical mirror array (2.8) having several or a plurality of cylindrical mirrors.

16. The arrangement according to any one of claims 9 to 15,
wherein the ridge reflectors (5.1, 5.2) are made of optically bare carbon fiber-reinforced plastics (CFK) with a gold coating of the optically effective faces; and/or
wherein the two ridge reflectors (5.1, 5.2) are formed elongate in their height dimension compared to their maximal lateral extension and thus a plurality - but at least two - of irradiated elongate areas (lbB) are arranged one upon the other in the two interferometer aperture faces (A1, A2).

## Revendications

1. Procédé de spectroscopie à transformée de Fourier comprenant :
- générer et détecter au moins un interférogramme au moyen d'un interféromètre à deux ondes ; et
- calculer la transformée de Fourier de l'au moins un interférogramme l_x_g détecté par la biais d'une différence de chemin optique x_g de l'interféromètre à deux ondes pour obtenir un spectre à partir de celui-ci,
dans lequel l'interféromètre à deux ondes présente les composants suivants :
- une source de rayonnement multispectrale (1.1, 1.2, 1.4, 1.5) ;
- des moyens optiques (2, 2.1, 2.2, 2.3, 2.4, 2.5, 2.6, 2.7, 2.8) disposés en aval de la source de rayonnement (1.1, 1.2, 1.4, 1.5) pour la formation de faisceau d'un rayonnement électromagnétique partant de la source de rayonnement ;
- au moins un système diviseur de rayons (3) pour la division d'amplitude du rayonnement électromagnétique ;
- à chaque fois un réflecteur terminal dans chacun des deux bras d'interféromètre avec à chaque fois une face d'ouverture d'interféromètre (A1, A2), dans lequel au moins un réflecteur terminal (5.1, 5.2) est réalisé de manière mobile par moteur pour la génération de la différence de chemin optique x_g, dans lequel
- - les réflecteurs terminaux sont réalisés avec une propriété de rétroréflexion partielle à chaque fois de telle sorte qu'ils sont à chaque fois rétroréfléchissants dans un plan et présentent l'action de réflexion d'un miroir plan dans un plan perpendiculaire à celui-ci, moyennant quoi chaque réflecteur terminal présente un axe y_tilt-invar au moins approximativement dans sa face d'ouverture et au moins approximativement perpendiculaire au rayon lourd du faisceau de rayons de telle sorte que l'action rétroréfléchissante supprime au moins approximativement l'influence d'un basculement autour de l'axe y_tilt-invar sur l'apparition d'interférence à la sortie de l'interféromètre ; ou
- - les réflecteurs terminaux sont réalisés sous la forme de miroir plan et pour chaque réflecteur terminal, un organe coulissant maintenant ce réflecteur terminal est à chaque fois disposé sur un système de guidage de précision à chaque fois avec un axe y_very-small-tilt de celui-ci, dans lequel l'axe y_very-small-tilt est perpendiculaire au sens de coulissement du système de guidage de précision et dans lequel des basculements du système de guidage de précision autour de l'axe y_very-small-tilt sont plus faibles qu'autour d'un axe transversal x_small-tilt perpendiculaire à l'axe y_very-small-tilt ;
- au moins un objectif de focalisation à la sortie de l'interféromètre à deux ondes avec son plan focal F'_8 disposé en aval dans le sens de rayon ;
- au moins un récepteur tramé (18.1, 18.2, 18.3) de rayonnement électromagnétique qui est conçu pour une lecture multiple sur la durée t en vue de la détection en série temporelle de rayonnement électromagnétique interférent par l'objet ; et
- un système de mesure pour la détermination de la différence de chemin optique actuelle x_g de l'interféromètre à deux ondes sur la durée t lors du mouvement d'au moins un des réflecteurs terminaux,
dans lequel un plan de coupe V-M existe dans l'interféromètre à deux ondes, lequel est parallèle à l'axe y_tilt-invar ou à l'axe y_very-smaill-tilt et contient le rayon lourd (SST) du faisceau de rayons de l'interféromètre, et
dans lequel une irradiation d'au moins une région longitudinale (lbB_A) dont le rapport de l'extension longitudinale sur l'extension transversale se monte à au moins 1,2 est effectuée avec les moyens optiques (2, 2.1, 2.2, 2.3, 2.4, 2.5, 2.6, 2.7, 2.8) pour la formation de faisceau dans les deux faces d'ouverture d'interféromètre (A1, A2) avec une extension longitudinale de la région longitudinale irradiée (lbB_A) essentiellement perpendiculaire au plan de coupe V-M.

2. Procédé selon la revendication 1,
dans lequel une pluralité d'interférogrammes sont générés et détectés simultanément au moyen de l'interféromètre à deux ondes ; et/ou dans lequel l'interféromètre à deux ondes est réalisé en tant que tour d'interféromètre avec une pluralité de cellules d'interféromètre disposées le long d'un axe de hauteur de tour, dans lequel au moins un objectif de focalisation (8) et au moins un détecteur (18.1, 18.2, 18.3) sont associés à chaque moyen optique (2, 2.1, 2.2, 2.3, 2.4, 2.5, 2.6, 2.7, 2.8) pour l'irradiation d'une région longitudinale (lbB_A) dans les deux faces d'ouvertures d'interféromètre (A1, A2).

3. Procédé selon la revendication 1 ou 2, dans lequel la source de rayonnement multispectrale (1.1, 1.2, 1.4, 1.5) comprend :
- au moins une source multispectrale ou quasi multispectrale de rayonnement électromagnétique (1.1, 1.2, 1.4, 1.5) également sous forme de réseau, à chaque fois désignée dans la suite par source de rayonnement, pour l'irradiation d'un objet (17.1, 17.2, 17.3) qui est disposé à la sortie de l'interféromètre à deux ondes ; et/ou
- au moins une source multispectrale ou quasi multispectrale de rayonnement électromagnétique, également sous forme de réseau, à chaque fois désignée dans la suite par source de rayonnement, pour l'irradiation d'un objet qui est disposé à l'entrée de l'interféromètre à deux ondes ; et/ou
- un objet (1.4) émettant lui-même du rayonnement électromagnétique ou objet irradié, également sous forme de réseau, qui est disposé à l'entrée de l'interféromètre à deux ondes, à chaque fois également désigné dans la suite par source de rayonnement ; et/ou
- une image intermédiaire d'une source multispectrale ou quasi multispectrale de rayonnement électromagnétique ou d'un objet émettant du rayonnement électromagnétique ou d'un objet irradié, également sous forme de réseau, à chaque fois également désignée dans la suite par source de rayonnement.

4. Procédé selon une des revendications précédentes, dans lequel avec les faisceaux de rayonnement partiel interférant et quittant l'interféromètre à deux ondes dans le plan focal F'_8 de l'objectif de focalisation (8) disposé en aval de l'interféromètre à deux ondes, où des interférences de même inclinaison se forment, ou un plan conjugué optiquement à ce plan focal F'_8,
- soit une irradiation de l'objet (17.1, 17.2, 17.3) n'irradiant lui-même pas de manière électromagnétique est effectuée et le rayonnement sortant ce faisant de l'objet (17.1, 17.2, 17.3) en réflexion, dispersion et/ou transmission avec représentation d'objet au moyen d'au moins un agencement optique (14, 15, 16) disposé en aval de l'objet (17) est détectée sur le récepteur tramé (18.1, 18.2, 18.3) ;
- soit dans le cas de l'objet (1.4) émettant lui-même du rayonnement électromagnétique ou irradié, une irradiation du récepteur tramé (18.1, 18.2, 18.3) est effectuée dans le but de la détection du rayonnement et l'objet (1.4) émettant lui-même du rayonnement électromagnétique ou irradié est disposé ce faisant à l'entrée de l'interféromètre à deux ondes et est disposé en amont des moyens optiques pour une représentation optique à un ou plusieurs niveaux ou une image ou image intermédiaire de l'objet (1.4) émettant lui-même du rayonnement électromagnétique ou irradié est disposée en amont des moyens optiques (2, 2.1, 2.2, 2.3, 2.4, 2.5, 2.6, 2.7, 2.8) pour une représentation optique à un ou plusieurs niveaux.

5. Procédé selon une des revendications précédentes,
dans lequel l'irradiation d'au moins une région longitudinale (lbB_A) avec les moyens optiques (2, 2.1, 2.2, 2.3, 2.4, 2.5, 2.6, 2.7, 2.8) est effectuée au moins approximativement dans le plan de coupe V-M et dans des plans parallèles au plan de coupe V-M avec des faisceaux de lignes convergents SB_V-M ; et/ou dans lequel une irradiation d'au moins une région longitudinale (lbB_A) est effectuée avec les moyens optiques (2, 2.1, 2.2, 2.3, 2.4, 2.5, 2.6, 2.7, 2.8) dans les deux faces d'ouverture d'interféromètre (A1, A2) avec formation de faisceau de rayons astigmate, afocale, télécentrique et/ou anamorphotique ; et/ou dans lequel des moyens (12.1) dégradant la lumière ou réfléchissant la lumière ou absorbant la lumière pour la structuration latérale du rayonnement électromagnétique dans le plan d'image intermédiaire ZBE_v disposé en aval sont en outre encore associés aux moyens optiques (2, 2.1, 2.2, 2.3, 2.4, 2.5, 2.6, 2.7, 2.8) pour l'irradiation d'au moins une région longitudinale (lbB_A).

6. Procédé selon une des revendications précédentes, dans lequel pour l'irradiation d'une région longitudinale (lbB_A) dans les deux faces d'ouverture d'interféromètre (A1, A2) avec les moyens optiques (2, 2.1, 2.2, 2.3, 2.4, 2.5, 2.6, 2.7, 2.8),
des points au moins approximativement focalisés sont formés par des points de la source de rayonnement (1.1, 1.2) avec des faisceaux de lignes convergents SB_V-M au moins approximativement dans le plan de coupe V-M et au moins approximativement dans des plans parallèles au plan de coupe V-M ; et/ou au moins approximativement des faisceaux de lignes SB_H-S sont générés au moins approximativement dans un plan de coupe H-S et dans des plans parallèles au plan de coupe H-S qui sont focalisés de manière plus faible que les points de focalisation appartenant au même point (P) de la source de rayonnement (1.1, 1.2) du faisceau de lignes SB_V-M dans le plan de coupe V-M, dans lequel le plan de coupe H-S est orienté perpendiculairement au plan de coupe V-M et contient le rayon lourd (SST) du faisceau de rayons de l'interféromètre.

7. Procédé selon une des revendications précédentes, dans lequel des faisceaux de lignes SB_H-S sont réalisés avec les moyens optiques (2, 2.1, 2.2, 2.3, 2.4, 2.5, 2.6, 2.7, 2.8) dans un plan de coupe H-S, lesquels ont chacun leur point de départ dans l'espace d'objet dans un point (P) à chaque fois de la source de rayonnement (1.1, 1.2, 1.4, 1.5), dans l'interféromètre à deux ondes en tant que faisceaux de lignes au moins approximativement collimatés avec une convergence dans l'infini, dans lequel le plan de coupe H-S est orienté perpendiculairement au plan de coupe V-M et contient le rayon lourd (SST) du faisceau de rayons de l'interféromètre.

8. Procédé selon une des revendications précédentes, notamment également pour l'analyse de sources de rayonnement et de substances d'imagerie de tous les états d'agrégat ainsi que le diagnostic de tissus tumoraux,
dans lequel les réflecteurs terminaux sont réalisés sous la forme d'un réflecteur à arête de toit à 90° (5.1, 5.2) chacun dans chaque réflecteur terminal ou sous la forme d'un réflecteur à oeil de chat cylindrique chacun dans un agencement de miroir cylindrique simple ou miroir cylindrique double selon l'effet Schwarzschild ; et/ou
dans lequel les deux réflecteurs terminaux sont réalisés de manière rotative prédéfinie ensemble par moteur en combinaison en tant que module à réflecteur terminal double pour la génération de la différence de chemin optique x_g, et dans lequel le module à réflecteur terminal double (27.2) se compose de la combinaison de miroir à arête de toit à 90° avec une arête de toit couchée et avec deux miroirs plans opposés aux extrémités de l'arête de toit et disposés parallèlement l'un à l'autre, dans lequel les perpendiculaires des faces de miroir plan sont à chaque fois parallèles à l'arête de toit couchée de sorte que deux coins d'espace sont formés avec celles-ci.

9. Agencement de spectroscopie à transformée de Fourier comprenant :
- un interféromètre à deux ondes pour générer et détecter au moins un interférogramme ; et
- un ordinateur d'évaluation (19) pour calculer la transformée de Fourier de l'au moins un interférogramme l_x_g détecté par la biais d'une différence de chemin optique x_g de l'interféromètre à deux ondes pour obtenir un spectre à partir de celui-ci,
dans lequel l'interféromètre à deux ondes présente les composants suivants :
- une source de rayonnement multispectrale (1.1, 1.2, 1.4, 1.5),
- des moyens optiques (2, 2.1, 2.2, 2.3, 2.4, 2.5, 2.6, 2.7, 2.8) disposés en aval de la source de rayonnement (1.1, 1.2, 1.4, 1.5) pour la formation de faisceau d'un rayonnement électromagnétique partant de la source de rayonnement ;
- au moins un système diviseur de rayons (3) pour la division d'amplitude du rayonnement électromagnétique,
- à chaque fois un réflecteur terminal dans chacun des deux bras d'interféromètre avec à chaque fois une face d'ouverture d'interféromètre (A1, A2), dans lequel au moins un réflecteur terminal (5.1, 5.2) est réalisé de manière mobile par moteur pour la génération de la différence de chemin optique x_g, dans lequel
- - les réflecteurs terminaux sont réalisés avec une propriété de rétroréflexion partielle à chaque fois de telle sorte qu'ils sont à chaque fois rétroréfléchissants dans un plan et présentent l'action de réflexion d'un miroir plan dans un plan perpendiculaire à celui-ci, moyennant quoi chaque réflecteur terminal présente un axe y_tilt-invar au moins approximativement dans sa face d'ouverture et au moins approximativement perpendiculaire au rayon lourd du faisceau de rayons de telle sorte que l'action rétroréfléchissante supprime au moins approximativement l'influence d'un basculement autour de l'axe y_tilt-invar sur l'apparition d'interférence à la sortie de l'interféromètre ; ou
- - les réflecteurs terminaux sont réalisés sous la forme de miroir plan et pour chaque réflecteur terminal, un organe coulissant maintenant ce réflecteur terminal est à chaque fois disposé sur un système de guidage de précision à chaque fois avec un axe y_very-small-tilt de celui-ci, dans lequel l'axe y_very-small-tilt est perpendiculaire au sens de coulissement du système de guidage de précision et dans lequel des basculements du système de guidage de précision autour de l'axe y_very-small-tilt sont plus faibles qu'autour d'un axe transversal x_small-tilt perpendiculaire à l'axe y_very-small-tilt ;
- au moins un objectif de focalisation à la sortie de l'interféromètre à deux ondes avec son plan focal F'_8 disposé en aval dans le sens de rayon ;
- au moins un récepteur tramé (18.1, 18.2, 18.3) de rayonnement électromagnétique qui est conçu pour une lecture multiple sur la durée t en vue de la détection en série temporelle de rayonnement électromagnétique interférent par l'objet,
- un système de mesure pour la détermination de la différence de chemin optique actuelle x_g de l'interféromètre à deux ondes sur la durée t lors du mouvement d'au moins un des réflecteurs terminaux,
dans lequel un plan de coupe V-M existe dans l'interféromètre à deux ondes, lequel est parallèle à l'axe y_tilt-invar ou à l'axe y_very-smaill-tilt et contient le rayon lourd (SST) du faisceau de rayons de l'interféromètre, et
dans lequel les moyens optiques (2, 2.1, 2.2, 2.3, 2.4, 2.5, 2.6, 2.7, 2.8) sont conçus pour la formation de faisceau en vue de l'irradiation d'au moins une région longitudinale (lbB_A) dont le rapport de l'extension longitudinale sur l'extension transversale se monte à au moins 1,2, dans les deux faces d'ouverture d'interféromètre (A1, A2) avec une extension longitudinale de la région longitudinale irradiée (lbB_A) essentiellement perpendiculaire au plan de coupe V-M.

10. Agencement selon la revendication 9,
dans lequel l'interféromètre à deux ondes est conçu pour générer et pour détecter simultanément une pluralité d'interférogrammes ; et/ou dans lequel l'interféromètre à deux ondes est réalisé en tant que tour d'interféromètre avec une pluralité de cellules d'interféromètre disposées le long d'un axe de hauteur de tour, dans lequel au moins un objectif de focalisation (8) et au moins un détecteur (18.1, 18.2, 18.3) sont associés à chaque moyen optique (2, 2.1, 2.2, 2.3, 2.4, 2.5, 2.6, 2.7, 2.8) pour l'irradiation d'une région longitudinale (lbB_A) dans les deux faces d'ouvertures d'interféromètre (A1, A2).

11. Agencement selon une des revendications 9 ou 10,
dans lequel la source de rayonnement est réalisée sous forme longitudinale, dont le rapport de l'extension longitudinale sur l'extension transversale se monte à au moins 1,2, dans lequel la source de rayonnement (1.1, 1.2, 1.4, 1.5) est disposée de sorte que son axe longitudinal est au moins approximativement perpendiculaire au plan de coupe V-M ; et/ou
dans lequel un réseau unidimensionnel ou bidimensionnel de sources de rayonnement linéaires miniaturisées (1.5), dont le rapport de l'extension longitudinale sur l'extension transversale se monte à au moins 1,2, est disposé avec des moyens optiques associés à chaque fois à chaque source de rayonnement pour l'irradiation d'une région longitudinale (lbB_A) dans les deux faces d'ouverture d'interféromètre (A1, A2), à chaque fois également sous forme d'un réseau unidimensionnel ou bidimensionnel pour l'irradiation d'une pluralité de régions longitudinales, toutefois au moins deux, dans les deux faces d'ouverture d'interféromètre (A1, A2).

12. Agencement selon une des revendications 9 et 11,
dans lequel les moyens optiques (2, 2.1, 2.2, 2.3, 2.4, 2.5, 2.6, 2.7, 2.8) sont réalisés pour l'irradiation d'une région longitudinale (lbB_A) dans les deux faces d'ouverture d'interféromètre (A1, A2) en formant un faisceau de rayons au moins approximativement de manière astigmate, stigmatique, anastigmatique ou anamorphotique ; et/ou
dans lequel les moyens optiques (2, 2.1, 2.2, 2.3, 2.4, 2.5, 2.6, 2.7, 2.8) sont réalisés pour l'irradiation d'une région longitudinale (lbB_A) dans les deux faces d'ouverture d'interféromètre (A1, A2) en tant que système afocal ; et/ou dans lequel les moyens optiques (2, 2.1, 2.2, 2.3, 2.4, 2.5, 2.6, 2.7, 2.8) sont réalisés pour l'irradiation d'une région longitudinale (lbB_A) dans les deux faces d'ouverture d'interféromètre (A1, A2) avec une force réfractive positive plus forte dans le plan de coupe V-M par rapport à un plan de coupe H-S, dans lequel le plan de coupe H-S est orienté perpendiculairement au plan de coupe V-M et contient le rayon lourd (SST) du faisceau de rayons de l'interféromètre.

13. Agencement selon une des revendications 9 à 12,
dans lequel l'angle de rayon de bord alpha_V-M du faisceau de lignes SB_V-M est rendu de manière approximativement égale à la moitié de l'angle de champ w de la source de rayonnement (1.1, 1.2, 1.4, 1.5) ; et/ou dans lequel des optiques d'irradiation et/ou de focalisation sont réalisées à la sortie de l'interféromètre sous la forme de réseaux optiques unidimensionnels (2.4, 2.7, 2.8) ou sous la forme de réseaux optiques bidimensionnels.

14. Agencement selon une des revendications 9 à 13,
dans lequel les faces d'ouverture (A1, A2) des réflecteurs terminaux représentent au moins dans un des deux plans de coupe V-M ou H-S au moins approximativement l'ouverture limitant des faisceaux de rayons du système global optique, dans lequel le plan de coupe H-S est orienté perpendiculairement au plan de coupe V-M et contient le rayon lourd (SST) du faisceau de rayons de l'interféromètre ; et/ou
dans lequel les réflecteurs terminaux (5.1, 5.2) présentent sous forme hybride avec à chaque fois une propriété de rétroréflexion partielle une hauteur utilisée optiquement h_hybrid dans le plan de coupe V-M de 70 % maximum de l'extension latérale utilisée optiquement des réflecteurs terminaux (5.1, 5.2) sous forme hybride dans un plan de coupe H-S, dans lequel le plan de coupe H-S est orienté perpendiculairement au plan de coupe V-M et contient le rayon lourd (SST) du faisceau de rayons de l'interféromètre ; et/ou dans lequel les réflecteurs terminaux (5.1, 5.2) présentent sous forme hybride une hauteur utilisée optiquement h_hybrid dans le plan de coupe V-M d'au moins 100 % de l'extension latérale utilisée optiquement des réflecteurs terminaux (5.1, 5.2) sous forme hybride dans un plan de coupe H-S, dans lequel le plan de coupe H-S est orienté perpendiculairement au plan de coupe V-M et contient le rayon lourd (SST) du faisceau de rayons de l'interféromètre.

15. Agencement selon une des revendications 9 à 14,
dans lequel les moyens optiques sont réalisés pour l'irradiation d'une région longitudinale (11B_A) dans les deux faces d'ouverture d'interféromètre (A1, A2) en tant que combinaison à chaque fois d'un miroir ellipsoïdal excentré et à chaque fois d'un miroir torique excentré (2.3) ou en tant que combinaison à chaque fois d'un miroir ellipsoïdal excentré et à chaque fois d'un miroir torique excentré (2.4) dans un réseau ; ou
dans lequel les moyens optiques (2, 2.1, 2.2, 2.3, 2.4, 2.5, 2.6, 2.7) sont réalisés pour l'irradiation d'une région longitudinale (lbB) dans les deux faces d'ouverture d'interféromètre (A1, A2) en tant que combinaison d'un miroir parabolique excentré (2.5) et d'un réseau de miroirs cylindriques (2.8) avec plusieurs ou une pluralité de miroirs cylindriques.

16. Agencement selon une des revendications 9 à 15,
dans lequel les réflecteurs à arête de toit (5.1, 5.2) sont fabriqués à partir de plastique renforcé par des fibres de carbone (CFK) optiquement blanc avec revêtement d'or des surfaces optiquement actives ; et/ou dans lequel les deux réflecteurs à arête de toit (5.1, 5.2) sont réalisés longitudinalement dans leur extension en hauteur par rapport à leur extension latérale maximale et une pluralité, toutefois au moins deux, de régions longitudinales irradiés (lbB) dans les deux faces d'ouverture d'interféromètre (A1, A2) est ainsi disposée de manière superposée.
